(19) Europäisches Patentamt
European Patent Office
Office européen des brevets

(11) **EP 3 800 547 A1**

(12) **EUROPEAN PATENT APPLICATION**
published in accordance with Art. 153(4) EPC

(43) Date of publication:
**07.04.2021 Bulletin 2021/14**

(21) Application number: **20783678.4**

(22) Date of filing: **01.04.2020**

(51) Int Cl.:
***G06F 9/30*** *(2018.01)*

(86) International application number:
**PCT/CN2020/082775**

(87) International publication number:
**WO 2020/200244 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 04.04.2019 CN 201910272411
04.04.2019 CN 201910272625
04.04.2019 CN 201910272660
19.04.2019 CN 201910320091
19.04.2019 CN 201910319165
25.04.2019 CN 201910340177
25.04.2019 CN 201910341003

(60) Divisional application:
**20217328.2**
**20217329.0**
**20217330.8**
**20217331.6**
**20217332.4**
**20217333.2**

(71) Applicant: **Cambricon Technologies Corporation Limited**
**Beijing 100191 (CN)**

(72) Inventors:
• **LIU, Shaoli**
**Beijing 100191 (CN)**
• **WANG, Bingrui**
**Beijing 100191 (CN)**
• **ZHOU, Xiaoyong**
**Beijing 100191 (CN)**
• **ZHUANG, Yimin**
**Beijing 100191 (CN)**
• **LAN, Huiying**
**Beijing 100191 (CN)**
• **LIANG, Jun**
**Beijing 100191 (CN)**
• **LI, Zhen**
**Beijing 100191 (CN)**
• **WU, Jianhua**
**Beijing 100191 (CN)**
• **HAO, Yongzheng**
**Beijing 100191 (CN)**

(74) Representative: **Huang, Liwei**
**Cäcilienstraße 12**
**40597 Düsseldorf (DE)**

(54) **DATA PROCESSING METHOD AND APPARATUS, AND RELATED PRODUCT**

(57) A data processing method and apparatus and a related product. The method comprises: when an operand of a decoded first processing instruction comprises an identifier of a descriptor, acquiring, according to the identifier of the descriptor, the content of the descriptor (S11a); and executing, according to the content of the descriptor, the first processing instruction (SI2a). By means of the method, the operation efficiency, when an operation of a neural network model is performed, of a related product can be improved.

EP 3 800 547 A1

S11a

when an operand of a decoded first processing instruction includes an identifier of a descriptor, obtaining content of the descriptor according to the identifier of the descriptor

S12a

executing the first processing instruction according to the content of the descriptor

Fig. 1a

**Description**

**Technical Field**

The disclosure relates generally to the field of computer technologies, and more specifically to a data processing method and an apparatus and related products.

**Background**

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.)* when designing parameters, so as to generate instructions and transmit the instructions to the processors to complete the data access. The above-mentioned method reduces the processing efficiency of the processors.

**Summary**

In order to solve the technical problems, the present disclosure provides a data processing technical solution.
A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.
A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.
A third aspect of the present disclosure provides a neural network chip including the data processing apparatus.
A fourth aspect of the present disclosure provides an electronic device including the neural network chip.
A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.
According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.
In order to make other features and aspects of the present disclosure clearer, a detailed description of exemplary embodiments with reference to the drawings is provided below.

**Brief Description of the Drawings**

The accompanying drawings contained in and forming part of the specification together with the specification show exemplary embodiments, features and aspects of the present disclosure and are used to explain the principles of the disclosure.

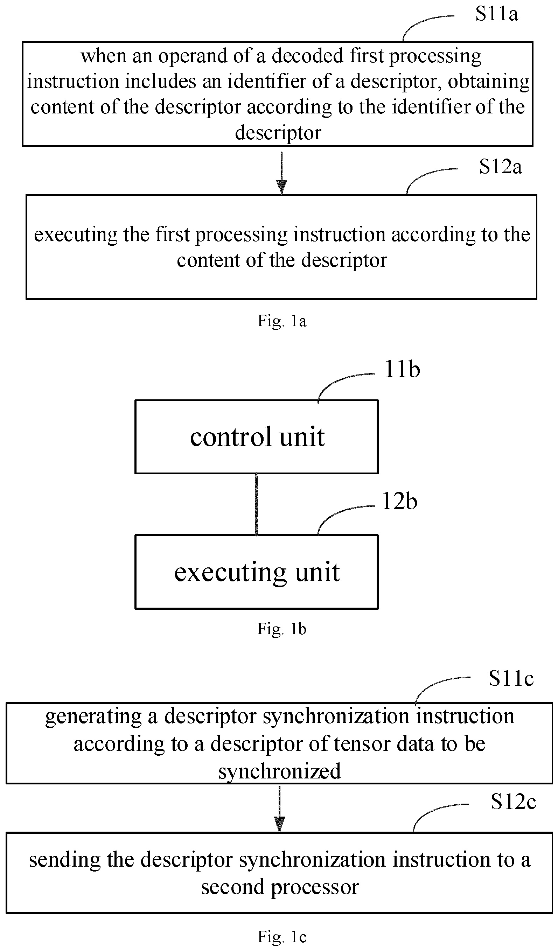

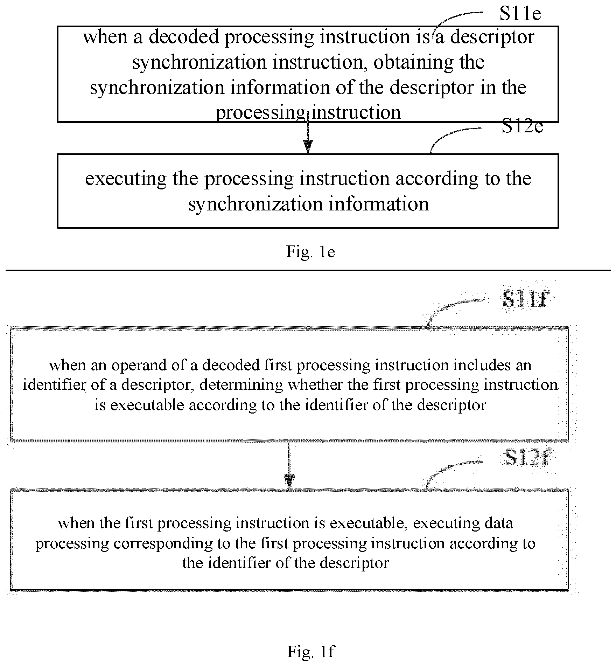

Fig. 1a shows a flowchart of a data processing method according to an embodiment of the present disclosure.
Fig. 1b shows a block diagram of a data processing apparatus according to an embodiment of the present disclosure.
Fig. 1c shows a flowchart of a data synchronization method according to an embodiment of the present disclosure.

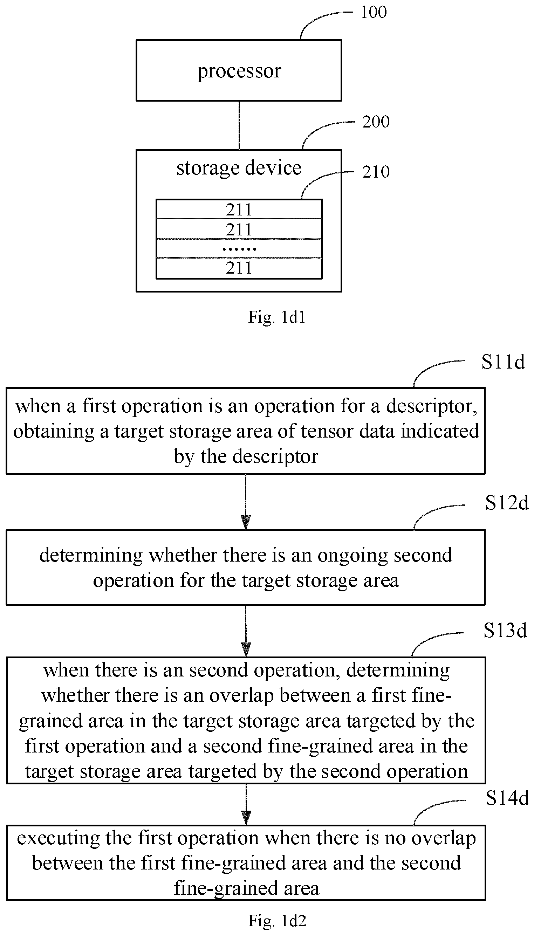

Fig. 1d1 shows a schematic diagram of an application scenario according to an embodiment of the present disclosure.
Fig. 1d2 shows a flowchart of an operation method of a processor according to an embodiment of the present disclosure.
Fig. Ie shows a flowchart of a data synchronization method according to an embodiment of the present disclosure.
Fig. If shows a flowchart of a data processing method according to an embodiment of the present disclosure.

Fig. 1g shows a flowchart of an operation method of a processor according to an embodiment of the present disclosure.

Fig. 2 shows a schematic diagram of a data storage space according to an embodiment of the present disclosure.

Fig. 3a shows a block diagram of a data processing apparatus according to an embodiment of the present disclosure.

Fig. 3b shows a flowchart of a data processing method according to an embodiment of the present disclosure.

Fig. 3c1 shows a flowchart of a data synchronization method according to an embodiment of the present disclosure.

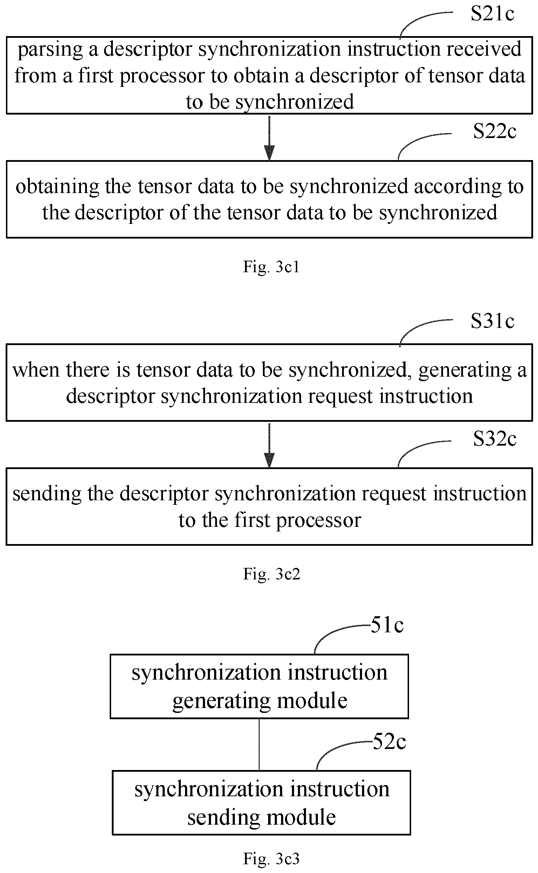

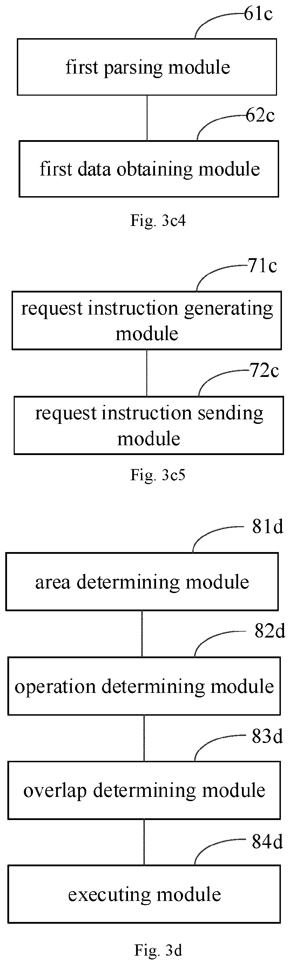

Fig. 3c2 shows a flowchart of a data synchronization method according to an embodiment of the present disclosure.

Fig. 3c3 shows a block diagram of a data synchronization apparatus according to an embodiment of the present disclosure.

Fig. 3c4 shows a block diagram of a data synchronization apparatus according to an embodiment of the present disclosure.

Fig. 3c5 shows a block diagram of a data synchronization apparatus according to an embodiment of the present disclosure.

Fig. 3d shows a block diagram of an operation apparatus of a processor according to an embodiment of the present disclosure.

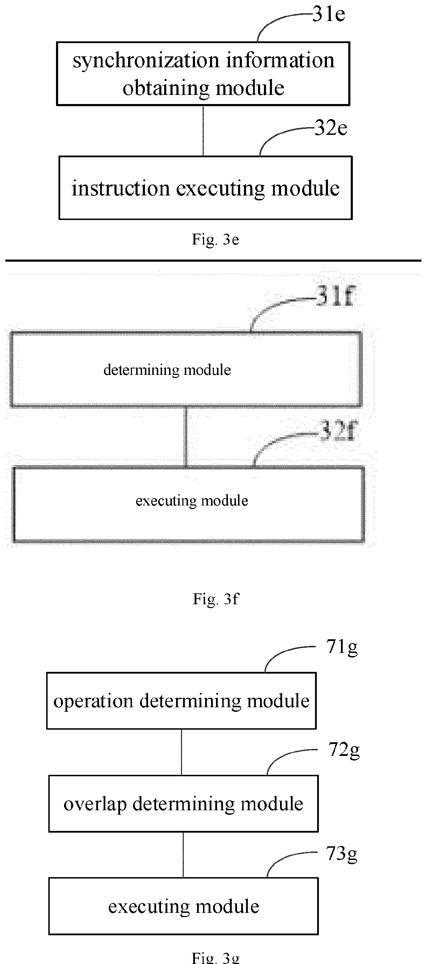

Fig. 3e shows a block diagram of a data synchronization apparatus according to an embodiment of the present disclosure.

Fig. 3f shows a block diagram of a data processing apparatus according to an embodiment of the present disclosure.

Fig. 3g shows a block diagram of an operation apparatus of a processor according to an embodiment of the present disclosure.

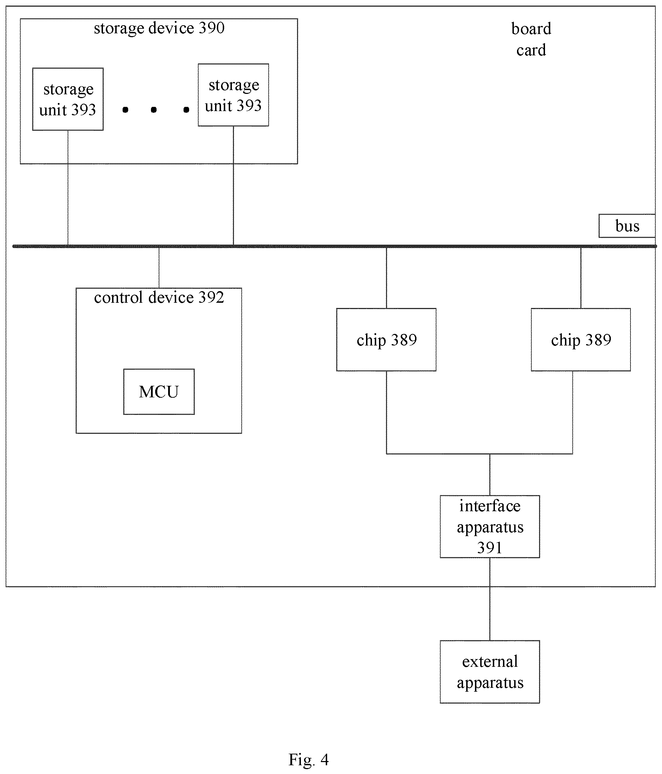

Fig. 4 shows a block diagram of a board card according to an embodiment of the present disclosure.

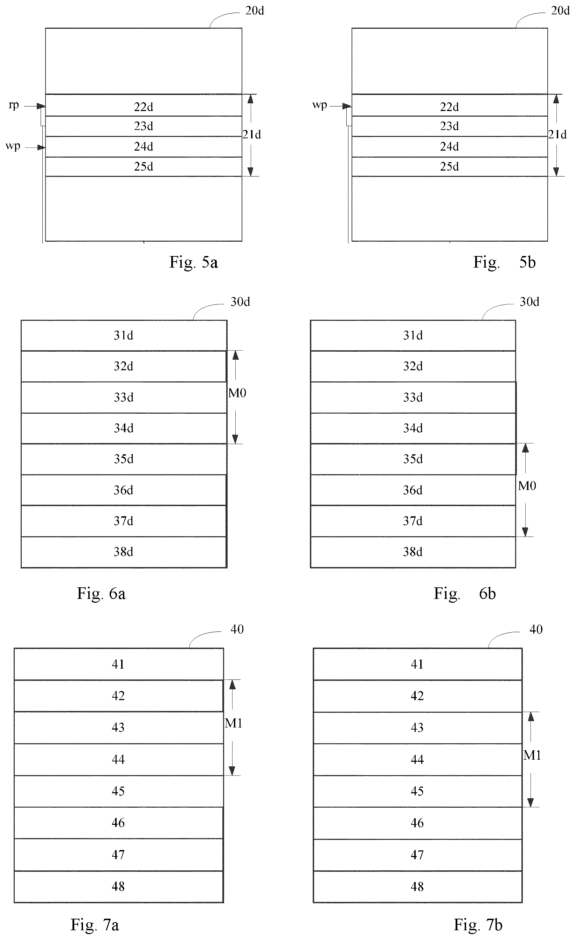

Fig. 5a and Fig. 5b show schematic diagrams of application scenarios of an operation method of a processor according to an embodiment of the present disclosure.

Fig. 6a and Fig. 6b show schematic diagrams of application scenarios of an operation method of a processor according to an embodiment of the present disclosure.

Fig. 7a and Fig. 7b show schematic diagrams of application scenarios of an operation method of a processor according to an embodiment of the present disclosure.

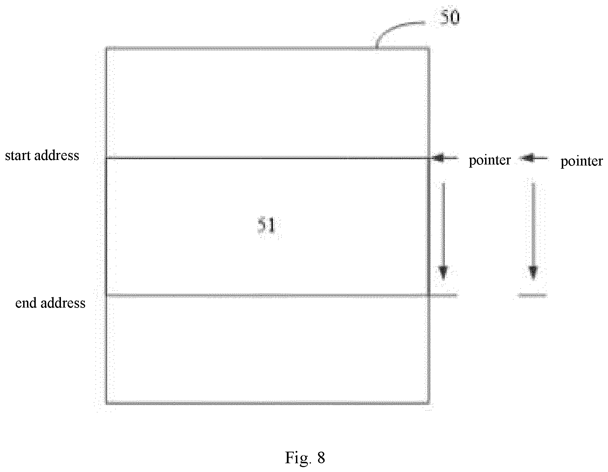

Fig. 8 shows a schematic diagram of a circular buffer and storage area of an operation method of a processor according to an embodiment of the present disclosure.

## Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

An embodiment of the present disclosure provides a data processing method. Fig. 1a shows a flowchart of a data processing method according to an embodiment of the present disclosure. As shown in Fig. 1a, the data processing method includes:

a step S11a: when an operand of a decoded first processing instruction includes an identifier of a descriptor, obtaining content of the descriptor according to the identifier of the descriptor, where the descriptor is configured to indicate a shape of a tensor; and

a step S12a: executing the first processing instruction according to the content of the descriptor.

According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.

For example, the data processing method can be applied to a processor, where the processor may include a general-purpose processor (such as a CPU (central processing unit), a GPU (graphics processor)) and a dedicated processor (such as an AI processor, a scientific computing processor, or a digital signal processor, *etc.*). This disclosure does not limit the type of the processor.

In a possible implementation method, data to be processed may include N-dimensional tensor data (N is an integer greater than or equal to 0, for example, N=1, 2, or 3), where the tensor may have various forms of data composition, and the tensor may have different dimensions, for example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship between a plurality of pieces of tensor data cannot be determined. As a result, the processor is inefficient in accessing tensor data.

In this case, a descriptor (tensor descriptor) may be introduced to indicate the shape of the tensor (N-dimensional tensor data), where the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.*) of the 3-dimensional tensor data in three dimensions. It should be understood that those skilled in the art can set the value of N according to actual needs, which is not limited in the present disclosure.

In a possible implementation method, the descriptor may include an identifier and content, and the identifier of the descriptor may be used to distinguish the descriptor, for example, the identifier may be used to number the descriptor and the content of the descriptor may include at least one shape parameter (such as a size of each dimension of the tensor, *etc.)* representing the shape of the tensor data, and may also include at least one address parameter (such as a base address of a datum point) representing an address of the tensor data. The present disclosure does not limit the specific parameters included in the content of the descriptor.

By using the descriptor to indicate the tensor data, the shape of the tensor data can be represented, and related information such as the relationship among a plurality of pieces of tensor data can be determined, so as to improve the access efficiency of tensor data.

In a possible implementation method, when a processing instruction is received, the processing instruction can be decoded first. The data processing method further includes: decoding the received first processing instruction to obtain a decoded first processing instruction. The decoded first processing instruction includes an operation code and one or more operands, where the operation code is used to indicate a processing type corresponding to the first processing instruction.

In this case, after the first processing instruction is decoded, the decoded first processing instruction (microinstruction) can be obtained. The first processing instruction may include a data access instruction, an operation instruction, a descriptor management instruction, a synchronization instruction, and/or the like. The present disclosure does not limit the specific type of the first processing instruction and the specific manner of decoding.

The decoded first processing instruction includes an operation code and one or more operands, where the operation code is used to indicate a processing type corresponding to the first processing instruction, and the operand is used to indicate data to be processed. For example, the instruction can be represented as: Add; A; B, where Add is an operation code, A and B are operands, and the instruction is used to add A and B. The present disclosure does not limit a count of operands of the decoded instruction and a representation form of the instruction.

In a possible implementation method, if the operand of the decoded first processing instruction includes the identifier of the descriptor, a descriptor storage space corresponding to the descriptor can be determined according to the identifier of the descriptor; and the content (including information indicating the shape, the address, *etc.*, of tensor data) of the descriptor can be obtained from the descriptor storage space; and then the first processing instruction can be executed according to the content of the descriptor.

In a possible implementation method, the step S12a may include:

determining a data address of the data corresponding to the operand of the first processing instruction in a data storage space according to the content of the descriptor; and
executing data processing corresponding to the first processing instruction according to the data address.

For example, according to the content of the descriptor, the data address of the data corresponding to the operand of the identifier of the descriptor in the first processing instruction in the data storage space may be computed, and then a corresponding processing can be executed according to the data address. For example, for the instruction Add; A; B, if operands A and B include an identifier TR1 and an identifier TR2 of the descriptor, respectively, the processor may determine descriptor storage spaces corresponding to TR1 and TR2 according to the identifier TR1 and the identifier TR2 of the descriptor, respectively, and the processor may read the content (such as a shape parameter and an address parameter) of the descriptor storage spaces; according to the content of the descriptor, the data addresses of data A and B can be computed, for example, a data address 1 of A in a memory is ADDR64-ADDR127, and a data address 2 of B in the memory is ADDR1023-ADDR1087; and then, the processor can read data from the address 1 and the address 2 respectively, execute an addition (Add) operation, and obtain an operation result (A + B).

In a possible implementation method, the method according to the embodiment of the present disclosure may be implemented by a hardware structure of related art. In this case, the processor to which the method is applied may include a control unit and an execution unit. The control unit is used for control, for example, the control unit may read an instruction of a memory or an externally input instruction, decode the instruction, and send a micro-operation control signal to corresponding components. The execution unit is configured to execute a specific instruction, where the execution unit may be, for example, an ALU (arithmetic and logic unit), an MAU (memory access unit), an NFU (neural functional unit), *etc.* The present disclosure does not limit the specific hardware type of the execution unit.

In a possible implementation method, the instruction can be decoded by the control unit to obtain the decoded first processing instruction. If the operand of the decoded first processing instruction includes the identifier of the descriptor, the control unit may determine the descriptor storage space corresponding to the descriptor and obtain the content (shape, address, *etc.*) of the descriptor from the descriptor storage space; and then, the control unit may send the content of the descriptor and the first processing instruction to the execution unit, so that the execution unit can execute the first processing instruction according to the content of the descriptor. When the content of the descriptor and the first processing instruction is received by the execution unit, the execution unit may compute the data address in the data storage space of the data corresponding to the operand of the identifier of the descriptor in the first processing instruction according to the content of the descriptor, so that the execution unit can execute a corresponding processing according to the data address.

For example, for the instruction Add; A; B, if operands A and B include the identifier TR1 and the identifier TR2 of the descriptor, respectively, the control unit may determine the descriptor storage spaces corresponding to TR1 and TR2 respectively, and the control unit may read the content (such as a shape parameter and an address parameter) of the descriptor storage spaces and send the content to the execution unit. After receiving the content of the descriptor, the execution unit may compute the data addresses of data A and B, for example, a data address 1 of A in a memory is ADDR64-ADDR127, and a data address 2 of B in the memory is ADDR1023-ADDR1087. And then, the execution unit can read data from address 1 and address 2 respectively, execute an addition (Add) operation, and obtain an operation result (A + B).

In a possible implementation method, the method according to the embodiments of the present disclosure can be implemented by improving the hardware structure of the related art. For example, a tensor control module can be provided in the control unit to implement operations associated with the descriptor, where the operations may include registration, modification, and release of the descriptor; reading and writing of the content of the descriptor, *etc.* The tensor control module may be, for example, a TIU (Tensor interface Unit). The present disclosure does not limit the specific hardware type of the tensor control module. In this way, the operations associated with the descriptor can be implemented by special hardware, which further improves the access efficiency of tensor data.

In this case, if the operand of the first processing instruction decoded by the control unit includes the identifier of the descriptor, the descriptor storage space corresponding to the descriptor may be determined by the tensor control module; after the descriptor storage space is determined, the content (shape, address, *etc.*) of the descriptor can be obtained from the descriptor storage space. And then, the control unit may send the content of the descriptor and the first processing instruction to the execution unit, so that the execution unit can execute the first processing instruction according to the content of the descriptor.

In a possible implementation method, the tensor control module can implement operations associated with the descriptor and the execution of instructions, where the operations may include registration, modification, and release of the descriptor, reading and writing of the content of the descriptor, computation of the data address, and execution of the data access instruction, *etc.* In this case, if the operand of the first processing instruction decoded by the control unit includes the identifier of the descriptor, the descriptor storage space corresponding to the descriptor may be determined by the tensor control module; after the descriptor storage space is determined, the content of the descriptor can be obtained from the descriptor storage space; according to the content of the descriptor, the data address in the data storage space corresponding to the operand of the first processing instruction is determined by the tensor control module; and according to the data address, the data processing corresponding to the first processing instruction is executed by the tensor control module.

The present disclosure does not limit the specific hardware structure adopted for implementing the method provided by the embodiments of the present disclosure.

By adopting the above-mentioned method provided by the present disclosure, the content of the descriptor can be obtained from the descriptor storage space, and then the data address can be obtained. In this way, it is not necessary to input the address through an instruction during each data access, thus improving the data access efficiency of the processor.

In a possible implementation method, the identifier and content of the descriptor can be stored in the descriptor storage space, where the descriptor storage space can be a storage space in an internal memory (such as a register, an on-chip SRAM, or other medium cache, *etc.*) of the control unit. The data storage space of the tensor data indicated by the descriptor may be a storage space in the internal memory (such as an on-chip cache) of the control unit or a storage space in an external memory (an off-chip memory) connected to the control unit. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area, for example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address unit used to represent an address. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register can be used as the descriptor storage space to store the identifier and content of the descriptor, and an on-chip cache can be used as the data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of the register is 0, the identifier of a descriptor stored in the register is 0. When the descriptor in the register is valid, an area can be allocated in a caching space (such as creating a tensor cache unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be divided for the tensor data, and a start address of each tensor data in the data storage space corresponds to the identifier of the descriptor. In this case, the execution unit can determine the data address of the data corresponding to the operand according to the content of the descriptor, and then execute the first processing instruction.

In a possible implementation method, when the data address of the data storage space corresponding to the identifier of the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is other data than the first data block in the data storage space, the base address of the descriptor is the physical address of the data block in the data storage space.

In a possible implementation method, the shape parameter of the tensor data includes at least one of the followings: a size of the data storage space of the tensor data in at least one of the N dimensions, a size of the storage area in at least one of the N dimensions, an offset of the storage area in at least one of the N dimensions, a position of at least two vertices at diagonal positions in the N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is 3-dimensional data, the descriptor can use a coordinate (x, y, z) to represent the shape of the tensor data, and the data description position of the tensor data can be represented by the coordinate (x, y , z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

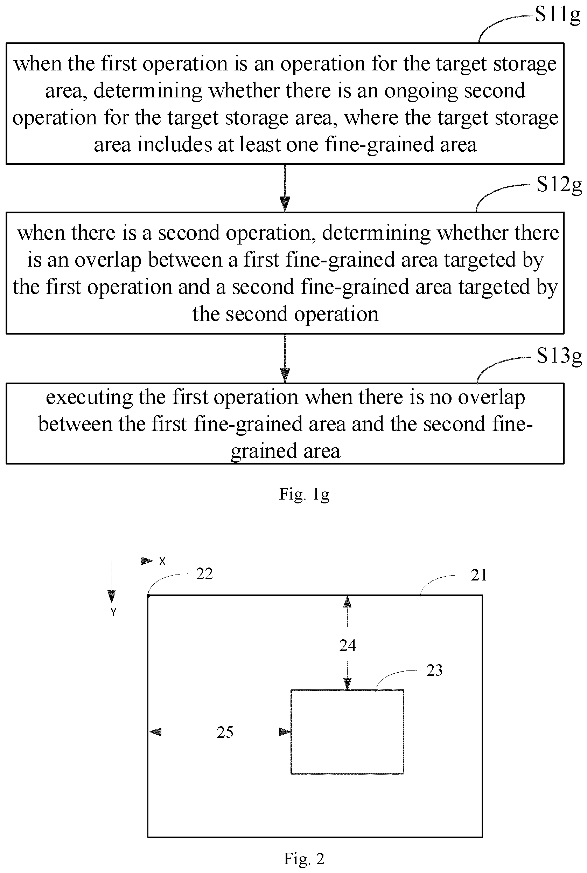

Fig. 2 shows a schematic diagram of a data storage space according to an embodiment of the present disclosure. As shown in Fig. 2, a data storage space 21 stores a 2-dimensional data in a row-first manner, where the data storage space 21 can be represented by (x, y) (where the X axis extends horizontally to the right, and the Y axis extends vertically down), a size in the X axis direction (a size of each row) is ori_x (which is not shown in the figure), a size in the Y axis direction (a total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the X axis direction is represented as offset x, an offset 24 of the data block 23 in the Y axis direction is represented as offset_y, the size in the X axis direction is represented as size_x, and the size in the Y axis direction is represented as size_y.

In a possible implementation method, when the descriptor is used to define the data block 23, the datum point of the descriptor may be a first data block of the data storage space 21, the base address of the descriptor is the start address PA_start of the data storage space 21, and then the content of the descriptor of the data block 23 may be determined according to the size ori x of the data storage space 21 in the X axis, the size ori_y of the data storage space 21 in the Y axis, the offset offset_y of the data block 23 in the Y axis direction, the offset offset_x of the data block 23 in the X axis direction, the size size x of the data block 23 in the X axis direction, and the size size_y of the data block 23 in the Y axis direction.

In a possible implementation method, the following formula (1) may be used to represent the content of the descriptor:

$$
\begin{cases}
X \ \text{direction:} \ \ ori\_x, offset\_x, size\_x \\
Y \ \text{direction:} \ \ ori\_y, offset\_y, size\_y \\
\qquad\qquad PA\_start
\end{cases}
\qquad (1)
$$

It should be understood that although the descriptor describes a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 2 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (for example, a piece of data at position (2, 2)) in the data storage space 21 is selected as a datum point, and a physical address of the selected data in the data storage space is used as the base address PA base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} \text{X direction: } x\_min, x\_max \\ \text{Y direction: } y\_min, y\_max \\ \qquad PA\_base \end{cases} \tag{2}$$

It should be understood that although the top left vertex and the bottom right vertex are used to determine the content of the descriptor in the above-mentioned example, those skilled in the art may set at least two specific vertices according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f\big(x, \ y, \ z\big) \\ \quad PA\_base \end{cases} \tag{3}$$

It should be understood that those skilled in the art can set the mapping relationship between the data description position and the data address according to actual situations, which is not limited in the present disclosure.

When the formula (1) is used to represent the content of the descriptor, for any datum point in the tensor data, the data description position is set to (x_q, y_q), and then the data address $PA2_{(x,y)}$ of the data in the data storage space can be determined using the following formula (4):

$$PA2_{(x,y)} = PA\_start + \big(\text{offset\_y} + y_q - 1\big) * \text{ori\_x} + \big(\text{offset\_x} + x_q\big) \tag{4}.$$

By adopting the above-mentioned method provided by the present disclosure, the execution unit may compute the data address of the tensor data indicated by the descriptor in the data storage space according to the content of the descriptor, and then execute processing corresponding to the processing instruction according to the address.

In a possible implementation method, the operations of the registration, modification and release of the descriptor can be achieved through management instructions of the descriptor, and corresponding operation codes are set for the management instructions. For example, a descriptor can be registered (created) through a descriptor registration instruction (TRCreat); various parameters (shape, address, *etc.*) of the descriptor can be modified through the descriptor modification instruction; and the descriptor can be released (deleted) through the descriptor release instruction (TRRelease). The present disclosure does not limit the types of the management instructions of the descriptor and the operation codes.

In a possible implementation method, the data processing method further includes:

when a first processing instruction is a descriptor registration instruction, obtaining a registration parameter of a descriptor in the first processing instruction, where the registration parameter includes at least one of followings: an identifier of the descriptor, a shape of a tensor, and content of the tensor data indicated by the descriptor;
according to the registration parameter of the descriptor, determining a first storage area of the content of the descriptor in a descriptor storage space, and a second storage area of the content of the tensor data indicated by the descriptor in a data storage space;
determining the content of the descriptor according to the registration parameter of the descriptor and the second storage area to establish a correspondence between the descriptor and the second storage area; and
storing the content of the descriptor into the first storage area.

For example, the descriptor registration instruction may be used to register a descriptor, and the instruction may include a registration parameter of the descriptor. The registration parameter may include at least one of followings: the identifier (ID) of the descriptor, the shape of the tensor, and the content of the tensor data indicated by the descriptor. For example, the registration parameter may include an identifier TR0 and the shape of the tensor (a count of dimensions, a size of each dimension, an offset, a start data address, *etc.*). The present disclosure does not limit the specific content of the registration parameter.

In a possible implementation method, when the instruction is determined to be a descriptor registration instruction according to an operation code of the decoded first processing instruction, the corresponding descriptor can be created according to the registration parameter in the first processing instruction. The corresponding descriptor can be created by a control unit or by a tensor control module, which is not limited in the present disclosure.

In a possible implementation method, the first storage area of the content of the descriptor in the descriptor storage space and the second storage area of the content of the tensor data indicated by the descriptor in the data storage space may be determined first.

For example, if at least one of the storage areas has been preset, the first storage area and/or the second storage area may be directly determined. For example, it is preset that the content of the descriptor and the content of the tensor data are stored in a same storage space, and the storage address of the content of the descriptor corresponding to the identifier TR0 of the descriptor is ADDR32-ADDR63, and the storage address of the content of the tensor data is ADDR64-ADDR1023, then the two addresses can be directly determined as the first storage area and the second storage area.

In a possible implementation method, if there is no preset storage area, the first storage area may be allocated in the descriptor storage space for the content of the descriptor, and the second storage area may be allocated in the data storage space for the content of the tensor data. The storage area may be allocated through the control unit or the tensor control module, which is not limited in the present disclosure.

In a possible implementation method, according to the shape of the tensor in the registration parameter and the data address of the second storage area, the correspondence between the shape of the tensor and the address can be established to determine the content of the descriptor, so that the corresponding data address can be determined according to the content of the descriptor during data processing. After the content of the descriptor is determined, the content of the descriptor can be stored in the first storage area to complete the registration process of the descriptor.

For example, for the tensor data 23 shown in Fig. 2, the registration parameter may include the start address PA_start (base address) of the data storage space 21, an offset 25 (offset x) in the X-axis direction, and an offset 24 (offset_y) in the Y-axis direction, the size in the X-axis direction (size x), and the size in the Y-axis direction (as size_y). Based on the parameters, the content of the descriptor can be represented as formula (1) and stored in the first storage area, thereby completing the registration process of the descriptor.

By adopting the above-mentioned method provided by the present disclosure, the descriptor can be automatically created according to the descriptor registration instruction, and the correspondence between the tensor indicated by the descriptor and the data address can be realized, so that the data address can be obtained through the content of the descriptor during data processing, and the data access efficiency of the processor can be improved.

In a possible implementation method, the data processing method further includes:

when the first processing instruction is a descriptor release instruction, obtaining the identifier of the descriptor in the first processing instruction; and
according to the identifier of the descriptor, releasing the storage area of the descriptor in the descriptor storage space and the storage area of the content of the tensor data indicated by the descriptor in the data storage space.

For example, the descriptor release instruction may be used to release (delete) the descriptor to free up the space occupied by the descriptor. The instruction may include at least the identifier of the descriptor.

In a possible implementation method, when the instruction is determined to be the descriptor release instruction according to the operation code of the decoded first processing instruction, the corresponding descriptor can be released according to the identifier of the descriptor in the first processing instruction. The corresponding descriptor can be released through the control unit or the tensor control module, which is not limited in the present disclosure.

In a possible implementation method, according to the identifier of the descriptor, the storage area of the descriptor in the descriptor storage space and/or the storage area of the content of the tensor data indicated by the descriptor in the data storage space can be freed, so that the occupation of each storage area by the descriptor is released.

By adopting the above-mentioned method provided by the present disclosure, the space occupied by the descriptor can be released after the descriptor is used the limited storage resources can be reused, and the efficiency of resource utilization is improved.

In a possible implementation method, the data processing method further includes:

when the first processing instruction is a descriptor modification instruction, obtaining a modification parameter of the descriptor in the first processing instruction, where the modification parameter includes at least one of followings: the identifier of the descriptor, the shape of the tensor to be modified, and the content of the tensor data indicated by the descriptor;

determining content to be updated of the descriptor according to the modification parameter of the descriptor; and according to the content to be updated, updating the content of the descriptor in the descriptor storage space and/or the content of the tensor data in the data storage space.

For example, the descriptor modification instruction can be used to modify various parameters of the descriptor, such as the identifier, the shape of the tensor, and the like. The descriptor modification instruction may include a modification parameter including at least one of followings: the identifier of the descriptor, the shape of the tensor to be modified, and the content of the tensor data indicated by the descriptor. The present disclosure does not limit the specific content of the modification parameter.

In a possible implementation method, when the instruction is determined as the descriptor modification instruction according to the operation code of the decoded first processing instruction, the content to be updated of the descriptor can be determined according to the modification parameter in the first processing instruction. For example, the dimension of a tensor may be changed from 3 dimensions to 2 dimensions, and the size of a tensor in one or more dimension directions may be also changed.

In a possible implementation method, after the content to be updated is determined, the content of the descriptor in the descriptor storage space and/or the content of the tensor data in the data storage space may be updated in order to modify the tensor data and enable the updated content of the descriptor to indicate the shape of the modified tensor data. The present disclosure does not limit the scope of the content to be updated and the specific updating method.

By adopting the above-mentioned method provided by the present disclosure, when the tensor data indicated by the descriptor changes, the descriptor is directly modified to maintain the correspondence between the descriptor and the tensor data, which improves the efficiency of resource utilization.

In a possible implementation method, the data processing method further includes:

according to the identifier of the descriptor, determining whether there is a second processing instruction that has not been executed completely, where the second processing instruction includes a processing instruction in the instruction queue prior to the first processing instruction and having the identifier of the descriptor in the operand; and blocking or caching the first processing instruction when there is a second processing instruction that has not been executed completely.

For example, after the descriptor is set, the dependency relationship between instructions can be determined according to the descriptor. If the operand of the decoded first processing instruction includes the identifier of the descriptor, whether there is an instruction among pre-instructions of the first processing instruction having a dependency relationship with the first processing instruction may be determined.

In this case, for instructions in the instruction queue prior to the first processing instruction, *i.e.*, pre-instructions, if an operand of a pre-instruction has the identifier of the descriptor, the pre-instruction may be regarded as a second processing instruction having a dependency relationship with the first processing instruction. In the case where the operand of the first processing instruction has identifiers of a plurality of descriptors, the dependency relationship corresponding to each descriptor can be determined respectively, in other words, a pre-instruction corresponding to the identifier of at least one of the plurality of descriptors in the operand is taken as the second processing instruction having a dependency relationship with the first processing instruction. A dependency relationship determining module may be provided in the control unit to determine the dependency relationship between processing instructions, which is not limited in the present disclosure.

In a possible implementation method, if there is a second processing instruction that has not been executed completely, the first processing instruction has to be executed after the second processing instruction is executed completely. For example, if the first processing instruction is an operation instruction for the descriptor TR0 and the second processing instruction is a writing instruction for the descriptor TR0, the second processing instruction has a dependency relationship with the first processing instruction. During the execution of the second processing instruction, the first processing instruction cannot be executed. For another example, if the second processing instruction includes a synchronization instruction (sync) for the first processing instruction, the second processing instruction has a dependency relationship with the first processing instruction, and the first processing has to be executed after the second processing instruction is executed completely.

In a possible implementation method, if there is a second processing instruction that has not been executed completely, the first processing instruction can be blocked, in other words, the execution of the first processing instruction and other instructions after the first processing instruction can be suspended until the second processing instruction is executed completely, and then the first processing instruction and other instructions after the first processing instruction can be executed.

In a possible implementation method, if there is a second processing instruction that has not been executed completely, the first processing instruction will be cached, in other words, the first processing instruction is stored in a preset caching space without affecting the execution of other instructions. After the execution of the second processing instruction is completed, the first processing instruction in the caching space is executed. The present disclosure does not limit the processing method of the first processing instruction when there is a second processing instruction that has not been executed completely.

By adopting the above-mentioned method provided by the present disclosure, a dependency relationship between instructions generated by the instruction type and a dependency relationship generated by the synchronization instruction are determined, and the first processing instruction is blocked or cached when the pre-instructions with the dependency relationship has not been executed completely, thereby ensuring the execution order of the instructions, and the correctness of data processing.

In a possible implementation method, the data processing method further includes:

determining the current state of the descriptor according to the identifier of the descriptor, where the state of the descriptor includes the operable state or the inoperable state; and
blocking or caching the first processing instruction when the descriptor is in the inoperable state.

For example, a correspondence table for the state of the descriptor (for example, a correspondence table for the state of the descriptor may be stored in a tensor control module) may be set to display the current state of the descriptor, where the state of the descriptor includes the operable state or the inoperable state.

In a possible implementation method, in the case where the pre-instructions of the first processing instruction are processing the descriptor (for example, writing or reading), the current state of the descriptor may be set to the inoperable state. Under the inoperable state, the first processing instruction cannot be executed, but may be blocked or cached. Conversely, in the case where there is no pre-instruction that is currently processing the descriptor, the current state of the descriptor may be set to the operable state. Under the operable state, the first processing instruction can be executed.

In a possible implementation method, when the content of the descriptor is stored in a TR (Tensor Register), the usage of TR may be stored in the correspondence table for the state of the descriptor to determine whether the TR is occupied or released, so as to realize the management of limited register resources.

By adopting the above-mentioned method provided by the present disclosure, the dependency relationship between instructions can be determined according to the state of the descriptor, thereby ensuring the execution order of the instructions, and the correctness of data processing.

In a possible implementation method, the first processing instruction includes a data access instruction, and the operand includes source data and target data.

The data processing method further includes:

a step S11a: when at least one of the source data and the target data includes an identifier of a descriptor, obtaining the content of the descriptor from the descriptor storage space; and
a step S12a: according to the content of the descriptor, determining a first data address of the source data and/or a second data address of the target data, respectively, and then reading data from the first data address and writing the data to the second data address.

For example, the operand of the data access instruction includes source data and target data, and the operand of the data access instruction is used to read data from the data address of the source data and write the data to the data address of the target data. When the first processing instruction is a data access instruction, the tensor data can be accessed through the descriptor. When at least one of the source data and the target data of the data access instruction includes the identifier of the descriptor, the descriptor storage space of the descriptor may be determined.

In a possible implementation method, if the source data includes an identifier of a first descriptor and the target data includes an identifier of a second descriptor, a first descriptor storage space of the first descriptor and a second descriptor storage space of the second descriptor may be determined, respectively; then the content of the first descriptor and the content of the second descriptor are read from the first descriptor storage space and the second descriptor storage space, respectively; according to the content of the first descriptor and the content of the second descriptor, the first data address of the source data and the second data address of the target data can be computed, respectively; finally, data is read from the first data address and written to the second data address to complete the entire access process.

For example, the source data may be off-chip data to be read, the identifier of the first descriptor of the source data is 1; the target data is a piece of storage space on the chip, and the identifier of the second descriptor of the target data is 2. The content D1 of the first descriptor and the content D2 of the second descriptor can be respectively obtained from the descriptor storage space according to the identifier 1 of the first descriptor of the source data and the identifier 2 of the second descriptor of the target data. The content D1 of the first descriptor and the content D2 of the second descriptor can be represented as follows:

$$D1: \begin{cases} X \quad direction: & ori\_x1, offset\_x1, size\_x1 \\ Y \quad direction: & ori\_y1, offset\_y1, size\_y1 \\ & PA\_start1 \end{cases}$$

$$D2: \begin{cases} X \quad direction: & ori\_x2, offset\_x2, size\_x2 \\ Y \quad direction: & ori\_y2, offset\_y2, size\_y2 \\ & PA\_start2 \end{cases}$$

According to the content D1 of the first descriptor and the content D2 of the second descriptor, a start physical address PA3 of the source data and a start physical address PA4 of the target data can be respectively obtained, and the PA3 and the PA4 are represented as follows:

$$PA3 = PA\_start1 + (offset_{y1} - 1) * ori\_x1 + offset\_x1$$

$$PA4 = PA\_start2 + (offset_{y2} - 1) * ori\_x2 + offset\_x2$$

According to the start physical address PA3 of the source data and the start physical address PA4 of the target data, and the content D1 of the first descriptor and the content D2 of the second descriptor, the first data address and the second data address can be determined, respectively, and data is read from the first data address and written to the second data address (via an IO path), so that the process of loading the tensor data indicated by D1 into the storage space indicated by D2 is completed.

In a possible implementation method, if only the source data includes the identifier of the first descriptor, the first descriptor storage space of the first descriptor can be determined; then the content of the first descriptor is read from the first descriptor storage space. According to the content of the first descriptor, the first data address of the source data can be determined; and according to the second data address of the target data in the operand of the instruction, data can be read from the first data address and written to the second data address, then the entire access process is finished.

In a possible implementation method, if only the target data includes the identifier of the second descriptor, the second descriptor storage space of the second descriptor can be determined; then the content of the second descriptor is read from the second descriptor storage space. According to the content of the second descriptor, the second data address of the target data can be determined; and according to the first data address of the source data in the operand of the instruction, data can be read from the first data address and written to the second data address, then the entire access process is finished.

By adopting the above-mentioned method provided by the present disclosure, the descriptor can be used to complete the data access. In this way, there is no need to transmit in the data address via instructions during each data access, thereby improving data access efficiency.

In a possible implementation method, the first processing instruction includes an operation instruction, the step S12a includes:

determining a data address of the data in a data storage space corresponding to the operand of the first processing instruction according to the content of the descriptor; and
executing an operation corresponding to the first processing instruction according to the data address.

For example, when the first processing instruction is an operation instruction, the operation of tensor data can be implemented via the descriptor. When the operand of the operation instruction includes the identifier of the descriptor, the descriptor storage space of the descriptor can be determined, and then the content of the descriptor is read from the descriptor storage space; according to the content of the descriptor, the data address corresponding to the operand can be determined, and then data is read from the data address to execute operations, finally the entire operation process is completed. By adopting the above-mentioned method, the descriptor can be used to read data during operations, and there is no need to transmit in the data address via instructions, thereby improving data operation efficiency.

According to the data processing method provided in the embodiments of the present disclosure, the descriptor capable of indicating the shape of the tensor is introduced, so that the data address can be determined via the descriptor during the execution of the data processing instruction, and the instruction generation method is simplified from the hardware side, thereby reducing the complexity of data access and improving the data access efficiency of the processor.

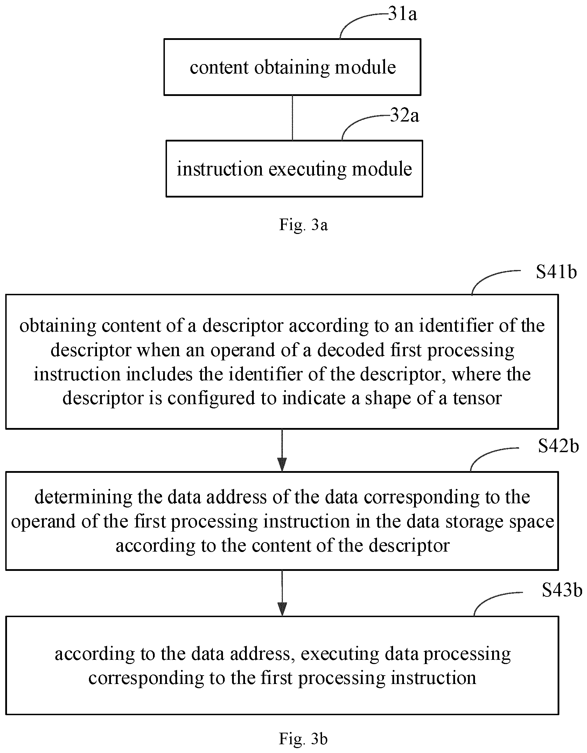

Fig. 3a shows a block diagram of a data processing apparatus according to an embodiment of the present disclosure. As shown in Fig. 3a, the present disclosure further provides a data processing apparatus including:

a content obtaining module 31a configured to obtain content of a descriptor according to an identifier of the descriptor when an operand of a decoded first processing instruction includes the identifier of the descriptor, where the descriptor is configured to indicate a shape of a tensor; and an instruction executing module 32a configured to execute the first processing instruction according to the content of the descriptor.

In a possible implementation method, the instruction executing module includes: an address determining sub-module configured to determine a data address of the data corresponding to an operand of the first processing instruction in the data storage space according to the content of the descriptor; and a data processing sub-module configured to execute data processing corresponding to the first processing instruction according to the data address.

In a possible implementation method, the data processing apparatus further includes: a first parameter obtaining module configured to obtain a registration parameter of the descriptor in the first processing instruction when the first processing instruction is a descriptor registration instruction, where the registration parameter includes at least one of followings: the identifier of the descriptor, the shape of the tensor, and the content of the tensor data indicated by the descriptor; an area determining module configured to determine a first storage area of the content of the descriptor in the descriptor storage space according to the registration parameter of the descriptor, and to determine a second storage area of the content of the tensor data indicated by the descriptor in the data storage space; a content determining module configured to determine the content of the descriptor according to the registration parameter of the descriptor and the second storage area to establish a correspondence between the descriptor and the second storage area; and a content storage module configured to store the content of the descriptor in the first storage area.

In a possible implementation method, the data processing apparatus further includes: an identifier obtaining module configured to obtain an identifier of the descriptor in the first processing instruction when the first processing instruction is a descriptor release instruction; and a space release module configured to respectively release the storage area of the descriptor in the descriptor storage space and the storage area of the content of the tensor data indicated by the descriptor in the data storage space according to the identifier of the descriptor .

In a possible implementation method, the data processing apparatus further includes: a second parameter obtaining module configured to obtain a modification parameter of the descriptor in the first processing instruction when the first processing instruction is a descriptor modification instruction, where the modification parameter includes at least one of followings: the identifier of the descriptor, the shape of the tensor to be modified, and the content of the tensor data indicated by the descriptor; a content to be updated determining module configured to determine the content of the descriptor to be updated according to the modification parameter of the descriptor; and a content updating module configured to update the content of the descriptor in the descriptor storage space and/or the content of tensor data in the data storage space according to the content to be updated.

In a possible implementation method, the data processing apparatus further includes: an instruction determining module configured to determine whether there is a second processing instruction that has not been executed completely according to the identifier of the descriptor, where the second processing instruction includes processing instructions in the instruction queue prior to the first processing instruction and having the identifier of the descriptor in the operand; and a first instruction caching module configured to block or cache the first processing instruction when there is a second processing instruction that has not been executed completely.

In a possible implementation method, the data processing apparatus further includes: a state determining module configured to determine the current state of the descriptor according to the identifier of the descriptor, where the state of the descriptor includes the operable state or the inoperable state; and a second instruction caching module configured to block or cache the first processing instruction when the descriptor is in the inoperable state.

In a possible implementation method, the first processing instruction includes a data access instruction, and the operand includes source data and target data. The content obtaining module includes a content obtaining sub-module configured to obtain the content of the descriptor from the descriptor storage space when at least one of the source data and the target data includes the identifier of the descriptor. The instruction executing module includes a first address determining sub-module configured to determine the first data address of the source data and/or the second data address of the target data, respectively, according to the content of the descriptor; and an access sub-module configured to read data from the first data address and write the data to the second data address.

In a possible implementation method, the first processing instruction includes an operation instruction. The instruction executing module includes: a second address determining sub-module configured to determine the data address of the data corresponding to the operand of the first processing instruction in the data storage space according to the content of the descriptor; and an operation sub-module configured to execute an operation corresponding to the first processing instruction according to the data address.

In a possible implementation method, the descriptor is used to indicate the shape of N-dimensional tensor data, where N is an integer greater than or equal to 0. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes the base address of the datum point of the descriptor in the data storage space of the tensor data. The shape parameter of the tensor data includes at least one of the followings: a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the data processing apparatus further includes a decoding module configured to decode the received first processing instruction to obtain a decoded first processing instruction, where the decoded first processing instruction includes an operation code and one or more operands, and the operation code is used to indicate a processing type corresponding to the first processing instruction.

In a possible implementation method, the present disclosure further provides a neural network chip including the data processing apparatus.

In a possible implementation method, the present disclosure provides a board card including a storage device, an interface apparatus, a control device, and the above-mentioned neural network chip. The neural network chip is connected to the storage device, the control device, and the interface apparatus, respectively; the storage device is configured to store data; the interface apparatus is configured to implement data transmission between the neural network chip and an external equipment; and the control device is configured to monitor the state of the neural network chip.

Fig. 4 shows a block diagram of a board card according to an embodiment of the present disclosure. As shown in Fig. 4, in addition to the above-mentioned chip 389, the board card may further include other supporting components, including but not limited to: a storage device 390, an interface apparatus 391, and a control device 392.

The storage device 390 is connected to the neural network chip through a bus, and is configured to store data. The storage device may include a plurality of groups of storage units 393, where each group of the storage units is connected with the neural network chip by the bus. It can be understood that each group of the storage units may be DDR SDRAM (Double Data Rate SDRAM (synchronized dynamic random access memory)).

DDR can double a speed of SDRAM without increasing a clock rate. DDR allows reading data on rising and falling edges of the clock pulse. DDR is twice as fast as standard SDRAM In an embodiment, the storage device may include 4 groups of the storage unit, where each group of the storage units may include a plurality of DDR4 particles (chips). In an embodiment, the inner part of the neural network chip may include four 72-bit DDR4 controllers, in which 64 bits of the four 72-bit DDR4 controllers are used for data transmission, and 8 bits of the four 72-bit DDR4 controllers are used for ECC check. It can be understood that when DDR4-3200 particles are used in each group of the storage units, the theoretical bandwidth of data transmission can reach 25600MB/s.

In an embodiment, each group of the storage units may include a plurality of DDR SDRAMs arranged in parallel. DDR can transmit data twice in one clock cycle. A controller for controlling DDR is provided in the chip, where the controller is used for controlling the data transmission and data storage of each storage unit.

The interface apparatus is electrically connected to the neural network chip, where the interface apparatus is configured to implement data transmission between the neural network chip and an external apparatus (such as a server or a computer). For example, in an embodiment, the interface apparatus may be a standard PCIE interface, and data to be processed is transmitted from the server to the chip through the standard PCIE interface to realize data transmission. Preferably, when a PCIE 3.0 X 16 interface is used for data transmission, the theoretical bandwidth can reach 16000MB/s. In another embodiment, the interface apparatus may further include other interfaces. The present disclosure does not limit the specific types of the interfaces, as long as the interface units can implement data transmission. In addition, the computation result of the neural network chip is still transmitted back to an external apparatus (such as a server) by the interface apparatus.

The control device is electrically connected to the neural network chip, where the control device is configured to monitor the state of the neural network chip. Specifically, the neural network chip may be electrically connected to the control device through an SPI interface, where the control device may include an MCU (Micro Controller Unit). The neural network chip may include a plurality of processing chips, a plurality of processing cores, or a plurality of processing circuits, and is capable of driving a plurality of loads. Therefore, the neural network chip can be in different working state such as multi-load state and light-load state. The regulation of the working states of a plurality of processing chips, a plurality of processing cores and or a plurality of processing circuits in the neural network chip can be implemented by the control device.

In a possible implementation method, the present disclosure provides an electronic device including the neural network chip. The electronic device includes a data processing apparatus, a robot, a computer, a printer, a scanner, a tablet computer, an intelligent terminal, a mobile phone, an automobile data recorder, a navigator, a sensor, a webcam, a cloud server, a camera, a video camera, a projector, a watch, an earphone, a mobile storage, a wearable apparatus, a transportation means, a household electrical appliance, and/or a medical apparatus.

The transportation means may include an airplane, a ship, and/or a vehicle. The household electrical appliance may include a television, an air conditioner, a microwave oven, a refrigerator, an electric rice cooker, a humidifier, a washing machine, an electric lamp, a gas cooker, and a range hood. The medical apparatus may include a nuclear magnetic resonance spectrometer, a B-ultrasonic scanner, and/or an electrocardiograph.

A1. A data processing method, comprising:

when an operand of a decoded first processing instruction includes an identifier of a descriptor, obtaining content of the descriptor according to the identifier of the descriptor, where the descriptor is configured to indicate a shape of a tensor; and
executing the first processing instruction according to the content of the descriptor.

A2. The data processing method of A1, wherein the executing the first processing instruction according to the content of the descriptor includes:

determining a data address of the data in a data storage space corresponding to the operand of the first processing instruction according to the content of the descriptor, and
executing data processing corresponding to the first processing instruction according to the data address.

A3. The data processing method of A1 or A2, further comprising:

when the first processing instruction is a descriptor registration instruction, obtaining a registration parameter of the descriptor in the first processing instruction, where the registration parameter includes at least one of followings: the identifier of the descriptor, the shape of the tensor, and the content of the tensor data indicated by the descriptor,
according to the registration parameter of the descriptor, determining a first storage area of the content of the descriptor in a descriptor storage space and a second storage area of the content of the tensor data indicated by the descriptor in the data storage space,
determining the content of the descriptor according to the registration parameter of the descriptor and the second storage area to establish a correspondence between the descriptor and the second storage area, and
storing the content of the descriptor in the first storage area.

A4. The data processing method of any one of A1-A3, further comprising:

when the first processing instruction is a descriptor release instruction, obtaining the identifier of the descriptor in the first processing instruction, and
according to the identifier of the descriptor, respectively releasing the storage area of the descriptor in the descriptor storage space and a storage area of the content of the tensor data indicated by the descriptor in the data storage space.

A5. The data processing method of any one of A1-A4, further comprising:

when the first processing instruction is a descriptor modification instruction, obtaining a modification parameter of the descriptor in the first processing instruction, where the modification parameter includes at least one of followings: the identifier of the descriptor, the shape of the tensor to be modified, and the content of the tensor data indicated by the descriptor,
determining content to be updated of the descriptor according to the modification parameter of the descriptor, and
according to the content to be updated, updating the content of the descriptor in the descriptor storage space and/or content of tensor data in the data storage space.

A6. The data processing method of any one of A1-A5, further comprising:

according to the identifier of the descriptor, determining whether there is a second processing instruction that has not been executed completely, where the second processing instruction includes a processing instruction in an instruction queue prior to the first processing instruction and having the identifier of the descriptor in the operand, and

blocking or caching the first processing instruction when there is an second processing instruction that has not been executed completely.

A7. The data processing method of any one of A1-A6, further comprising:

determining a current state of the descriptor according to the identifier of the descriptor, where the state of the descriptor includes an operable state or an inoperable state, and

blocking or caching the first processing instruction when the descriptor is in the inoperable state.

A8. The data processing method of any one of A1-A7, wherein the first processing instruction includes a data access instruction, and the operand includes source data and target data,

wherein the obtaining the content of the descriptor according to the identifier of the descriptor includes:

obtaining the content of the descriptor from the descriptor storage space when at least one of the source data and the target data includes the identifier of the descriptor,

wherein the executing the first processing instruction according to the content of the descriptor includes:

according to the content of the descriptor, determining a first data address of the source data and/or a second data address of the target data, respectively, and

reading data from the first data address and writing the data to the second data address.

A9. The data processing method of any one of A1-A7, wherein the first processing instruction includes an operation instruction, and the executing the first processing instruction according to the content of the descriptor includes:

determining the data address of the data in the data storage space corresponding to the operand of the first processing instruction according to the content of the descriptor, and

executing an operation corresponding to the first processing instruction according to the data address.

A10. The data processing method of any one of A1-A9, wherein the descriptor is used to indicate a shape of N-dimensional tensor data, where N is an integer greater than or equal to 0, and the content of the descriptor includes at least one shape parameter indicating the shape of the tensor data.

A11. The data processing method of A10, wherein the descriptor is also used to indicate an address of N-dimensional tensor data, and the content of the descriptor further includes at least one address parameter indicating the address of the tensor data.

A12. The data processing method of A11, wherein the address parameter of the tensor data includes a base address of a datum point of the descriptor in the data storage space of the tensor data,

wherein the shape parameter of the tensor data includes at least one of following:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A13. The data processing method of any one of A1-A12, further comprising:

decoding the received first processing instruction to obtain the decoded first processing instruction; wherein

the decoded first processing instruction includes an operation code and one or more operands, where the operation code is used to indicate a processing type corresponding to the first processing instruction.

A14. A data processing apparatus, comprising:

a content obtaining module configured to obtain content of a descriptor according to an identifier of the descriptor when an operand of a decoded first processing instruction includes the identifier of the descriptor, where the descriptor is configured to indicate a shape of a tensor; and

an instruction executing module configured to execute the first processing instruction according to the content of the descriptor.

A15. A data processing apparatus of A14, wherein the instruction executing module includes:

an address determining sub-module configured to determine a data address of data corresponding to the operand of the first processing instruction in a data storage space according to the content of the descriptor, and a data processing sub-module configured to execute data processing corresponding to the first processing instruction according to the data address.

A16. The data processing apparatus of A14 or A15, further comprising:

a first parameter obtaining module configured to obtain a registration parameter of the descriptor in the first processing instruction when the first processing instruction is a descriptor registration instruction, where the registration parameter includes at least one of followings: the identifier of the descriptor, the shape of the tensor, and content of tensor data indicated by the descriptor,
an area determining module configured to determine a first storage area of the content of the descriptor in a descriptor storage space according to the registration parameter of the descriptor, and to determine a second storage area of the content of the tensor data indicated by the descriptor in the data storage space,
a content determining module configured to determine the content of the descriptor according to the registration parameter of the descriptor and the second storage area to establish a correspondence between the descriptor and the second storage area, and
a content storage module configured to store the content of the descriptor in the first storage area.

A17. The data processing apparatus of any one of A14-A16, further comprising:

an identifier obtaining module configured to obtain the identifier of the descriptor in the first processing instruction when the first processing instruction is a descriptor release instruction, and
a space release module configured to respectively release a storage area of the descriptor in the descriptor storage space and a storage area of the content of the tensor data indicated by the descriptor in the data storage space according to the identifier of the descriptor.

A18. The data processing apparatus of any one of A14-A17, further comprising:

a second parameter obtaining module configured to obtain a modification parameter of the descriptor in the first processing instruction when the first processing instruction is a descriptor modification instruction, where the modification parameter includes at least one of followings: the identifier of the descriptor, a shape of the tensor to be modified, and the content of the tensor data indicated by the descriptor,
a content to be updated determining module configured to determine the content of the descriptor to be updated according to the modification parameter of the descriptor, and
a content updating module configured to update the content of the descriptor in the descriptor storage space and/or the content of tensor data in the data storage space according to the content to be updated.

A19. The data processing apparatus of any one of A14-A18, further comprising:

an instruction determining module configured to determine whether there is a second processing instruction that has not been executed completely according to the identifier of the descriptor, where the second processing instruction includes processing instructions in an instruction queue prior to the first processing instruction and having the identifier of the descriptor in the operand, and
a first instruction caching module configured to block or cache the first processing instruction when there is an second processing instruction that has not been executed completely.

A20. The data processing apparatus of any one of A14-A19, further comprising:

a state determining module configured to determine a current state of the descriptor according to the identifier of the descriptor, where the state of the descriptor includes an operable state or an inoperable state, and
a second instruction caching module configured to block or cache the first processing instruction when the descriptor is in the inoperable state.

A21. The data processing apparatus of any one of A14-A20, wherein the first processing instruction includes a data access instruction, and the operand includes source data and target data,

wherein the content obtaining module includes:

a content obtaining sub-module configured to obtain the content of the descriptor from the descriptor storage space when at least one of the source data and the target data includes the identifier of the descriptor,

wherein the instruction executing module includes:

a first address determining sub-module configured to determine a first data address of the source data and/or a second data address of the target data, respectively, according to the content of the descriptor, and an access sub-module configured to read data from the first data address and write the data to the second data address.

A22. The data processing apparatus of any one of A14-A20, wherein the first processing instruction includes an operation instruction, and the instruction executing module includes:

a second address determining sub-module configured to determine the data address of the data corresponding to the operand of the first processing instruction in the data storage space according to the content of the descriptor, and
an operation sub-module configured to execute an operation corresponding to the first processing instruction according to the data address.

A23. The data processing apparatus of any one of A14-A22, the descriptor is used to indicate a shape of N-dimensional tensor data, where N is an integer greater than or equal to 0, wherein
the content of the descriptor includes at least one shape parameter indicating the shape of the tensor data.

A24. The data processing apparatus of A23, wherein the descriptor is also used to indicate an address of N-dimensional tensor data, and the content of the descriptor further includes at least one address parameter indicating the address of the tensor data.

A25. The data processing apparatus of A24, wherein the address parameter of the tensor data includes a base address of a datum point of the descriptor in the data storage space of the tensor data,
wherein the shape parameter of the tensor data includes at least one of followings:
a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A26. The data processing apparatus of any one of A14-A25, further includes:
a decoding module configured to decode the received first processing instruction to obtain the decoded first processing instruction, where
the decoded first processing instruction includes an operation code and one or more operands, and the operation code is used to indicate a processing type corresponding to the first processing instruction.

A27. A neural network chip comprising the data processing apparatus of any one of A14-A26.

A28. An electronic device comprising the neural network chip of A27.

A29. A board card comprising a storage device, an interface apparatus, a control device, and the neural network chip of A27, wherein
the neural network chip is connected to the storage device, the control device, and the interface apparatus, respectively;
the storage device is configured to store data;
the interface apparatus is configured to implement data transmission between the neural network chip and an external equipment; and
the control device is configured to monitor a state of the neural network chip.

A30. The board card of A29, wherein
the storage device includes a plurality of groups of storage units, where each group of the storage units is connected with the neural network chip by a bus, and the storage units are DDR SDRAM,
the chip includes a DDR controller configured to control data transmission and data storage of each storage unit, and the interface apparatus is a standard PCIE interface.

An embodiment of the present disclosure provides a data processing apparatus. Fig. 1b shows a block diagram of a data processing apparatus according to an embodiment of the present disclosure. As shown in Fig. 1b, the data processing apparatus includes a control unit 11b and an execution unit 12b. The control unit 11b is configured to:

obtain content of a descriptor from a descriptor storage space according to an identifier of the descriptor when an operand of a decoded first processing instruction includes the identifier of the descriptor, where the descriptor is configured to indicate a shape of a tensor; and

send the content of the descriptor and the first processing instruction to the execution unit, so that the execution unit executes the first processing instruction according to the content of the descriptor.

According to the embodiment of the present disclosure, the control unit obtains the content of the descriptor through the identifier of the descriptor in the operand of the first processing instruction, and sends the content of the descriptor to the execution unit to execute the first processing instruction, so that the operand can be obtained through the descriptor when the processing instruction is executed, which can reduce the complexity of data access, and improve the data access efficiency of the processor.

In a possible implementation method, the data processing apparatus can be applied to a processor. The processor may include a general-purpose processor (for example, a central processing unit (CPU), a graphics processing unit (GPU)) and a dedicated processor (for example, an artificial intelligence processor, a scientific computing processor, or a digital signal processor). The present disclosure does not limit the type of processor.

In a possible implementation method, the control unit 11b may be configured to decode the received first processing instruction to obtain a decoded first processing instruction, where the decoded first processing instruction includes an operation code and one or more operands, and the operation code is used to indicate the processing type corresponding to the first processing instruction. The first processing instruction may include a data access instruction, an operation instruction, a descriptor management instruction, a synchronization instruction, *etc.* The present disclosure does not limit the specific type of the first processing instruction.

In a possible implementation method, after the control unit 11b decodes the received first processing instruction, when the operand of the instruction includes the identifier of the descriptor, the control unit 11b obtains the content of the descriptor from the descriptor storage space according to the identifier of the descriptor; and then the control unit 11b sends the content and the first processing instruction to the execution unit 12b. After receiving the content of the descriptor and the first processing instruction, the execution unit 12b first determines the data address of the data corresponding to the operand of the first processing instruction in the data storage space according to the content of the descriptor, and then the execution unit 12b executes the data processing corresponding to the first processing instruction according to the data address. The data address of the data storage space may be an actual physical address or a virtual address, and the present disclosure does not limit the types of the data addresses.

In a possible implementation method, the descriptor storage space may be a storage space in an internal memory of the control unit 11b, and the data storage space may be a storage space in an internal memory of the control unit 11b or may be a storage space in an external memory connected to the control unit 11b, which is not limited in the present disclosure.

In a possible implementation method, the descriptor is used to indicate the shape of N-dimensional tensor data, where N is a positive integer, for example, N=1, 2, or 3. A tensor may have a variety of forms of data composition, and a tensor can have different dimensions, for example, a scalar can be viewed as a 0-dimensional tensor, a vector can be viewed as a 1-dimensional tensor, and a matrix can be viewed as a tensor in 2 dimensions or more dimensions. The shape of a tensor includes information such as the dimensions of the tensor and the size of the tensor in each dimension. For example, for a tensor:

$$\begin{bmatrix} 1 & 2 & 3 & 4 \\ 11 & 22 & 33 & 44 \end{bmatrix},$$

The shape of the tensor can be described by the descriptor as (2, 4), in other words, the tensor is a two-dimensional tensor indicated by the two parameters, and the size of the tensor in a first dimension (column) is 2, and the size of the tensor in a second dimension (row) is 4. It should be noted that the present disclosure does not limit the manner in which the descriptor indicates the shape of the tensor.

In a possible implementation method, the value of N can be determined according to the dimensions (orders) of the tensor data, or may be set according to the usage of the tensor data. For example, when the value of N is 3, the tensor data is three-dimensional tensor data, and the descriptor can be used to indicate the shape (such as offset, size, *etc.*) of the three-dimensional tensor data in three dimensions. It should be understood that those skilled in the art can set the value of N according to actual needs, which is not limited in the present disclosure.

In a possible implementation method, the descriptor may be composed of the identifier of the descriptor and the content of the descriptor. The identifier of the descriptor is used to identify the descriptor, for example, the identifier of the descriptor is the serial number of the descriptor. The content of the descriptor includes at least one shape parameter indicating the shape of the tensor data, for example, tensor data is 3-dimensional data, the shape parameters of two dimensions among the three dimensions of the tensor data are fixed, and the content of the descriptor may include a shape parameter indicating the tensor data in the remaining dimension.

In a possible implementation method, the identifier and content of the descriptor can be stored in the descriptor storage space (an internal memory), such as a register, an on-chip SRAM or other media caches, *etc.* The tensor data indicated by the descriptor can be stored in the data storage space (an internal memory or an external memory), such as an on-chip cache or an off-chip memory. The present disclosure does not limit the specific position of the descriptor storage space and the position of the data storage space.

In a possible implementation method, the identifier and content of the descriptor and the tensor data indicated by the descriptor can be located in a same area in the internal memory, for example, a continuous area of an on-chip cache can be used to store the related content of the descriptor, where an address of the area is ADDR0-ADDR1023. An address ADDR0-ADDR63 can be used as a descriptor storage space to store the identifier and content of the descriptor, and an address ADDR64-ADDR1023 can be used as a data storage space to store the tensor data indicated by the descriptor. In the descriptor storage space, an address ADDR0-ADDR31 can be used to store the identifier of the descriptor, and an address ADDR32-ADDR63 can be used to store the content of the descriptor. It should be noted that the address ADDR is not limited to 1 bit or 1 byte, and the ADDR is an address unit used to represent an address. Those skilled in the art can determine the descriptor storage space, the data storage space, and the specific addresses thereof according to actual situations, which is not limited in the present disclosure.

In a possible implementation method, the identifier and content of the descriptor, and the tensor data indicated by the descriptor can be stored in different areas of the internal memory. For example, a register may be used as a descriptor storage space to store the identifier and content of the descriptor, and an on-chip cache may be used as a data storage space to store the tensor data indicated by the descriptor.

In a possible implementation method, when a register is used to store the identifier and content of the descriptor, the serial number of the register can be taken as the identifier of the descriptor. For example, when the serial number of the register is 0, the identifier of the descriptor stored in the register is set to 0. When the descriptor in the register is valid, an area can be allocated in the caching space for storing the tensor data according to the size of the tensor data indicated by the descriptor.

In a possible implementation method, the identifier and content of the descriptor can be stored in the internal memory, and the tensor data indicated by the descriptor can be stored in the external memory. For example, on-chip storage of the identifier and content of the descriptor and off-chip storage of the tensor data indicated by the descriptor may be adopted.

In a possible implementation method, the data address of the data storage space corresponding to the identifier of the descriptor may be a fixed address. For example, a separate data storage space may be provided for the tensor data, and a start address of each tensor data in the data storage space corresponds to the identifier of the descriptor. In this case, the execution unit can determine the data address of the data corresponding to the operand in the data storage space according to the content of the descriptor, and then execute the first processing instruction.

In a possible implementation method, when the data address of the data storage space corresponding to the identifier of the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start physical address of the tensor data; or the content of the descriptor may include a plurality of address parameters of the address of the tensor data, such as a start address + an address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include the start address of the data storage space. When the datum point of the descriptor is a first data block of the data storage space, the base address of the descriptor is the start address of the data storage space. When the datum point of the descriptor is other data than the first data block in the data storage space, the base address of the descriptor is the address of the data block in the data storage space.

In a possible implementation method, the shape parameter of the tensor data includes at least one of the followings: a size of the data storage space in at least one of N dimensions, a size of the storage area in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a 3-dimensional data, the descriptor can use a coordinate (x, y, z) to represent the shape of the tensor data, and the data description position of the tensor data can be represented by a coordinate (x, y, z), and the data description position of the tensor data may be a position of a point or an area where the tensor data is mapped in a 3-dimensional space. It should be understood that those skilled in the art may select a shape parameter representing tensor data according to actual conditions, which is not limited in the present disclosure.

By using the descriptor in the process of data access, the association between data can be established, thereby reducing the complexity of data access and improving the processing efficiency of instructions.

In a possible implementation method, the content of the descriptor of the tensor data can be determined according to the base address of the datum point of the descriptor in the data storage space of the tensor data, the size of the data storage space in at least one direction of the N dimensions, and the size of the storage area in at least one direction of the N dimensions and/or the offset of the storage area in at least one direction of the N dimensions.

Fig. 2 shows a schematic diagram of a data storage space according to an embodiment of the present disclosure. As shown in Fig. 2, a data storage space 21 stores a 2-dimensional data in a row-first manner, where the data storage space 21 can be represented by (x, y) (where the x axis extends horizontally to the right, and the y axis extends vertically down), a size in the X axis direction (a size of each row) is ori x (which is not shown in the figure), a size in the Y axis direction (total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the X axis direction is represented as offset x, an offset 24 of the data block 23 in the Y axis direction is represented as offset_y, the size in the X axis direction is represented as size_x, and the size in the Y axis direction is represented as size_y.

In a possible implementation method, when the descriptor is used to define the data block 23, the datum point of the descriptor may be a first data block of the data storage space 21, the base address of the descriptor is the start address PA_start of the data storage space 21, and then the content of the descriptor of the data block 23 can be determined according to the size ori x of the data storage space 21 in the X axis, the size ori_y in the Y axis, the offset offset_y of the data block 23 in the Y axis direction, the offset offset x of the data block 23 in the X axis direction, the size size x in the X axis direction, and the size size_y in the Y axis direction.

In a possible implementation method, the following formula (1) can be used to represent the content of the descriptor:

$$\begin{cases} \text{X direction: } ori\_x, offset\_x, size\_x \\ \text{Y direction: } ori\_y, offset\_y, size\_y \\ \qquad PA\_start \end{cases} \qquad (1)$$

It should be understood that although the content of the descriptor represents a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 2 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (for example, a piece of data at position (2, 2)) in the data storage space 21 is selected as a datum point, and a physical address of the selected data in the data storage space is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} \text{X direction:} \ \ x\_min, x\_max \\ \text{Y direction:} \ \ y\_min, y\_max \\ \qquad\quad PA\_base \end{cases} \qquad (2)$$

It should be understood that although the top left vertex and the bottom right vertex at diagonal positions are used to determine the content of the descriptor in the above-mentioned example, those skilled in the art may set at least two specific vertices at diagonal positions according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f(x, \ y, \ z) \\ \ \ PA\_base \end{cases} \qquad (3)$$

It should be understood that those skilled in the art can set the mapping relationship between the data description position and the data address according to actual situations, which is not limited in the present disclosure.

In a possible implementation method, when the execution unit 12 receives the content of the descriptor and the first processing instruction sent by the control unit 11, the data address of the data corresponding to the operand of the first processing instruction in the data storage space can be determined according to the content of the descriptor. The computation of the data address is completed automatically by the hardware, and when the content of the descriptor is represented in a different way, the computation method of the data address is also different. The present disclosure does not limit the specific computation method of the data address.

For example, the content of the descriptor in the operand is represented by formula (1), the offset of the tensor data indicated by the descriptor in the data storage space is offset_x and offset_y, and the size is size_x*size_y, and the start data address $PA1_{(x,y)}$ of the tensor data indicated by the descriptor in the data storage space can be determined using the following formula (4):

$$PA1_{(x,y)} = PA\_start + (offset\_y - 1) * ori\_x + offset\_x \qquad (4)$$

According to the data start address $PA1_{(x,y)}$ determined based on the formula (4), and the offsets offset_x and offset_y, and the size size x and size_y of the storage area, the storage area of the tensor data indicated by the descriptor in the data storage space can be determined.

In a possible implementation method, the execution unit 12 receives the content of the descriptor and the first processing instruction sent by the control unit 11, and when the operand further includes the data description position for the descriptor, the data address of the data corresponding to the operand in the data storage space can be determined according to the content of the descriptor and the data description position. In this way, part of the tensor data (one piece of data or a plurality pieces of data) indicated by the descriptor can be processed.

For example, the content of the descriptor in the operand is represented by formula (1), the offset of the tensor data indicated by the descriptor in the data storage space is offset x and offset_y, the size is size_x*size_y, the data description position for the descriptor contained in the operand is $(x_q, y_q)$, then the start data address $PA2_{(x,y)}$ of the tensor data indicated by the descriptor in the data storage space can be determined using the following formula (5):

$$PA2_{(x,y)} = PA\_start + \left(offset\_y + y_q - 1\right) * ori\_x + \left(offset\_x + x_q\right) \qquad （5）$$

In a possible implementation method, the first processing instruction includes a data access instruction, and the operand includes source data and target data.

The control unit 11b is configured to obtain, when the source data includes the identifier of the first descriptor and the target data includes the identifier of the second descriptor, the content of the first descriptor and the content of the second descriptor from the descriptor storage space. The control unit 11b is further configured to send the content of the first descriptor, the content of the second descriptor, and the first processing instruction to the execution unit 12b.

The execution unit 12b is configured to obtain the first data address of the source data and the second data address of the target data according to the content of the received first descriptor and the content of the second descriptor, and to read data from the first data address and write the data to the second data address.

For example, in the case where both the source data and the target data include the identifier of the descriptor, the source data may be a set of off-chip data to be read, and the identifier of the first descriptor in the source data is 1; and the target data is a piece of on-chip storage space, and the identifier of the second descriptor in the target data is 2. The control unit 11b may obtain the content D1 of the first descriptor and the content D2 of the second descriptor from the descriptor storage space according to the identifier 1 of the first descriptor in the source data and the identifier 2 of the second descriptor in the target data, and the control unit 11b may further send the content D1 of the first descriptor, the content D2 of the second descriptor, and the first processing instruction to the execution unit 12b. The content D1 of the first descriptor and the content D2 of the second descriptor can be represented as follows:

$$
\text{D1:} \begin{cases} X \ \text{direction：} \ \text{ori\_x1, offset\_x1, size\_x1} \\ Y \ \text{direction：} \ \text{ori\_y1, offset\_y1, size\_y1} \\ \qquad\qquad \text{PA\_start1} \end{cases}
$$

$$
\text{D2:} \begin{cases} X \ \text{direction：} \ \text{ori\_x2, offset\_x2, size\_x2} \\ Y \ \text{direction：} \ \text{ori\_y2, offset\_y2, size\_y2} \\ \qquad\qquad \text{PA\_start2} \end{cases}
$$

According to the content D1 of the first descriptor and the content D2 of the second descriptor, the execution unit 12b may obtain a start physical address PA3 of the source data and a start physical address PA4 of the target data, and the PA3 and the PA4 are represented as follows:

$$
PA3 = PA\_start1 + \big(\text{offset}_{y1} - 1\big)) * \text{ori\_x1} + \text{offset\_x1}
$$

$$
PA4 = PA\_start2 + (\text{offset\_y2} - 1) * \text{ori\_x2} + \text{offset\_x2}
$$

According to the start physical address PA3 of the source data and the start physical address PA4 of the target data, and the content D1 of the first descriptor and the content D2 of the second descriptor, the execution unit 12b can determine the first data address and the second data address, and the execution unit 12b may read data from the first data address and write the data to the second data address (via the IO path), so that the process of loading the tensor data indicated by D1 into the storage space indicated by D2 is completed, in other words, the off-chip data is loaded on the chip. It should be understood that the transmission of data from on-chip to off-chip is similar to the above process, and will not be repeated herein.

In a possible implementation method, the size of loaded data can be set when the data is loaded, where the size of loaded data can be set according to actual needs or the size of the storage space. For example, according to actual needs, when the data is being loaded, the first 10 data loaded in D1 can be set. The present disclosure does not limit the specific size of the loaded data.

By adopting the above-mentioned method provided by the present disclosure, the descriptor can be used to complete the data access. The content of the descriptor is stored in the descriptor storage space. In this way, there is no need to input the data address through an instruction during each data access, which can improve the data access efficiency of the processor.

In a possible implementation method, the first processing instruction includes a data access instruction, and the operand includes source data and target data.

The control unit 11b is configured to obtain content of a third descriptor from the descriptor storage space when the source data includes an identifier of the third descriptor, and to send the content of the third descriptor and the first processing instruction to the execution unit 12b.

The execution unit 12b is configured to obtain a third data address of the source data according to the content of the received third descriptor, and to read data from the third data address and write the data to the data address of the target data.

For example, in the case where both the source data and the target data include the identifier of the descriptor, the source data may be a set of off-chip data to be read, and the identifier of the first descriptor in the source data is 3; and the target data is a piece of on-chip storage space. The control unit 11 may obtain the content D3 of the third descriptor from the descriptor storage space according to the identifier 3 of the third descriptor in the source data, and the control unit 11b may further send the content D3 of the third descriptor and the first processing instruction to the execution unit 12b. The content D3 of the third descriptor can be represented as follows:

$$D3: \begin{cases} X \ \ \text{direction：} \ \ \text{ori\_x3}, \text{offset\_x3}, \text{size\_x3} \\ Y \ \ \text{direction：} \ \ \text{ori\_y3}, \text{offset\_y3}, \text{size\_y3} \\ \qquad \text{PA\_start3} \end{cases}$$

According to the content D3 of the third descriptor, the execution unit 12b may obtain a start physical address PA5 of the source data, and the PA5 is represented as follows:

$$PA5 = PA\_start3 + \left(\text{offset}_{y3} - 1\right)) * \text{ori\_x3} + \text{offset\_x3}$$

The execution unit 12b may obtain the start physical address of the target data and the data address of the target data according to address information of the target data in the first processing instruction. For example, the address information of the target data includes a start address and a general serial number of the register of the offset. In this case, the start physical address of the target data can be obtained by accessing the general register to obtain the offset, and adding the start address and the offset; and the data address of the target data can be determined according to the size of the target data.

The execution unit 12b can determine a third data address according to the start physical address PA5 of the source data and the content D3 of the third descriptor, and then read the data from the third data address and write the data to the data address of the target data (via an IO path), thus completing the loading of the tensor data that D3 points to into the storage space of the target data, in other words, the off-chip data is loaded on the chip. It should be understood that transmitting the off-chip data on the chip is similar to the above process, and will not be repeated here.

In a possible implementation method, the first processing instruction includes a data access instruction, and the operand includes source data and target data.

The control unit 11b is configured to obtain content of a fourth descriptor from the descriptor storage space when the target data includes an identifier of the fourth descriptor, and to send the content of the fourth descriptor and the first processing instruction to the execution unit 12b.

The execution unit 12b is configured to obtain a fourth data address of the target data according to the content of the received fourth descriptor, and to read data from the data address of the source data and write the data to the fourth data address.

For example, in the case where the target data includes the identifier of the descriptor, the source data may be a set of off-chip data to be read, and the target data is a piece of on-chip storage space; and the identifier of the fourth descriptor in the target data is 4. The control unit 11b may obtain the content D4 of the fourth descriptor from the descriptor storage space according to the identifier 4 of the fourth descriptor in the target data, and the control unit 11b may further send the content D4 of the fourth descriptor and the first processing instruction to the execution unit 12b. The content D4 of the fourth descriptor can be represented as follows:

$$D4: \begin{cases} X \ \ \text{direction:} \ \ \text{ori\_x4}, \text{offset\_x4}, \text{size\_x4} \\ Y \ \ \text{direction:} \ \ \text{ori\_y4}, \text{offset\_y4}, \text{size\_y4} \\ \qquad \text{PA\_start4} \end{cases}$$

According to the content D4 of the fourth descriptor, the execution unit 12b may obtain a start physical address PA6 of the target data, and the PA6 is represented as follows:

$$PA6 = PA\_start4 + (\text{offset\_y4} - 1\_ * \text{ori\_x4} + \text{offset\_x4}$$

The execution unit 12b may compute the start physical address of the source data and the data address of the source data according to address information of the source data in the first processing instruction. For example, the address information of the source data includes a start address and a general serial number of the register of the offset. In this case, the start physical address of the source data can be obtained by accessing the general register to obtain the offset, and adding the start address and the offset; and the data address of the source data can be determined according to the size of the source data.

The execution unit 12b can determine a fourth data address according to the start physical address PA6 of the target data and the content D4 of the fourth descriptor, and then read the data from the data address of the source data and write the data to the fourth data address (via an IO path), thus completing the loading of the source data into the storage space that D4 points to, in other words, the off-chip data is loaded on the chip. It should be understood that the transmitting the off-chip data on the chip is similar to the above process, and will not be repeated here.

In a possible implementation method, the first processing instruction includes an operation instruction, where the execution unit executing data processing corresponding to the first processing instruction according to the data address may include: reading data from the data address and executing an operation corresponding to the operation instruction.

For example, in the case where the first processing instruction is an operation instruction and the operand of the operation instruction includes the identifier of the descriptor, the control unit 11 may obtain the content of the descriptor from the descriptor storage space according to the identifier of the descriptor, and send the content of the descriptor and the operation instruction to the execution unit 12. The execution unit 12 determines the data address of the data to be computed according to the content of the received descriptor, reads the data to be computed from the data address and executes the operation corresponding to the operation instruction. For example, if the operation instruction is an ADD instruction, when the operand includes the identifier of the descriptor, the control unit 11 may obtain the content of the descriptor according to the identifier of the descriptor, and send the content of the descriptor and the ADD instruction to the execution unit 12b; and the execution unit 12b may determine the data address of the data to be computed according to the content of the descriptor, and execute an ADD operation. When the operand is off-chip data, the execution unit 12b may load the data on the chip through an IO path according to the data address, then read the data from the on-chip data address of the operand, and execute the ADD operation.

In this way, the descriptor can be used to complete the data transmission, which may improve the data access efficiency of the processor.

According to the data processing apparatus provided in the embodiments of the present disclosure, the descriptor capable of describing the shape of the data is introduced, so that the data address can be determined via the descriptor during the execution of the first processing instruction, and the instruction generation method is simplified from the hardware side, thereby reducing the complexity of data access and improving the efficiency of the processor to access data.

It should be noted that although the data processing apparatus is described above by taking the above-mentioned embodiment as an example, those skilled in the art can understand that the present disclosure does not limit the specific structure of the data processing apparatus. In fact, users can set various modules flexibly according to personal preferences and/or actual application scenarios, as long as the modules conform to the technical solution of the present disclosure.

Fig. 3b shows a flowchart of a data processing method according to an embodiment of the present disclosure. As shown in Fig. 3b, the data processing method is applied to a processor, and the data processing method includes:

a step S41b: obtaining content of a descriptor according to an identifier of the descriptor when an operand of a decoded first processing instruction includes the identifier of the descriptor, where the descriptor is configured to indicate a shape of a tensor;
a step S42b: determining the data address of the data corresponding to the operand of the first processing instruction in the data storage space according to the content of the descriptor; and
a step S43b: according to the data address, executing data processing corresponding to the first processing instruction.

In a possible implementation method, the step S42b includes:
when the operand further includes a data description position for the descriptor, determining the data address of the data corresponding to the operand in the data storage space according to the content of the descriptor and the data description position.

In a possible implementation method, the descriptor is used to indicate the shape of N-dimensional tensor data, where N is a positive integer. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes the base address of the datum point of the descriptor in the data storage space of the tensor data. The shape parameter of the tensor data includes at least one of the followings:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the base address may include a start address of the data storage space.

In a possible implementation method, the first processing instruction includes a data access instruction, and the operand includes source data and target data. When the operand of the decoded first processing instruction includes the identifier of the descriptor, the step S41b may include: when the source data includes an identifier of the first descriptor and the target data includes an identifier of the second descriptor, obtaining content of the first descriptor and content of the second descriptor from the descriptor storage space.

The step S42b may include: obtaining the first data address of the source data and the second data address of the target data according to the content of the first descriptor and the content of the second descriptor.

The step S43b may include: reading data from the first data address and writing the data to the second data address.

In a possible implementation method, the first processing instruction includes a data access instruction, and the operand includes source data and target data. When the operand of the decoded first processing instruction includes the identifier of the descriptor, the step S41b may include: when the source data includes an identifier of the third descriptor, obtaining content of the third descriptor from the descriptor storage space.

The step S42b may include: obtaining the third data address of the source data according to the content of the third descriptor.

The step S43b may include: reading data from the third data address and writing the data to the data address of the target data.

In a possible implementation method, the first processing instruction includes a data access instruction, and the operand includes source data and target data. When the operand of the decoded first processing instruction includes the identifier of the descriptor, the step S41b may include: when the target data includes an identifier of the fourth descriptor, obtaining content of the fourth descriptor from the descriptor storage space.

The step S42b may include: obtaining the fourth data address of the target data according to the content of the fourth descriptor.

The step S43b may include: reading data from the data address of the source data and writing the data to the fourth data address.

In a possible implementation method, the first processing instruction includes an operation instruction.

The step S43b may further include: reading data from the data address and executing an operation corresponding to the operation instruction.

In a possible implementation method, the data processing method further includes:

decoding the received first processing instruction to obtain the decoded first processing instruction, where the decoded first processing instruction includes an operation code and one or more operands, where the operation code is used to indicate a processing type corresponding to the first processing instruction.

In a possible implementation method, the descriptor storage space is a storage space in the internal memory of the processor, and the data storage space is a storage space in the internal memory or the external memory of the processor.

In a possible implementation method, the present disclosure further provides an artificial intelligence chip including the data processing apparatus.

In a possible implementation method, the present disclosure provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transmission between the artificial intelligence chip and the external equipment; and the control device is configured to monitor the state of the artificial intelligence chip.

Fig. 4 shows a block diagram of a board card according to an embodiment of the present disclosure. As shown in Fig. 4, in addition to the above-mentioned chip 389, the board card may further include other supporting components, including but not limited to: a storage device 390, an interface apparatus 391, and a control device 392.

The storage device 390 is connected to the artificial intelligence chip through a bus, and is configured to store data. The storage device may include a plurality of groups of storage units 393, where each group of the storage units is connected with the artificial intelligence chip by a bus. It can be understood that each group of the storage units may be DDR SDRAM (Double Data Rate SDRAM (synchronized dynamic random access memory)).

DDR can double a speed of SDRAM without increasing a clock rate. DDR allows reading data on rising and falling edges of the clock pulse. DDR is twice as fast as standard SDRAM In an embodiment, the storage device may include 4 groups of the storage unit, where each group of the storage units may include a plurality of DDR4 particles (chips). In an embodiment, the inner part of the artificial intelligence chip may include four 72-bit DDR4 controllers, in which 64 bits of the four 72-bit DDR4 controllers are used for data transmission, and 8 bits of the four 72-bit DDR4 controllers are used for ECC check. It can be understood that when DDR4-3200 particles are used in each group of the storage units, the theoretical bandwidth of data transmission can reach 25600MB/s.

In an embodiment, each group of the storage units may include a plurality of DDR SDRAMs arranged in parallel. DDR can transmit data twice in one clock cycle. A controller for controlling DDR is provided in the chip, where the controller is used for controlling the data transmission and data storage of each storage unit.

The interface apparatus is electrically connected to the artificial intelligence chip, where the interface apparatus is configured to implement data transmission between the artificial intelligence chip and an external apparatus (such as a server or a computer). For example, in an embodiment, the interface apparatus may be a standard PCIE interface, and data to be processed is transmitted from the server to the chip through the standard PCIE interface to realize data transmission. Preferably, when a PCIE 3.0 X 16 interface is used for data transmission, the theoretical bandwidth can reach 16000MB/s. In another embodiment, the interface apparatus may further include other interfaces. The present disclosure does not limit the specific types of the interfaces, as long as the interface units can implement data transmission. In addition, the computation result of the artificial intelligence chip is still transmitted back to an external apparatus (such as a server) by the interface apparatus.

The control device is electrically connected to the artificial intelligence chip, where the control device is configured to monitor the state of the artificial intelligence chip. Specifically, the artificial intelligence chip may be electrically connected to the control device through an SPI interface, where the control device may include an MCU (Micro Controller Unit). The artificial intelligence chip may include a plurality of processing chips, a plurality of processing cores, or a plurality of processing circuits, and may drive a plurality of loads. Therefore, the artificial intelligence chip can be in different working state such as multi-load state and light-load state. The regulation of the working states of a plurality of processing chips, a plurality of processing cores and or a plurality of processing circuits in the neural network chip can be implemented by the control device.

In a possible implementation method, the present disclosure provides an electronic device including the artificial intelligence chip. The electronic device includes a data processing apparatus, a robot, a computer, a printer, a scanner, a tablet computer, an intelligent terminal, a mobile phone, an automobile data recorder, a navigator, a sensor, a webcam, a cloud server, a camera, a video camera, a projector, a watch, an earphone, a mobile storage, a wearable apparatus, a transportation means, a household electrical appliance, and/or a medical apparatus.

The transportation means may include an airplane, a ship, and/or a vehicle. The household electrical appliance may include a television, an air conditioner, a microwave oven, a refrigerator, an electric rice cooker, a humidifier, a washing machine, an electric lamp, a gas cooker, and a range hood. The medical apparatus may include a nuclear magnetic resonance spectrometer, a B-ultrasonic scanner, and/or an electrocardiograph.

A1. A data processing apparatus, comprising a control unit and an execution unit, wherein the control unit is configured to:

obtain content of a descriptor according to an identifier of the descriptor when an operand of a decoded first processing instruction includes the identifier of the descriptor, where the descriptor is configured to indicate a shape of a tensor; and
send the content of the descriptor and the first processing instruction to the execution unit, so that the execution unit executes the first processing instruction according to the content of the descriptor.

A2. The data processing apparatus of A1, wherein the execution unit is configured to:

determine a data address of data in a data storage space corresponding to the operand of the first processing instruction according to the content of the descriptor; and
execute data processing corresponding to the first processing instruction according to the data address.

A3. The data processing apparatus of A2, wherein the execution unit determining the data address of the data in the data storage space corresponding to the operand of the first processing instruction according to the content of the descriptor includes:
when the operand further includes a data description position for the descriptor, the execution unit is configured to determine the data address of the data corresponding to the operand in the data storage space according to the content of the descriptor and the data description position.

A4. The data processing apparatus of any one of A1-A3, wherein the descriptor is configured to indicate a shape of N-dimensional tensor data, where N is a positive integer, where

the content of the descriptor includes at least one shape parameter indicating the shape of the tensor data.

A5. The data processing apparatus of A4, wherein the descriptor is also used to indicate an address of the N-dimensional tensor data, where the content of the descriptor further includes at least one address parameter indicating the address of the tensor data.

A6. The data processing apparatus of A5, wherein the address parameter of the tensor data includes a base address of a datum point of the descriptor in the data storage space of the tensor data, where the shape parameter of the tensor data includes at least one of the followings:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A7. The data processing apparatus of A6, wherein the base address includes a start address of the data storage space.

A8. The data processing apparatus of any one of A2-A7, wherein the first processing instruction includes a data access instruction, and the operand includes source data and target data,

where the control unit is configured to:

obtain, when the source data includes an identifier of a first descriptor and the target data includes an identifier of a second descriptor, the content of the first descriptor and the content of the second descriptor from the descriptor storage space respectively; and
send the content of the first descriptor, the content of the second descriptor, and the first processing instruction to the execution unit,
where the execution unit is configured to:

obtain a first data address of the source data and a second data address of the target data respectively according to the content of the first descriptor and the content of the second descriptor; and
read data from the first data address and write the data to the second data address.

A9. The data processing apparatus of any one of A2-A7, wherein the first processing instruction includes the data access instruction, and the operand includes the source data and the target data,

where the control unit is configured to:

obtain, when the source data includes an identifier of a third descriptor, the content of the third descriptor from the descriptor storage space; and
send the content of the third descriptor and the first processing instruction to the execution unit,
where the execution unit is configured to:

obtain a third data address of the source data according to the content of the third descriptor; and
read data from the third data address and write the data to the data address of the target data.

A10. The data processing apparatus of any one of A2-A7, wherein the first processing instruction includes the data access instruction, and the operand includes the source data and the target data,

where the control unit is configured to:

obtain, when the target data includes an identifier of a fourth descriptor, the content of the fourth descriptor from the descriptor storage space; and
send the content of the fourth descriptor and the first processing instruction to the execution unit,
where the execution unit is configured to:

obtain a fourth data address of the target data according to the content of the fourth descriptor; and
read data from the data address of the source data and write the data to the fourth data address.

A11. The data processing apparatus of A2, wherein the first processing instruction includes an operation instruction, where the execution unit executing data processing corresponding to the first processing instruction according to the data address includes:

the execution unit is configured to read data from the data address and executing an operation corresponding to the operation instruction.

A12. The data processing apparatus of any one of A1-A11, wherein the control unit is further configured to: decode the received first processing instruction to obtain a decoded first processing instruction, where the decoded first processing instruction includes an operation code and one or more operands, and the operation code is used to indicate a processing type corresponding to the first processing instruction.

A13. The data processing apparatus of any one of A1-A12, wherein the descriptor storage space is a storage space in an internal memory of the control unit, and the data storage space is a storage space in an internal memory of the control unit or a storage space in an external memory connected to the control unit.

A14. A data processing method applied to a processor, comprising:

obtaining content of a descriptor according to an identifier of the descriptor when an operand of a decoded first processing instruction includes the identifier of the descriptor, where the descriptor is configured to indicate a shape of a tensor;
determining a data address of the data corresponding to the operand of the first processing instruction in the data storage space according to the content of the descriptor; and
according to the data address, executing data processing corresponding to the first processing instruction.

A15. The data processing method of A14, wherein the determining the data address of the data corresponding to the operand of the first processing instruction in the data storage space according to the content of the descriptor includes:

when the operand further includes a data description position for the descriptor, determining the data address of the data corresponding to the operand in the data storage space according to the content of the descriptor and the data description position.

A16. The data processing method of A14 or A15, wherein the descriptor is used to indicate a shape of N-dimensional tensor data, where N is a positive integer, where

the content of the descriptor includes at least one shape parameter indicating the shape of the tensor data.

A17. The data processing method of A16, wherein the descriptor is also used to indicate an address of the N-dimensional tensor data, where the content of the descriptor further includes at least one address parameter indicating the address of the tensor data.

A18. The data processing method of A17, wherein the address parameter of the tensor data includes a base address of a datum point of the descriptor in the data storage space of the tensor data, where the shape parameter of the tensor data includes at least one of the followings:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A19. The data processing method of A18, wherein the base address includes a start address of the data storage space.

A20. The data processing method of any one of A14-A19, wherein the first processing instruction includes a data access instruction, and the operand includes source data and target data,

where the obtaining the content of the descriptor according to the identifier of the descriptor when the operand of the decoded first processing instruction includes the identifier of the descriptor includes: obtaining, when the source data includes an identifier of a first descriptor and the target data includes an identifier of a second descriptor, the content of the first descriptor and the content of the second descriptor from the descriptor storage space respectively, where the determining the data address of the data corresponding to the operand of the first processing instruction in the data storage space according to the content of the descriptor includes: obtaining a first data address of the source data and a second data address of the target data according to the content of the first descriptor and the content of the second descriptor respectively, and

where the executing data processing corresponding to the first processing instruction according to the data address includes: reading data from the first data address and writing the data to the second data address.

A21. The data processing method of any one of A14-A19, wherein the first processing instruction includes the data access instruction, and the operand includes the source data and the target data,

where the obtaining the content of the descriptor according to the identifier of the descriptor when the operand of the decoded first processing instruction includes the identifier of the descriptor includes: obtaining, when the source data includes an identifier of a third descriptor, the content of the third descriptor from the descriptor storage space, where the determining the data address of the data corresponding to the operand of the first processing instruction in the data storage space according to the content of the descriptor includes: obtaining a third data address of the source data according to the content of the third descriptor, and

where the executing data processing corresponding to the first processing instruction according to the data address includes: reading data from the third data address and writing the data to the data address of the target data.

A22. The data processing method of any one of A14-A19, wherein the first processing instruction includes the data access instruction, and the operand includes the source data and the target data,

where the obtaining the content of the descriptor according to the identifier of the descriptor when the operand of the decoded first processing instruction includes the identifier of the descriptor includes: obtaining, when the target data includes an identifier of a fourth descriptor, the content of the fourth descriptor from the descriptor storage space, where the determining the data address of the data corresponding to the operand of the first processing instruction in the data storage space according to the content of the descriptor includes: obtaining a fourth data address of the target data according to the content of the fourth descriptor, and

where the executing data processing corresponding to the first processing instruction according to the data address includes: reading data from the data address of the source data and writing the data to the fourth data address.

A23. The data processing method of A14, wherein the first processing instruction includes an operation instruction, where the executing data processing corresponding to the first processing instruction according to the data address includes:

reading data from the data address and executing an operation corresponding to the operation instruction.

A24. The data processing method of any one of A14-A23, further comprising:

decoding the received first processing instruction to obtain a decoded first processing instruction, where the decoded first processing instruction includes an operation code and one or more operands, and the operation code is used to indicate a processing type corresponding to the first processing instruction.

A25. The data processing method of any one of A14-A24, wherein the descriptor storage space is a storage space in the internal memory of the processor, and the data storage space is a storage space in the internal memory or the external memory of the processor.

A26. An artificial intelligence chip comprising the data processing apparatus of any one of A1-A13.

A27. An electronic device comprising the artificial intelligence chip of A26.

A28. A board card comprising a storage device, an interface apparatus, a control device, and the artificial intelligence chip of A26, wherein

the artificial intelligence chip is connected to the storage device, the control device, and the interface apparatus, respectively;

the storage device is configured to store data;

the interface apparatus is configured to implement data transmission between the artificial intelligence chip and an external equipment; and

the control device is configured to monitor a state of the artificial intelligence chip.

A29. The board card of A28, wherein

the storage device includes a plurality of groups of storage units, where each group of the storage units is connected with the artificial intelligence chip by a bus, and the storage units are DDR SDRAM,

the chip includes a DDR controller configured to control data transmission and data storage of each storage unit, and the interface apparatus is a standard PCIE interface.

As the complexity of AI algorithms increases, the amount of data and data dimensions that need to be processed are increasing, therefore, multi-core and/or multi-chip are usually required for data processing. When data is synchronized between cores or chips, a synchronization method adopting the related-art has large synchronization overhead and low processing efficiency.

An embodiment of the present disclosure provides a data synchronization method. Fig. 1c shows a flowchart of a data synchronization method according to an embodiment of the present disclosure. The data synchronization method can be applied to a first processor, where the first processor may include a general-purpose processor (such as a CPU (central processing unit), a GPU (graphics processor)) and a dedicated processor (such as an AI processor, a scientific computing processor, or a digital signal processor, *etc.*). This disclosure does not limit the type of the first processor.

As shown in Fig. 1c, the data synchronization method includes:

in a step S11c, generating a descriptor synchronization instruction according to a descriptor of tensor data to be synchronized, where the descriptor synchronization instruction includes an identifier of the descriptor and/or content of the descriptor, and the descriptor is used to indicate a shape of the tensor data to be synchronized; and

in a step S12c, sending the descriptor synchronization instruction to a second processor, where the descriptor synchronization instruction is used to instruct the second processor to obtain the tensor data to be synchronized according to the descriptor synchronization instruction.

For example, the tensor data to be synchronized may include N-dimensional tensor data (N is an integer greater than or equal to 0, for example, N=1, 2, or 3), where the tensor may have various forms of data composition, and the tensor may have different dimensions, for example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship between a plurality of pieces of tensor data cannot be determined, as a result, the processor is inefficient in accessing tensor data, and the data synchronization is also complicated.

In this case, a descriptor (tensor descriptor) may be set to indicate the shape of the tensor (N-dimensional tensor data), where the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.*) of the 3-dimensional tensor data in three dimensions. It should be understood that those skilled in the art can set the value of N according to actual needs, which is not limited in the present disclosure.

In a possible implementation method, the descriptor may include an identifier and content, and the identifier of the descriptor may be used to distinguish the descriptor, for example, the identifier may be used to number the descriptor and the content of the descriptor may include at least one shape parameter(such as a size of each dimension of the tensor, *etc.*) representing the shape of the tensor data, and may also include at least one address parameter (such as a base address of a datum point) representing an address of the tensor data. The present disclosure does not limit the specific parameters included in the content of the descriptor. By using the descriptor to indicate tensor data, the shape of tensor data can be represented, and related information such as the relationship among a plurality of pieces of tensor data can be determined, so as to improve the access efficiency of tensor data and reduce the complexity of data synchronization.

In a possible implementation method, during data processing, data synchronization between a plurality of processors (such as a plurality of cores of an artificial intelligence chip) may be executed, for example, an operation result of a processor A1 may be synchronized to a processor A2 as input data of another operation. In this case, a data synchronization mechanism based on the descriptor can be used to achieve data synchronization.

In a possible implementation method, the first processor is a sender for data synchronization, and the second processor is a receiver for data synchronization. When there is tensor data to be synchronized, in the step S11c, the first processor may generate the descriptor synchronization instruction according to the descriptor of the tensor data, and in the step S12c, the first processor may send the descriptor synchronization instruction to the second processor to be synchronized. The second processor may include a general-purpose processor (such as a CPU (central processing unit), a GPU (graphics processor)) and a dedicated processor (such as an AI processor, a scientific computing processor, or a digital signal processor, *etc.*). The type of the second processor may be the same as or different from the type of the first processor, and this disclosure does not limit the type of the second processor.

In a possible implementation method, the first processor can actively execute data synchronization on the second processor. For example, when the first processor completes an operation and obtain an operation result (tensor data), the first processor actively synchronizes data with the second processor that needs to use the operation result. In another example, the first processor may also synchronize data with the second processor in response to a synchronization request of the second processor, for example, when receiving a synchronization request instruction from the second processor, the first processor starts executing data synchronization on the second processor. The present disclosure does not limit the timing of the start of data synchronization.

In a possible implementation method, when the first processor determines that there is tensor data to be synchronized, the first processor may obtain the descriptor of the tensor data. The descriptor may be a registered (created) descriptor indicating the shape of the tensor data, or a new descriptor registered (created) according to the shape parameter of the tensor data, which is not limited in the present disclosure.

In a possible implementation method, the descriptor synchronization instruction may be generated according to the descriptor of the tensor data, and the descriptor synchronization instruction includes the identifier of the descriptor and/or the content of the descriptor. If a descriptor indicating the tensor data to be synchronized has been registered in the second processor, the descriptor synchronization instruction may only include the identifier of the descriptor (for example, when the identifier of the descriptor is TR1, the descriptor synchronization instruction is represented as Send TR1) to instruct the second processor to synchronize the tensor data according to the identifier of the descriptor (TR1). If the descriptor indicating the tensor data to be synchronized is not registered in the second processor, the descriptor synchronization instruction may include the content of the descriptor, or include both the identifier of the descriptor and the content of the descriptor to instruct the second processor to synchronize the tensor data according to the content of the descriptor. The present disclosure does not limit the specific content of the descriptor synchronization instruction.

In a possible implementation method, after the descriptor synchronization instruction is generated, the descriptor synchronization instruction may be sent to the second processor to instruct the second processor to obtain the tensor data to be synchronized according to the descriptor synchronization instruction. If the descriptor synchronization instruction includes the identifier of the descriptor, the second processor may obtain the content of the descriptor according to the identifier of the descriptor, and then obtain the tensor data indicated by the descriptor according to the content of the descriptor, thereby synchronizing the tensor data. If the descriptor synchronization instruction includes the content of the descriptor, the second processor may directly obtain the tensor data indicated by the descriptor according to the content of the descriptor, thereby synchronizing the tensor data.

According to the data synchronization method provided in the embodiment of the present disclosure, by setting a descriptor indicating the shape of tensor data, when data synchronization is needed, a descriptor synchronization instruction can be generated according to the descriptor of the tensor data to be synchronized and sent to the second processor to instruct the second processor to obtain the tensor data to be synchronized according to the descriptor synchronization instruction, thereby reducing synchronization overhead and the complexity of data synchronization, and improving the efficiency of data synchronization.

In a possible implementation method, the data synchronization method further includes: determining the descriptor of the tensor data to be synchronized according to the descriptor synchronization request instruction received from the second processor.

For example, the first processor may execute data synchronization on the second processor in response to the synchronization request of the second processor. The descriptor synchronization request instruction received from the second processor may include information of the tensor data to be synchronized, such as an identifier indicating the descriptor of the tensor data to be synchronized, data characteristics of the tensor data to be synchronized, and the like, where the data characteristics of the tensor data may include information such as the shape, source, and address of the tensor data. The present disclosure does not limit the specific content of the descriptor synchronization request instruction. According to the information in the descriptor synchronization request instruction, the first processor may determine the descriptor of the tensor data to be synchronized, and then generate the descriptor synchronization instruction.

According to the data synchronization method provided in the present disclosure, the descriptor of the tensor data to be synchronized can be determined according to the synchronization request of the second processor, so as to generate a descriptor synchronization instruction, thereby avoiding unnecessary data synchronization and improving the efficiency of data synchronization.

In a possible implementation method, the descriptor synchronization request instruction includes the identifier of the descriptor. The determining the descriptor of the tensor data to be synchronized according to the descriptor synchronization request instruction received from the second processor includes: parsing the descriptor synchronization request instruction to obtain the identifier of the descriptor; and determining the descriptor of the tensor data to be synchronized according to the identifier of the descriptor.

For example, if descriptors indicating the tensor data have been registered in both the first processor and the second processor, and the identifiers of the descriptors registered in the first processor and the second processor are the same or correspond to each other, the descriptor synchronization request instruction may include the identifiers of the descriptors, for example, when an identifier of a descriptor is TR1, the descriptor synchronization request instruction is represented as Receive TR1. The first processor may parse the descriptor synchronization request instruction received from the second processor to obtain the identifier of the descriptor, and then determine the descriptor of the tensor data to be synchronized according to the identifier of the descriptor, so as to generate the descriptor synchronization instruction.

According to the data synchronization method provided in the present disclosure, the descriptor of the tensor data to be synchronized can be determined according to the identifier of the descriptor in the request instruction, so as to achieve synchronization of the tensor data, thereby reducing the amount of data transmitted during synchronization and improving processing efficiency.

In a possible implementation method, the descriptor synchronization request instruction includes data characteristics of the tensor data to be synchronized. The determining the descriptor of the tensor data to be synchronized according to the descriptor synchronization request instruction received from the second processor includes: parsing the descriptor synchronization request instruction to obtain the data characteristics of the tensor data to be synchronized; and determining the descriptor of the tensor data to be synchronized according to the data characteristics of the tensor data to be synchronized.

For example, if a descriptor indicating the tensor data has not been registered in a second first processor; or a descriptor indicating the tensor data has been registered in the first processor, but the identifier of the descriptor registered in the second processor does not correspond to the identifier of the descriptor registered in the second processor, then the descriptor synchronization request instruction may include the data characteristics of the tensor data to be synchronized. The first processor may parse the descriptor synchronization request instruction received from the second processor to obtain the data characteristics of the tensor data to be synchronized, and then determine the tensor data to be synchronized and its descriptor according to the data characteristics of the tensor data to be synchronized in order to generate the descriptor synchronization instruction.

In a possible implementation method, the data characteristics of the tensor data to be synchronized may include information such as the shape, source, and address of the tensor data. For example, the tensor data may be from a K-th sender (a K-th processor), the tensor data may be from an operation result of a convolution operation numbered 200, the address of the tensor data may be a specific address area (for example, an address ADDR0-ADDR127), and the shape of the tensor data may be a specified shape (for example, the tensor data may be a 20*10 two-dimensional tensor). Those skilled in the art can set the data characteristics of the tensor data to be synchronized according to the actual situation, which is not limited in the present disclosure.

In a possible implementation method, according to the data characteristics, the first processor may find the tensor data to be synchronized, and determine the descriptor of the tensor data to be synchronized, for example, the first processor may directly obtain a descriptor or register a corresponding descriptor. According to the descriptor of the tensor data to be synchronized, the first processor may generate and send a descriptor synchronization instruction to instruct the second processor to synchronize the tensor data.

By adopting the above-mentioned data synchronization method provided by the present disclosure, the descriptor of the tensor data to be synchronized can be determined according to the data characteristics in the request instruction, so as to achieve the synchronization of the tensor data. In this way, there is no need to transmit tensor data itself during synchronization, which reduces the amount of transmitted data and synchronization overhead, and improves processing efficiency.

In a possible implementation method, the descriptor synchronization instruction includes the content of the descriptor of the tensor data to be synchronized. The step S11c may include: when a storage address of the tensor data to be synchronized is in a shared storage space, generating the descriptor synchronization instruction according to the content of the descriptor of the tensor data to be synchronized, to instruct the second processor to obtain the tensor data to be synchronized from the shared storage space according to the content of the descriptor of the tensor data to be synchronized.

For example, a plurality of processors (a plurality of cores) may have a shared storage space, for example, an off-chip memory that can be accessed by both the first processor and the second processor. The shared storage space may be a storage space in which a plurality of cores (a plurality of processors) can access data, or a storage space in which some cores (some processors) can access data. The shared storage space for cores may be preset, and the present disclosure does not limit the setting method of the shared storage space.

In a possible implementation method, if the storage address of the tensor data to be synchronized is in the shared storage space, since the second processor may also access data from the shared storage space, the second processor can directly read the tensor data according to the content of the descriptor to synchronize the tensor data. In this case, the descriptor synchronization instruction may include the content of the descriptor of the tensor data to be synchronized, in other words, the descriptor synchronization instruction may be generated according to the content of the descriptor of the tensor data to be synchronized. After receiving the descriptor synchronization instruction, the second processor may parse the instruction to obtain the content of the descriptor; according to the content of the descriptor, the second processor may determine the data address of the tensor data to be synchronized and obtain the tensor data to be synchronized from the shared storage space, thereby achieving the entire synchronization process.

By adopting the above-mentioned data synchronization method provided by the present disclosure, unnecessary data transmission can be avoided, the amount of transmitted data can be reduced, and the synchronization efficiency can be improved.

In a possible implementation method, the step S11c may include:

storing the content of the descriptor of the tensor data to be synchronized to a storage space of synchronized data; and generating the descriptor synchronization instruction according to the address of the content of the descriptor in the storage space of synchronized data to instruct the second processor to obtain the content of the descriptor of the tensor data to be synchronized from the storage space of synchronized data.

For example, a plurality of processors (a plurality of cores) may have a storage space of synchronized data which is dedicated to store the synchronized data. The storage space of synchronized data may be the above-mentioned shared storage space, or a part of the shared storage space, or a storage space different from the shared storage space, which is not limited in the present disclosure.

In a possible implementation method, the storage space of synchronized data may be a storage space in which a plurality of cores (a plurality of processors) can access synchronized data, or a storage space in which part of cores (part of processors) can access synchronized data, which is not limited in the present disclosure.

In a possible implementation method, after determining the descriptor of the tensor data to be synchronized, the first processor may store the content of the descriptor in the storage space of synchronized data, and generate and send the descriptor synchronization instruction according to the address of the content of the descriptor in the storage space of synchronized data. After receiving the descriptor synchronization instruction, the second processor may parse the instruction to obtain the storage address of the content of the descriptor; according to the storage address, the second processor may obtain the content of the descriptor of the tensor data to be synchronized from the storage space of synchronized data, and then determine the data address of the tensor data to be synchronized according to the content of the descriptor, and obtain the tensor data to be synchronized, thereby achieving the entire synchronization process.

By adopting the above-mentioned data synchronization method provided by the present disclosure, the amount of data transmitted between processors during synchronization can be further reduced, and synchronization efficiency can be improved.

In a possible implementation method, the step SIIc may include:

> when the storage address of the tensor data to be synchronized is in a non-shared storage space, storing the tensor data to be synchronized to the shared storage space;
> generating the descriptor of the tensor data to be synchronized according to the address of the tensor data to be synchronized in the shared storage space; and
> generating the descriptor synchronization instruction according to the content of the descriptor of the tensor data to be synchronized, to instruct the second processor to obtain the tensor data to be synchronized from the shared storage space according to the content of the descriptor of the tensor data to be synchronized.

For example, the first processor may have a non-shared storage space in which the first processor may access data, and the second processor cannot access the non-shared storage space of the first processor, so that the second processor cannot access data in the non-shared storage space. If the storage address of the tensor data to be synchronized is in the non-shared storage space, the second processor cannot directly obtain the tensor data. In this case, the first processor may transfer the tensor data to be synchronized and store the tensor data to be synchronized to the shared storage space, so that the second processor can access the tensor data. After the tensor data to be synchronized is transferred and stored into the shared storage space, if a descriptor indicating the tensor data to be synchronized is not registered in the first processor, or a descriptor indicating the tensor data in the non-shared storage space is registered and the descriptor cannot be modified (for example, the descriptor is being operated), the first processor may generate a descriptor of the tensor data to be synchronized, in other words, the first processor may register a new descriptor to indicate the tensor data in the shared storage space.

In a possible implementation method, after generating the descriptor, the first processor may generate the descriptor synchronization instruction according to the content of the descriptor. After receiving the descriptor synchronization instruction, the second processor may parse the instruction to obtain the content of the descriptor; according to the content of the descriptor, the second processor may determine the data address of the tensor data to be synchronized, and obtain the tensor data to be synchronized from the shared storage space, thereby achieving the entire synchronization process.

By adopting the above-mentioned data synchronization method provided by the present disclosure, the tensor data to be synchronized in the non-shared storage space can be actively transferred and stored into the shared storage space, so that the second processor can obtain the tensor data to be synchronized, thereby reducing the amount of data transmitted between processors during synchronization, and improving the synchronization efficiency.

In a possible implementation method, the step SIIc may include:

> when the storage address of the tensor data to be synchronized is in the non-shared storage space, storing the tensor data to be synchronized to the shared storage space;
> modifying the descriptor of the tensor data to be synchronized according to the address of the tensor data to be synchronized in the shared storage space; and
> generating the descriptor synchronization instruction according to the content of the descriptor of the tensor data to be synchronized to instruct the second processor to obtain the tensor data to be synchronized from the shared storage space according to the content of the descriptor of the tensor data to be synchronized.

For example, similar to the above description, if the tensor data to be synchronized is in the non-shared storage space of the first processor, the first processor may transfer the tensor data to be synchronized and store the tensor data to be synchronized into the shared storage space. After the tensor data to be synchronized is transferred and stored into the shared storage space, if a descriptor indicating the tensor data in the non-shared storage space has been registered in the first processor and the descriptor can be modified (for example, the descriptor has not being operated), the first processor may directly modify the descriptor of the tensor data to be synchronized, so that the descriptor indicates the tensor data in the shared storage space.

In a possible implementation method, after modifying the descriptor, the first processor may generate the descriptor synchronization instruction according to the content of the descriptor. After receiving the descriptor synchronization instruction, the second processor may parse the instruction to obtain the content of the descriptor; according to the content of the descriptor, the second processor may determine the data address of the tensor data to be synchronized, and obtain the tensor data to be synchronized from the shared storage space, thereby achieving the entire synchronization process.

By adopting the above-mentioned data synchronization method provided by the present disclosure, the tensor data to be synchronized in the non-shared storage space can be actively transferred and stored into the shared storage space, which could reduce the amount of data transmitted between processors during synchronization and improve the synchronization efficiency; in addition, the first processor does not need to create a new descriptor, which could save limited descriptor resources.

Fig. 3c1 shows a flowchart of a data synchronization method according to an embodiment of the present disclosure. As shown in Fig. 3c1, the data synchronization method includes:

in a step S21c, parsing a descriptor synchronization instruction received from a first processor to obtain a descriptor of tensor data to be synchronized, where the descriptor synchronization instruction includes an identifier of the descriptor and/or content of the descriptor, and the descriptor is used to indicate a shape of the tensor data to be synchronized; and

in a step S22c, obtaining the tensor data to be synchronized according to the descriptor of the tensor data to be synchronized.

For example, the first processor (sender) can actively execute data synchronization on a second processor (receiver). For example, when the first processor completes an operation and obtain an operation result (tensor data), the first processor actively executes data synchronization on the second processor that needs to use the operation result.

In a possible implementation method, when receiving the descriptor synchronization instruction from the first processor, the second processor may parse the descriptor synchronization instruction to obtain the descriptor of the tensor data to be synchronized (such as the identifier of the descriptor and/or content of the descriptor).

In a possible implementation method, if the descriptor synchronization instruction includes only the identifier of the descriptor, the second processor may internally search for the content of the descriptor corresponding to the identifier of the descriptor, and then obtain the tensor data to be synchronized according to the content of the descriptor, thereby achieving synchronization of the tensor data.

In a possible implementation method, if the descriptor synchronization instruction includes the identifier of the descriptor and the content of the descriptor, the second processor may search for a descriptor corresponding to an identifier of a descriptor, and update original content of the descriptor according to the content of the descriptor in the descriptor synchronization instruction; the second processor may further obtain the tensor data to be synchronized according to the updated content of the descriptor, thereby achieving synchronization of the tensor data.

In a possible implementation method, if the descriptor synchronization instruction includes the content of the descriptor, the second processor may register a descriptor indicating the tensor data to be synchronized according to the content of the descriptor, and obtain the tensor data to be synchronized according to the content of the descriptor, thereby achieving synchronization of tensor data.

According to the data synchronization method provided in the embodiment of the present disclosure, when data needs to be synchronized, by setting a descriptor indicating the shape of tensor data, a descriptor synchronization instruction may be obtained according to a descriptor of tensor data to be synchronized and send to a second processor to instruct the second processor to obtain the tensor data to be synchronized according to the descriptor synchronization instruction, thereby reducing synchronization overhead, reducing the complexity of data synchronization, and improving the efficiency of data synchronization.

In a possible implementation method, the descriptor synchronization instruction includes the content of the descriptor of the tensor data to be synchronized. The step S22c may include:

obtaining the tensor data to be synchronized from a shared storage space according to the content of the descriptor of the tensor data to be synchronized.

For example, if the storage address of the tensor data to be synchronized is in the shared storage space, the second processor may access the data from the shared storage space. In this case, the descriptor synchronization instruction may include the content of the descriptor of the tensor data to be synchronized. After receiving the descriptor synchronization instruction, the second processor may parse the instruction to obtain the content of the descriptor; according to the content of the descriptor, the second processor may determine the data address of the tensor data to be synchronized and obtain the tensor data to be synchronized from the shared storage space, thereby achieving the entire synchronization process.

By adopting the above-mentioned data synchronization method provided by the present disclosure, unnecessary data transmission can be avoided, the amount of transmitted tensor data can be reduced, and the synchronization efficiency can be improved.

In a possible implementation method, the descriptor synchronization instruction includes an address of the content of the descriptor of the tensor data to be synchronized in a storage space of synchronized data. The step S22c may include:

obtaining the content of the descriptor of the tensor data to be synchronized from the storage space of synchronized data according to the address of the content of the descriptor of the tensor data to be synchronized in the storage space of synchronized data; and

obtaining the tensor data to be synchronized from the shared storage space according to the content of the descriptor of the tensor data to be synchronized.

For example, after determining the descriptor of the tensor data to be synchronized, the first processor may store the content of the descriptor in the storage space of synchronized data, and generate and send the descriptor synchronization instruction according to the address of the content of the descriptor in the storage space of synchronized data. After receiving the descriptor synchronization instruction, the second processor may parse the instruction to obtain the storage address of the content of the descriptor; according to the storage address, the second processor may obtain the content of the descriptor of the tensor data to be synchronized from the storage space of synchronized data, and then determine the data address of the tensor data to be synchronized according to the content of the descriptor, and obtain the tensor data to be synchronized, thereby achieving the entire synchronization process.

By adopting the above-mentioned data synchronization method provided by the present disclosure, the amount of data transmitted between processors during synchronization can be further reduced, and synchronization efficiency can be improved.

Fig. 3c2 shows a flowchart of a data synchronization method according to an embodiment of the present disclosure. The data synchronization method is applied to the second processor. As shown in Fig. 3c2, the data synchronization method includes:

in a step S31c, when there is tensor data to be synchronized, generating a descriptor synchronization request instruction, where the descriptor synchronization request instruction is used to instruct a first processor to send a descriptor of the tensor data to be synchronized according to the descriptor synchronization request instruction, and the descriptor is used to indicate the shape of the tensor data to be synchronized; and

in a step S32c, sending the descriptor synchronization request instruction to the first processor.

For example, when there is tensor data to be synchronized in a second processor, the descriptor synchronization request instruction may be sent to the first processor, so as to obtain the tensor data to be synchronized. The second processor may generate the descriptor synchronization request instruction according to the information of the tensor data to be synchronized, such as an identifier of the descriptor indicating the tensor data to be synchronized, and data characteristics of the tensor data to be synchronized. The present disclosure does not limit the specific content of the descriptor synchronization request instruction. According to the information in the descriptor synchronization request instruction, the first processor may determine the descriptor of the tensor data to be synchronized, and then generate the descriptor synchronization instruction.

By adopting the above-mentioned data synchronization method provided by the present disclosure, a synchronization request may be initiated when synchronization is needed to improve the efficiency of data synchronization.

In a possible implementation method, the descriptor synchronization request instruction includes an identifier of the descriptor and/or data characteristics of the tensor data to be synchronized, so that the first processor can determine the tensor data to be synchronized. The data characteristics of the tensor data may include information such as the shape, source, and address of the tensor data. Those skilled in the art can set the data characteristics of the tensor data to be synchronized according to the actual situation, which is not limited in the present disclosure.

In a possible implementation method, the data synchronization method further includes:

parsing the descriptor synchronization instruction received from the first processor to obtain the descriptor of tensor data to be synchronized, where the descriptor synchronization instruction includes the identifier of the descriptor and/or the content of the descriptor; and
obtaining the tensor data to be synchronized according to the descriptor of the tensor data to be synchronized.

For example, if descriptors indicating the tensor data have been registered on both the first processor and the second processor, and the identifiers of the descriptors are the same or correspond to each other, the descriptor synchronization request instruction may include the identifiers of the descriptors, for example, when an identifier of a descriptor is TR1, the descriptor synchronization request instruction is represented as Receive TR1. The first processor may parse the descriptor synchronization request instruction received from the second processor to obtain the identifier of the descriptor, and then determine the descriptor of the tensor data to be synchronized according to the identifier of the descriptor, so as to generate the descriptor synchronization instruction.

In a possible implementation method, when receiving the descriptor synchronization instruction, the second processor may parse the descriptor synchronization instruction to obtain the descriptor of the tensor data to be synchronized (the identifier of the descriptor and/or the content of the descriptor). If the descriptor synchronization instruction includes only the identifier of the descriptor, the second processor may internally search for the content of the descriptor corresponding to the identifier of the descriptor, and then obtain the tensor data to be synchronized according to the content of the descriptor, thereby achieving synchronization of the tensor data.

In a possible implementation method, if the descriptor synchronization instruction includes the identifier of the descriptor and the content of the descriptor, the second processor may search for the descriptor corresponding to the identifier of the descriptor, and update original content of the descriptor according to the content of the descriptor in the descriptor synchronization instruction; the second processor may further obtain the tensor data to be synchronized according to the updated content of the descriptor, thereby achieving synchronization of the tensor data.

In a possible implementation method, if the descriptor synchronization instruction includes the content of the descriptor, the second processor may register a descriptor indicating the tensor data to be synchronized according to the content of the descriptor, and obtain the tensor data to be synchronized according to the content of the descriptor, thereby achieving synchronization of tensor data.

By adopting the above-mentioned data synchronization method provided by the present disclosure, the complexity of data synchronization can be reduced and the efficiency of data synchronization can be improved.

In a possible implementation method, the descriptor synchronization instruction includes the content of the descriptor of the tensor data to be synchronized. The step of obtaining the tensor data to be synchronized according to the descriptor of the tensor data to be synchronized may include:

obtaining the tensor data to be synchronized from the shared storage space according to the content of the descriptor of the tensor data to be synchronized.

For example, if the storage address of the tensor data to be synchronized is in the shared storage space, the second processor may access the data from the shared storage space. In this case, the descriptor synchronization instruction may include the content of the descriptor of the tensor data to be synchronized. After receiving the descriptor synchronization instruction, the second processor may parse the instruction to obtain the content of the descriptor; according to the content of the descriptor, the second processor may determine the data address of the tensor data to be synchronized and obtain the tensor data to be synchronized from the shared storage space, thereby achieving the entire synchronization process.

By adopting the above-mentioned data synchronization method provided by the present disclosure, unnecessary data transmission can be avoided, the amount of transmitted tensor data can be reduced, and the synchronization efficiency can be improved.

In a possible implementation method, the descriptor synchronization instruction includes an address of the content of the descriptor of the tensor data to be synchronized in a storage space of synchronized data. The steps of obtaining the tensor data to be synchronized according to the descriptor of the tensor data to be synchronized may include:

obtaining the content of the descriptor of the tensor data to be synchronized from the storage space of synchronized data according to the address of the content of the descriptor of the tensor data to be synchronized in the storage space of synchronized data; and
obtaining the tensor data to be synchronized from the shared storage space according to the content of the descriptor of the tensor data to be synchronized.

After determining the descriptor of the tensor data to be synchronized, the first processor may store the content of the descriptor in the storage space of synchronized data, and generate and send the descriptor synchronization instruction according to the address of the content of the descriptor in the storage space of synchronized data. After receiving the descriptor synchronization instruction, the second processor may parse the instruction to obtain the storage address of the content of the descriptor; according to the storage address, the second processor may obtain the content of the descriptor of the tensor data to be synchronized from the storage space of synchronized data, and then determine the data address of the tensor data to be synchronized according to the content of the descriptor, and obtain the tensor data to be synchronized, thereby achieving the entire synchronization process.

By adopting the above-mentioned data synchronization method provided by the present disclosure, the amount of data transmitted between processors during synchronization can be further reduced, and synchronization efficiency can be improved.

In a possible implementation method, the identifier and content of the descriptor can be stored in the descriptor storage space, which may be a storage space in an internal memory of the processor (such as a register, an on-chip SRAM or other medium cache, *etc.*). The data storage space of the tensor data indicated by the descriptor may be a storage space in an internal memory of the processor (e.g., an on-chip cache) or a storage space in an external memory (an off-chip memory) connected to the processor. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area, for example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address unit used to represent an address. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register can be used as the descriptor storage space to store the identifier and content of the descriptor, and an on-chip cache can be used as the data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of the register is 0, the identifier of the stored descriptor is 0. When the descriptor in the register is valid, an area can be allocated in a caching space (such as creating a tensor cache unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be provided for the tensor data, and a start address of each tensor data in the data storage space corresponds to the identifier of the descriptor. In this case, the processor can determine the data address of the tensor data according to the content of the descriptor.

In a possible implementation method, when the data address of the data storage space corresponding to the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + an address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is other data than the first data block in the data storage space, the base address of the descriptor is the physical address of the data block in the data storage space.

In a possible implementation method, the shape parameter of the tensor data includes at least one of the followings: a size of the data storage space of the tensor data in at least one of N dimensions, a size of the storage area in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a 3-dimensional data, the descriptor can use a coordinate (x, y, z) to represent the shape of the tensor data, and the data description position of the tensor data can be represented by the coordinate (x, y, z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

Fig. 2 shows a schematic diagram of a data storage space according to an embodiment of the present disclosure. As shown in Fig. 2, a data storage space 21 stores a 2-dimensional data in a row-first manner, where the data storage space 21 can be represented by (x, y) (where the X axis extends horizontally to the right, and the Y axis extends vertically down), a size in the X axis direction (a size of each row) is ori_x (which is not shown in the figure), a size in the Y axis direction (total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the X axis direction is represented as offset x, an offset 24 of the data block 23 in the Y axis direction is represented as offset_y, the size in the X axis direction is represented as size_x, and the size in the Y axis direction is represented as size_y.

In a possible implementation method, when the descriptor is used to define the data block 23, the datum point of the descriptor may be a first data block of the data storage space 21, the base address of the descriptor is the start address PA_start of the data storage space 21, and then the content of the descriptor of the data block 23 can be determined according to the size ori x of the data storage space 21 in the X axis, the size ori_y in the Y axis, the offset offset y of the data block 23 in the Y axis direction, the offset offset x of the data block 23 in the X axis direction, the size size x in the X axis direction, and the size size_y in the Y axis direction.

In a possible implementation method, the following formula (1) can be used to represent the content of the descriptor:

$$\begin{cases} \text{X direction: } ori\_x, offset\_x, size\_x \\ \text{Y direction: } ori\_y, offset\_y, size\_y \\ \qquad\qquad PA\_start \end{cases} \qquad (1)$$

It should be understood that although the descriptor describes a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 2 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (for example, a piece of data at position (2, 2)) in the data storage space 21 is selected as a datum point, and a physical address of the selected data in the data storage space is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} X \quad \text{direction: } x\_min, x\_max \\ Y \quad \text{direction: } y\_min, y\_max \\ \qquad PA\_base \end{cases} \tag{2}$$

It should be understood that although the top left vertex and the bottom right vertex are used to determine the content of the descriptor in the above-mentioned example, those skilled in the art may set at least two specific vertices according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f(x, \ y, \ z) \\ PA\_base \end{cases} \tag{3}$$

It should be understood that those skilled in the art can set the mapping relationship between the data description position and the data address according to actual situations, which is not limited in the present disclosure.

When the formula (1) is used to represent the content of the descriptor, for any datum point in the tensor data, the data description position is set to $(x\_q, y\_q)$, and then the data address $PA2_{(x,y)}$ of the data in the data storage space can be determined using the following formula (4):

$$PA2_{(x,y)} = PA\_start + \left( offset\_y + y_q - 1 \right) * ori\_x + \left( offset\_x + x_q \right) \tag{4}$$

By adopting the above-mentioned method provided by the present disclosure, the processor may compute the data address of the tensor data indicated by the descriptor in the data storage space according to the content of the descriptor, and then execute processing (data operation, data synchronization, *etc.*) according to the address, Therefore, the complexity of data access can be reduced, and the processing efficiency of the processor can be improved.

Fig. 3c3 shows a block diagram of a data synchronization apparatus according to an embodiment of the present disclosure. The data synchronization apparatus is applied to a first processor. As shown in Fig. 3c3, the data synchronization apparatus may include:

a synchronization instruction generating module 51c configured to generate a descriptor synchronization instruction according to a descriptor of tensor data to be synchronized, where the descriptor synchronization instruction includes an identifier of the descriptor and/or content of the descriptor, and the descriptor is used to indicate a shape of the tensor data to be synchronized; and

a synchronization instruction sending module 52c configured to send the descriptor synchronization instruction to a second processor, where the descriptor synchronization instruction is used to instruct the second processor to obtain the tensor data to be synchronized according to the descriptor synchronization instruction.

In a possible implementation method, the data synchronization apparatus may further include: a first descriptor determining module configured to determine the descriptor of the tensor data to be synchronized according to a descriptor synchronization request instruction received from the second processor.

In a possible implementation method, the descriptor synchronization request instruction includes the identifier of the descriptor, where the first descriptor determining module includes:

a first parsing sub-module configured to parse the descriptor synchronization request instruction to obtain the identifier of the descriptor; and

a first determining sub-module configured to determine the descriptor of the tensor data to be synchronized according to the identifier of the descriptor.

In a possible implementation method, the descriptor synchronization request instruction includes data characteristics of the tensor data to be synchronized, where the first descriptor determining module includes:

a second parsing sub-module configured to parse the descriptor synchronization request instruction to obtain data characteristics of tensor data to be synchronized; and
a second determining sub-module configured to determine the descriptor of the tensor data to be synchronized according to the data characteristics of the tensor data to be synchronized.

In a possible implementation method, the descriptor synchronization instruction includes the content of the descriptor of the tensor data to be synchronized, where the synchronization instruction generating module includes:
a first generating sub-module configured to generate the descriptor synchronization instruction according to the content of the descriptor of the tensor data to be synchronized when the storage address of the tensor data to be synchronized is in the shared storage space to instruct the second processor to obtain the tensor data to be synchronized from the shared storage space according to the content of the descriptor of the tensor data to be synchronized.

In a possible implementation method, the synchronization instruction generating module includes:

a first storage sub-module configured to store the content of the descriptor of the tensor data to be synchronized into the storage space of synchronized data; and
a second generating sub-module configured to generate the descriptor synchronization instruction according to the address of the content of the descriptor in the storage space of synchronized data to instruct the second processor to obtain the content of the descriptor of the tensor data to be synchronized from the storage space of synchronized data.

In a possible implementation method, the synchronization instruction generating module includes:

a second storage sub-module configured to store the tensor data to be synchronized to the shared storage space when the storage address of the tensor data to be synchronized is in a non-shared storage space;
a descriptor generating sub-module configured to generate the descriptor of the tensor data to be synchronized according to the address of the tensor data to be synchronized in shared storage space; and
a third generating sub-module configured to generate the descriptor synchronization instruction according to the content of the descriptor of the tensor data to be synchronized to instruct the second processor to obtain the tensor data to be synchronized from the shared storage space according to the content of the descriptor of the tensor data to be synchronized.

In a possible implementation method, the synchronization instruction generating module includes:

a third storage sub-module configured to store the tensor data to be synchronized to the shared storage space when the storage address of the tensor data to be synchronized is in the non-shared storage space;
a descriptor modification sub-module configured to modify the descriptor of the tensor data to be synchronized according to the address of the tensor data to be synchronized in the shared storage space; and
a fourth generating sub-module configured to generate the descriptor synchronization instruction according to the content of the descriptor of the tensor data to be synchronized to instruct the second processor to obtain the tensor data to be synchronized from the shared storage space according to the content of the descriptor of the tensor data to be synchronized.

Fig. 3c4 shows a block diagram of a data synchronization apparatus according to an embodiment of the present disclosure. The data synchronization apparatus is applied to a second processor. As shown in Fig. 3c4, the data synchronization apparatus includes:

a first parsing module 61c configured to parse a descriptor synchronization instruction received from a first processor to obtain a descriptor of tensor data to be synchronized, where the descriptor synchronization instruction includes an identifier of the descriptor and/or content of the descriptor, and the descriptor is used to indicate a shape of the tensor data to be synchronized; and
a first data obtaining module 62c configured to obtain the tensor data to be synchronized according to the descriptor of the tensor data to be synchronized.

In a possible implementation method, the descriptor synchronization instruction includes the content of the descriptor of the tensor data to be synchronized, where the first data obtaining module includes:

a first data obtaining sub-module configured to obtain the tensor data to be synchronized from a shared storage space according to the content of the descriptor of the tensor data to be synchronized.

In a possible implementation method, the descriptor synchronization instruction includes an address of the content of the descriptor of the tensor data to be synchronized in a storage space of synchronized data, where the first data obtaining module includes:

a first content obtaining sub-module configured to obtain the content of the descriptor of the tensor data to be synchronized from the storage space of synchronized data according to the address of the content of the descriptor of the tensor data to be synchronized in the storage space of synchronized data; and

a second data obtaining sub-module configured to obtain the tensor data to be synchronized from the shared storage space according to the content of the descriptor of the tensor data to be synchronized.

Fig. 3c5 shows a block diagram of a data synchronization apparatus according to an embodiment of the present disclosure. The data synchronization apparatus is applied to a second processor. As shown in Fig. 3c5, the data synchronization apparatus includes:

a request instruction generating module 71c configured to generate a descriptor synchronization request instruction when there is tensor data to be synchronized, where the descriptor synchronization request instruction is used to instruct a first processor to send a descriptor of tensor data to be synchronized according to the descriptor synchronization request instruction, and the descriptor is used to indicate a shape of the tensor data to be synchronized; and

a request instruction sending module 72c configured to send the descriptor synchronization request instruction to the first processor.

In a possible implementation method, the descriptor synchronization request instruction includes an identifier of the descriptor and/or data characteristics of the tensor data to be synchronized.

In a possible implementation method, the data synchronization apparatus includes:

a second parsing module configured to parse the descriptor synchronization instruction received from the first processor to obtain the descriptor of the tensor data to be synchronized, where the descriptor synchronization instruction includes the identifier of the descriptor and/or the content of the descriptor; and

a second data obtaining module configured to obtain the tensor data to be synchronized according to the descriptor of the tensor data to be synchronized.

In a possible implementation method, the descriptor synchronization instruction includes the content of the descriptor of the tensor data to be synchronized, where the second data obtaining module includes:

a third data obtaining sub-module configured to obtain the tensor data to be synchronized from the shared storage space according to the content of the descriptor of the tensor data to be synchronized.

In a possible implementation method, the descriptor synchronization instruction includes the address of the content of the descriptor of the tensor data to be synchronized in the storage space of synchronized data, where the second data obtaining module includes:

a second content obtaining sub-module configured to obtain the content of the descriptor of the tensor data to be synchronized from the storage space of synchronized data according to the address of the content of the descriptor of the tensor data to be synchronized in the storage space of synchronized data; and

a fourth data obtaining sub-module configured to obtain the tensor data to be synchronized from the shared storage space according to the content of the descriptor of the tensor data to be synchronized.

In a possible implementation method, the present disclosure further provides an artificial intelligence chip including the above-mentioned data synchronization apparatus.

In a possible implementation method, the present disclosure further provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transmission between the artificial intelligence chip and an external equipment; and the control device is configured to monitor the state of the artificial intelligence chip.

A1. A data synchronization method applied to a first processor, comprising:
generating a descriptor synchronization instruction according to a descriptor of tensor data to be synchronized, where the descriptor synchronization instruction includes an identifier of the descriptor and/or content of the descriptor, and the descriptor is used to indicate a shape of the tensor data to be synchronized; and sending the descriptor synchronization instruction to a second processor, where the descriptor synchronization instruction is used to instruct the second processor to obtain the tensor data to be synchronized according to the descriptor synchronization instruction.

A2. The data synchronization method of A1, further comprising:
determining the descriptor of the tensor data to be synchronized according to a descriptor synchronization request instruction received from the second processor.

A3. The data synchronization method of A2, wherein the descriptor synchronization request instruction includes the identifier of the descriptor, and the determining the descriptor of the tensor data to be synchronized according to the descriptor synchronization request instruction received from the second processor includes:

parsing the descriptor synchronization request instruction to obtain the identifier of the descriptor; and
determining the descriptor of the tensor data to be synchronized according to the identifier of the descriptor.

A4. The data synchronization method of A2, wherein the descriptor synchronization request instruction includes data characteristics of the tensor data to be synchronized, where the determining the descriptor of the tensor data to be synchronized according to the descriptor synchronization request instruction received from the second processor includes:

parsing the descriptor synchronization request instruction to obtain the data characteristics of the tensor data to be synchronized; and
according to the data characteristics of the tensor data to be synchronized, determining the descriptor of the tensor data to be synchronized.

A5. The data synchronization method of any one of A1-A4, wherein the descriptor synchronization instruction includes the content of the descriptor of the tensor data to be synchronized, and the generating the descriptor synchronization instruction according to the descriptor of the tensor data to be synchronized includes:
when a storage address of the tensor data to be synchronized is in a shared storage space, generating the descriptor synchronization instruction according to the content of the descriptor of the tensor data to be synchronized to instruct the second processor to obtain the tensor data to be synchronized from the shared storage space according to the content of the descriptor of the tensor data to be synchronized.

A6. The data synchronization method of any one of A1-A4, wherein the generating the descriptor synchronization instruction according to the descriptor of the tensor data to be synchronized includes:

storing the content of the descriptor of the tensor data to be synchronized to a storage space of synchronized data; and
generating the descriptor synchronization instruction according to the address of the content of the descriptor in the storage space of synchronized data to instruct the second processor to obtain the content of the descriptor of the tensor data to be synchronized from the storage space of synchronized data.

A7. The data synchronization method of any one of A1-A4, wherein the generating the descriptor synchronization instruction according to the descriptor of the tensor data to be synchronized includes:

when the storage address of the tensor data to be synchronized is in a non-shared storage space, storing the tensor data to be synchronized to the shared storage space;
generating the descriptor of the tensor data to be synchronized according to the address of the tensor data to be synchronized in the shared storage space; and
generating the descriptor synchronization instruction according to the content of the descriptor of the tensor data to be synchronized to instruct the second processor to obtain the tensor data to be synchronized from the shared storage space according to the content of the descriptor of the tensor data to be synchronized.

A8. The data synchronization method of any one of A1-A4, wherein the generating the descriptor synchronization instruction according to the descriptor of the tensor data to be synchronized includes:

when the storage address of the tensor data to be synchronized is in a non-shared storage space, storing the tensor data to be synchronized to the shared storage space;
modifying the descriptor of the tensor data to be synchronized according to the address of the tensor data to be synchronized in the shared storage space; and

generating the descriptor synchronization instruction according to the content of the descriptor of the tensor data to be synchronized to instruct the second processor to obtain the tensor data to be synchronized from the shared storage space according to the content of the descriptor of the tensor data to be synchronized.

A9. A data synchronization method applied to a second processor, comprising:

parsing a descriptor synchronization instruction received from a first processor to obtain a descriptor of tensor data to be synchronized, where the descriptor synchronization instruction includes an identifier of the descriptor and/or content of the descriptor, and the descriptor is used to indicate a shape of the tensor data to be synchronized; and
obtaining the tensor data to be synchronized according to the descriptor of the tensor data to be synchronized.

A10. The data synchronization method of A9, wherein the descriptor synchronization instruction includes the content of the descriptor of the tensor data to be synchronized, and the obtaining the tensor data to be synchronized according to the descriptor of the tensor data to be synchronized includes:
obtaining the tensor data to be synchronized from a shared storage space according to the content of the descriptor of the tensor data to be synchronized.

A11. The data synchronization method of A9, wherein the descriptor synchronization instruction includes an address of the content of the descriptor of the tensor data to be synchronized in a storage space of synchronized data, and the obtaining the tensor data to be synchronized according to the descriptor of the tensor data to be synchronized includes:

obtaining the content of the descriptor of the tensor data to be synchronized from the storage space of synchronized data according to the address of the content of the descriptor of the tensor data to be synchronized in the storage space of synchronized data; and
obtaining the tensor data to be synchronized from the shared storage space according to the content of the descriptor of the tensor data to be synchronized.

A12. A data synchronization method applied to a second processor, comprising:

when there is tensor data to be synchronized, generating a descriptor synchronization request instruction, where the descriptor synchronization request instruction is used to instruct a first processor to send a descriptor of the tensor data to be synchronized according to the descriptor synchronization request instruction, and the descriptor is used to indicate the shape of the tensor data to be synchronized; and
sending the descriptor synchronization request instruction to the first processor.

A13. The data synchronization method of A12, wherein the descriptor synchronization request instruction includes an identifier of the descriptor and/or data characteristics of the tensor data to be synchronized.
A14. The data synchronization method of A12 or A13, further comprising:

parsing the descriptor synchronization instruction received from the first processor to obtain the descriptor of tensor data to be synchronized, where the descriptor synchronization instruction includes the identifier of the descriptor and/or the content of the descriptor; and
obtaining the tensor data to be synchronized according to the descriptor of the tensor data to be synchronized.

A15. The data synchronization method of A14, wherein the descriptor synchronization instruction includes the content of the descriptor of the tensor data to be synchronized, and the obtaining the tensor data to be synchronized according to the descriptor of the tensor data to be synchronized includes:
obtaining the tensor data to be synchronized from a shared storage space according to the content of the descriptor of the tensor data to be synchronized.
A16. The data synchronization method of A14, wherein the descriptor synchronization instruction includes an address of the content of the descriptor of the tensor data to be synchronized in a storage space of synchronized data, and the obtaining the tensor data to be synchronized according to the descriptor of the tensor data to be synchronized includes:

obtaining the content of the descriptor of the tensor data to be synchronized from the storage space of synchronized data according to the address of the content of the descriptor of the tensor data to be synchronized in the storage space of synchronized data; and
obtaining the tensor data to be synchronized from the shared storage space according to the content of the descriptor of the tensor data to be synchronized.

A17. A data synchronization apparatus applied to a first processor, comprising:

a synchronization instruction generating module configured to generate a descriptor synchronization instruction according to a descriptor of tensor data to be synchronized, where the descriptor synchronization instruction includes an identifier of the descriptor and/or content of the descriptor, and the descriptor is used to indicate a shape of the tensor data to be synchronized; and
a synchronization instruction sending module configured to send the descriptor synchronization instruction to a second processor, where the descriptor synchronization instruction is used to instruct the second processor to obtain the tensor data to be synchronized according to the descriptor synchronization instruction.

A18. The data synchronization apparatus of A17, further comprising:
a first descriptor determining module configured to determine the descriptor of the tensor data to be synchronized according to a descriptor synchronization request instruction received from the second processor.

A19. The data synchronization apparatus of A18, wherein the descriptor synchronization request instruction includes the identifier of the descriptor, and the first descriptor determining module includes:

a first parsing sub-module configured to parse the descriptor synchronization request instruction to obtain the identifier of the descriptor; and
a first determining sub-module configured to determine the descriptor of the tensor data to be synchronized according to the identifier of the descriptor.

A20. The data synchronization apparatus of A18, wherein the descriptor synchronization request instruction includes data characteristics of the tensor data to be synchronized, and the first descriptor determining module includes:

a second parsing sub-module configured to parse the descriptor synchronization request instruction to obtain data characteristics of tensor data to be synchronized; and
a second determining sub-module configured to determine the descriptor of the tensor data to be synchronized according to the data characteristics of the tensor data to be synchronized.

A21. The data synchronization apparatus of any one of A17-A20, wherein the descriptor synchronization instruction includes the content of the descriptor of the tensor data to be synchronized, and the synchronization instruction generating module includes:
a first generating sub-module configured to generate the descriptor synchronization instruction according to the content of the descriptor of the tensor data to be synchronized when a storage address of the tensor data to be synchronized is in a shared storage space to instruct the second processor to obtain the tensor data to be synchronized from the shared storage space according to the content of the descriptor of the tensor data to be synchronized.

A22. The data synchronization apparatus of any one of A17-A20, wherein the synchronization instruction generating module includes:

a first storage sub-module configured to store the content of the descriptor of the tensor data to be synchronized into a storage space of synchronized data; and
a second generating sub-module configured to generate the descriptor synchronization instruction according to the address of the content of the descriptor in the storage space of synchronized data to instruct the second processor to obtain the content of the descriptor of the tensor data to be synchronized from the storage space of synchronized data.

A23. The data synchronization apparatus of any one of A17-A20, wherein the synchronization instruction generating module includes:

a second storage sub-module configured to store the tensor data to be synchronized to the shared storage space when the storage address of the tensor data to be synchronized is in a non-shared storage space;
a descriptor generating sub-module configured to generate the descriptor of the tensor data to be synchronized according to the address of the tensor data to be synchronized in shared storage space; and
a third generating sub-module configured to generate the descriptor synchronization instruction according to the content of the descriptor of the tensor data to be synchronized to instruct the second processor to obtain the tensor data to be synchronized from the shared storage space according to the content of the descriptor of the tensor data to be synchronized.

A24. The data synchronization apparatus of any one of A17-A20, wherein the synchronization instruction generating module includes:

a third storage sub-module configured to store the tensor data to be synchronized to the shared storage space when the storage address of the tensor data to be synchronized is in the non-shared storage space;
a descriptor modification sub-module configured to modify the descriptor of the tensor data to be synchronized according to the address of the tensor data to be synchronized in the shared storage space; and
a fourth generating sub-module configured to generate the descriptor synchronization instruction according to the content of the descriptor of the tensor data to be synchronized to instruct the second processor to obtain the tensor data to be synchronized from the shared storage space according to the content of the descriptor of the tensor data to be synchronized.

A25. A data synchronization apparatus applied to a second processor, comprising:

a first parsing module configured to parse a descriptor synchronization instruction received from a first processor to obtain a descriptor of tensor data to be synchronized, where the descriptor synchronization instruction includes an identifier of the descriptor and/or content of the descriptor, and the descriptor is used to indicate a shape of the tensor data to be synchronized; and
a first data obtaining module configured to obtain the tensor data to be synchronized according to the descriptor of the tensor data to be synchronized.

A26. The data synchronization apparatus of A25, wherein the descriptor synchronization instruction includes the content of the descriptor of the tensor data to be synchronized, and the first data obtaining module includes:
a first data obtaining sub-module configured to obtain the tensor data to be synchronized from a shared storage space according to the content of the descriptor of the tensor data to be synchronized.

A27. The data synchronization apparatus of A25, the descriptor synchronization instruction includes an address of the content of the descriptor of the tensor data to be synchronized in a storage space of synchronized data, and the first data obtaining module includes:

a first content obtaining sub-module configured to obtain the content of the descriptor of the tensor data to be synchronized from the storage space of synchronized data according to the address of the content of the descriptor of the tensor data to be synchronized in the storage space of synchronized data; and
a second data obtaining sub-module configured to obtain the tensor data to be synchronized from the shared storage space according to the content of the descriptor of the tensor data to be synchronized.

A28. A data synchronization apparatus applied to a second processor, comprising:

a request instruction generating module configured to generate a descriptor synchronization request instruction when there is tensor data to be synchronized, where the descriptor synchronization request instruction is used to instruct a first processor to send a descriptor of tensor data to be synchronized according to the descriptor synchronization request instruction, and the descriptor is used to indicate a shape of the tensor data to be synchronized; and
a request instruction sending module configured to send the descriptor synchronization request instruction to the first processor.

A29. The data synchronization apparatus of A28, wherein the descriptor synchronization request instruction includes an identifier of the descriptor and/or data characteristics of the tensor data to be synchronized.
A30. The data synchronization apparatus of A28 or A29, further comprising:

a second parsing module configured to parse the descriptor synchronization instruction received from the first processor to obtain the descriptor of the tensor data to be synchronized, where the descriptor synchronization instruction includes the identifier of the descriptor and/or content of the descriptor; and
a second data obtaining module configured to obtain the tensor data to be synchronized according to the descriptor of the tensor data to be synchronized.

A31. The data synchronization apparatus of A30, wherein the descriptor synchronization instruction includes the content of the descriptor of the tensor data to be synchronized, and the second data obtaining module includes:
a third data obtaining sub-module configured to obtain the tensor data to be synchronized from a shared storage space according to the content of the descriptor of the tensor data to be synchronized.

A32. The data synchronization apparatus of A30, wherein the descriptor synchronization instruction includes an address of the content of the descriptor of the tensor data to be synchronized in a storage space of synchronized data, and the second data obtaining module includes:

a second content obtaining sub-module configured to obtain the content of the descriptor of the tensor data to be synchronized from the storage space of synchronized data according to the address of the content of the descriptor of the tensor data to be synchronized in the storage space of synchronized data; and
a fourth data obtaining sub-module configured to obtain the tensor data to be synchronized from the shared storage space according to the content of the descriptor of the tensor data to be synchronized.

A33. An artificial intelligence chip comprising the data synchronization apparatus of any one of A17-A32.
A34. An electronic device comprising the artificial intelligence chip of A33.
A35. A board card comprising a storage device, an interface apparatus, a control device, and the artificial intelligence chip of A33, wherein the artificial intelligence chip is connected to the storage device, the control device, and the interface apparatus, respectively; the storage device is configured to store data; the interface apparatus is configured to implement data transmission between the artificial intelligence chip and an external equipment; and the control device is configured to monitor state of the artificial intelligence chip.
A36. The board card of A35, wherein
the storage device includes a plurality of groups of storage units, where each group of the storage units is connected with the artificial intelligence chip by a bus, and the storage units are DDR SDRAM,
the chip includes a DDR controller configured to control data transmission and data storage of each storage unit, and the interface apparatus is a standard PCIE interface.

With the continuous development of artificial intelligence technology, the amount of data to be processed and data dimensions are increasing. In the related art, when a plurality of operations are executed on the same storage area, a latter operation will not be executed after a previous operation is completed, which reduces the processing efficiency of the processor.

The present disclosure provides an operation method of a processor. Fig. 1d1 shows a schematic diagram of an application scenario according to an embodiment of the present disclosure. A processor 100 may be a general-purpose processor (such as a CPU (central processing unit), a GPU (graphics processor)) and a dedicated processor (such as an AI processor, a scientific computing processor, or a digital signal processor, *etc.*). The present disclosure does not limit the type of the processor. A storage device 200 includes at least one target storage area 210, where the target storage area 210 may be a storage area of the tensor data indicated by the descriptor. It can be understood that the processor can access a target storage area 210 by executing a reading operation or a writing operation, where a process of executing a reading operation for a target storage area 210 by the processor may include: the processor obtaining the tensor data in the target storage area 210 through the descriptor; and a process of executing a writing operation for a target storage area 210 by the processor may include: the processor writing the tensor data indicated by the descriptor into the target storage area 210. In the related art, since the processor can execute a plurality of operations in parallel, in order to avoid conflicts, when a plurality of operations executed by the processor in parallel are all for a certain target storage area 210, the processor will only execute one of the a plurality of operations, while other operations are blocked, which may reduce the efficiency of the processor. The operation method of the processor provided by the present disclosure further divides the target storage area 210 as a plurality of fine-grained areas 211, and when a plurality of operations executed by the processor in parallel are all for a certain target storage area 210, the processor may determine whether the fine-grained areas 211 targeted by the a plurality of operations overlap, and if the fine-grained areas 211 targeted by the respective operations do not overlap, the a plurality of operations can be executed in parallel, which may greatly improve the efficiency of the processor. It should be noted that the storage device 200 may be provided inside the processor (for example, an on-chip cache or a register, *etc.*), or may be provided outside the processor (for example, an off-chip memory, *etc.*) and can execute data communication with the processor. The present disclosure does not limit the type of storage device. The operations involved in the present disclosure may be basic operations supported by hardware of the processor, or micro-instructions (such as request signals, *etc.*) that are obtained after the basic operations are parsed. The present disclosure does not limit the specific type of operations. The processor in the present disclosure can execute two operations in parallel, and can also execute more than two operations in parallel. The present disclosure does not limit the count of operations executed in parallel.

Fig. 1d2 shows a flowchart of an operation method of a processor according to an embodiment of the present disclosure. The operation method of the processor can be applied to a processor. As shown in Fig. Id2, the operation method of the processor may include:

a step Slid: when a first operation is an operation for a descriptor, obtaining a target storage area of tensor data indicated by the descriptor.

The first operation may be a reading operation or a writing operation for the descriptor. The present disclosure does not limit the specific type of the first operation. The descriptor can be used to indicate the shape of the tensor. The tensor may have various forms of data composition, and the tensor may have different dimensions, for example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor.

In a possible implementation method, an operand of the first operation may be one or more descriptors. The target storage area may be a storage area for tensor data indicated by one or more descriptors in the operand of the first operation, or may be a storage area for tensor data indicated by any descriptor in the operand of the first operation. A whole storage area where the target storage area is located may be an internal storage of the processor (such as an on-chip cache or a register, *etc.*), or an external storage connected to the processor (such as an off-chip storage, *etc.*).

In a possible implementation method, the target storage area may include at least one fine-grained area. A method for determining the size and/or quantity of the fine-grained areas may include one or more of a determining method according to hardware design, a determining method according to related operations of the tensor data indicated by the descriptor, and a defining method according to related parameters in the operations. The determining method according to hardware design may refer to determining a size of a fine-grained area during hardware design, for example, one or more rows of the target storage area are determined as a fine-grained area. The determining method according to related operations of the tensor data indicated by the descriptor includes: determining according to processing requirements, storage methods, or transmission methods of the tensor data indicated by the descriptor. For example, the tensor data indicated by the descriptor is two-dimensional matrix data. A size the matrix data is M*Q (M and Q are all positive integers), indicating the count of bytes occupied by the storage, in other words, a row of the matrix data is M bytes and the matrix data has Q rows in total, then it can be determined that M bytes are a fine-grained area, and the target storage area corresponding to the tensor data indicated by the descriptor includes Q fine-grained areas. The determining method according to related parameters in the operations includes dividing the target storage area as a plurality of fine-grained areas according to the size and/or quantity of fine granularity carried in the operations. It should be noted that the sizes of the plurality of fine-grained areas may be the same or different. For example, the count of data bits of each fine-grained area may be 64 bits, 256 bits, 512 bits, and the like. The size and/or quantity of each fine-grained area can be determined according to requirements, which is not limited in the present disclosure.

In a possible implementation method, when the first operation is an operation for the descriptor, the target storage area of the tensor data indicated by the descriptor may be obtained through the descriptor targeted by the first operation, thereby determining the target storage area targeted by the first operation.

The operation method of the processor may further include:

a step S12d: determining whether there is an ongoing second operation for the target storage area.

The second operation may be a reading operation or a writing operation for the descriptor. The present disclosure does not limit the specific type of the second operation. The second operation may include one or more operands. The operands of the second operation may include various data such as descriptors, immediate data, and tensor data. The present disclosure does not limit the specific number and type of operands of the second operation.

In a possible implementation method, it can be determined whether there is an ongoing second operation for the target storage area according to the occupation state of the target storage area. For example, the processor may determine whether the target storage area is occupied by querying an occupancy state list, where if the target storage area is occupied, it is determined that there is an ongoing second operation for the target storage area. The occupancy state list may be preset and stored in a storage, or may be generated before the processor starts to execute a certain task, and released after the task is completed. When the occupancy state of each storage area changes, the processor updates the content of the occupancy state list to record the occupancy state of each storage area.

In a possible implementation method, it can be determined whether there is an ongoing second operation for the target storage area by querying the execution state of each operation. For example, the storage area corresponding to the operand of each operation may be recorded, and the execution state of each operation may be further recorded. If the operation for the target storage area has not been completed, it is determined that there is an ongoing second operation for a target operation area. It can be determined whether the target storage area corresponding to the operand is occupied by determining the occupancy state of the operand, thereby determining whether there is an ongoing second operation for the target storage area. The present disclosure does not limit the basis for determining whether there is an ongoing second operation for the target storage area.

In a possible implementation method, the second operation may be an operation for the descriptor. The descriptor targeted by the second operation may be same as the descriptor targeted by the first operation, then the storage area of the descriptor targeted by the second operation is same as the target storage area, and when the second operation is not completed, there is a second operation for the target storage area; or if the storage area of the descriptor targeted by the second operation has an overlapping area with the target storage area, and when the second operation is being executed on the overlapping area, there is a second operation for the target storage area.

In a possible implementation method, before the first operation for the target storage area is executed, it may be determined whether there is an ongoing second operation for the target storage area.

In a possible implementation method, during the execution of the first operation for the target storage area, it may be also determined whether there is an ongoing second operation for the target storage area.

The operation method of the processor may further include:

a step S13d, when there is an second operation, determining whether there is an overlap between a first fine-grained area in the target storage area targeted by the first operation and a second fine-grained area in the target storage area targeted by the second operation.

The first fine-grained area and the second fine-grained area may be any fine-grained area in the plurality of fine-grained areas in the target storage area. The entire storage area where the target storage area is located may be divided as a plurality of fine-grained areas, and the sizes of the fine-grained areas in the entire storage area targeted by the operations are the same.

Optionally, during each operation, the storage area targeted by the operand is divided as a plurality of fine-grained areas according to the fine-grained division information carried in each operation, and during different operations, same storage areas may be divided as a plurality of fine-grained areas with different granularities. The first fine-grained area may be an arbitrary fine-grained area among a plurality of fine-grained areas obtained after the target storage area is divided during the first operation; and the second fine-grained area may be an arbitrary fine-grained area among a plurality of fine-grained areas obtained after the storage area where the operand is located is divided during the second operation. The size of the first fine-grained area and that of the second fine-grained area may be different.

For example, the first operation may carry the size of the first fine granularity (the count of data bits of each fine-grained area), and the size of the first fine granularity may be set to 64 bits, and the second operation may carry the size of the second fine granularity (for example, the count of data bits of each fine-grained area), and the size of the second fine granularity may be set to 256 bits. In other words, during the first operation, every 64 bits are taken as a fine-grained area, and during the second operation, every 256 bits are taken as a fine-grained area. For another example, both of the size of the fine granularity carried by the first operation and the size of the fine granularity carried by the second operation (for example, the count of data bits of each fine-grained area) are 512 bits. Similarly, the first operation may also carry the count of the first fine granularity (for example, the count of the first fine granularity may be set to 4), and the second operation may also carry the count of the second fine granularity (for example, the count of the second fine granularity may be set to 8). In other words, during the first operation, the target storage area is divided as 4 fine-grained areas, and during the second operation, the target storage area is divided as 8 fine-grained areas. It can be understood that the two parameters, which are the size of the fine granularity and the count of the fine granularity, can also be carried at the same time in the operation. The size and/or quantity of each fine-grained area can be determined according to requirements, which is not limited in the present disclosure.

It can be understood that the operation for the target storage area is an operation for each fine-grained area in the target storage area. For example, a target storage area A is from the first row to the tenth row, each row is a fine-grained area, and the target storage area A includes 10 fine-grained areas. The writing operation for the target storage area A can be regarded as a writing operation for the 10 fine-grained areas, where the execution process is: writing the first fine-grained area (in the first row), writing the second fine-grained area (the second row) after the first fine-grained area is written, and writing the third fine-grained area (the third row) after the second fine-grained area is written, and so on, until the tenth fine-grained area (the tenth row) is written, and then the writing operation for the target storage area A is completed.

When there is an operation for the target storage area, as the operation is executed, the fine-grained areas in the target storage area may include fine-grained areas that have been processed, fine-grained areas that are being processed, and fine-grained areas that have not been processed. The state of a fine-grained area currently targeted by the operation is a state of being processed. Therefore, when there is an operation for the target storage area, it may be considered that there is an operation for a fine-grained area in the target storage area, and the fine-grained area being processed is the fine-grained area to which the operation is currently targeted.

In a possible implementation method, a first fine-grained area in the target storage area targeted by the first operation may include a fine-grained area in the target storage area targeted by the first operation to be executed, which is usually a first fine-grained area. Optionally, the first fine-grained area in the target storage area targeted by the first operation may further include any fine-grained area in the target storage area currently targeted by the first operation which is being executed. A second fine-grained area in the target storage area currently targeted by the second operation may be any fine-grained area in the target storage area currently targeted by the second operation which is being executed.

In a possible implementation method, it can be determined whether there is an overlap between the first fine-grained area in the target storage area targeted by the first operation and the second fine-grained area in the target storage area targeted by the second operation according to a physical address, a position of a pointer, an identifier of the fine-grained area, and the like. For example, the current physical address of each operation can be recorded. In this way, according to the current physical address of the first operation and the current physical address of the second operation, and the correspondence between the physical address and the fine-grained area, the first fine-grained area in the target storage area currently targeted by the first operation and the second fine-grained area in the target storage area currently targeted by the second operation can be determined respectively, and then whether there is an overlap between the first fine-grained area and the second fine-grained area can further be determined. The physical address may include one or more of a start address of the fine-grained area, an end address of the fine-grained area, an address of a preset position of the fine-grained area, and an address of a real-time operation of the fine-grained area. For another example, a pointer can be preset for each operation, and the pointer points to the fine-grained area to which the operation is currently targeted. According to the position of the pointer of the first operation, and the position of the pointer of the second operation, the first fine-grained area in the target storage area currently targeted by the first operation and the second fine-grained area in the target storage area currently targeted by the second operation can be determined respectively, and then whether there is an overlap between the first fine-grained area and the second fine-grained area can be further determined. For another example, an identifier for each fine-grained area may be preset, and then whether there is an overlap between the first fine-grained area and the second fine-grained area can be determined by recording the identifier of the fine-grained area currently targeted by the operation. The identifier may include any combination of letters, numbers, or symbols. Other ways may be adopted to determine whether there is an overlap between the first fine-grained area and the second fine-grained area. The present disclosure does not limit the basis for determining whether there is an overlap between the first fine-grained area and the second fine-grained area.

The operation method of the processor may further include:

a step S14d, executing the first operation when there is no overlap between the first fine-grained area and the second fine-grained area.

In a possible implementation method, if there is no overlap between the first fine-grained area in the target storage area targeted by the first operation and the second fine-grained area in the target storage area targeted by the second operation, the first fine-grained area may be a fine-grained area that has been processed by the second operation, or a fine-grained area that does not need to be processed by the second operation. At this time, the execution of the first operation will not affect the process and result of the second operation, and thus the first operation can be executed.

According to the embodiment, when the first operation is an operation for the descriptor, the target storage area of the tensor data indicated by the descriptor may be obtained. When there is an ongoing second operation for the target storage area, whether there is an overlap between the first fine-grained area in the target storage area currently targeted by the first operation and the second fine-grained area in the target storage area currently targeted by the second operation may be determined. If there is no overlap between the first fine-grained area in the target storage area currently targeted by the first operation and the second fine-grained area in the target storage area currently targeted by the second operation, the first operation will be executed. In this way, the first operation will be executed if there is no overlap between the fine-grained area currently targeted by the first operation and the fine-grained area currently targeted by the second operation, so that the first operation and the second operation can be executed to process the target storage area at the same time, which improves the processing efficiency of the processor.

In a possible implementation method, the operation method of the processor further includes: when there is an overlap between the first fine-grained area and the second fine-grained area, blocking the first operation.

In a possible implementation method, a situation that the first fine-grained area overlaps with the second fine-grained area includes that the first fine-grained area completely overlaps or partially overlaps with the second fine-grained area. When there is an overlap between the first fine-grained area and the second fine-grained area, if the first operation is executed, the operation of the first operation on the overlap may affect the execution of the second operation, resulting in an inaccurate operation result of the second operation, and the operation of the first operation on the overlap may further affect the execution of the first operation, resulting in an inaccurate operation result of the first operation. At this time, the first operation may be blocked, in other words, the first operation may be suspended, and the first operation may be executed after the second fine-grained area in the target storage area currently targeted by the second operation has been processed. In other words, when there is no overlap between the first fine-grained area and the second fine-grained area, the first operation will be executed.

In the embodiment, by blocking the first operation when there is an overlap between the first fine-grained area and the second fine-grained area, problems such as operation errors and inaccurate operation results due to the overlap between the fine-grained areas of each operation may be avoided, and the correctness of each operation may be ensured.

Fig. 5a and Fig. 5b show schematic diagrams of application scenarios of an operation method of a processor according to an embodiment of the present disclosure. As shown in Fig. 5a and Fig. 5b, an entire storage area 20d includes a target storage area 21d, where the target storage area 21d is divided as four fine-grained areas: a fine-grained area 22d, a fine-grained area 23d, a fine-grained area 24d, and a fine-grained area 25d.

As shown in Fig. 5a, currently, only a writing operation is included. A writing pointer wp represents the fine-grained area in the target storage area 21d currently targeted by the writing operation. At the beginning of the writing operation, the writing pointer wp points to the fine-grained area 22d, it can be firstly determined whether there is an ongoing second operation for the target storage area 21d, where if there is no second operation, then the writing operation will be executed on the fine-grained area 22d. When the writing operation executed on the fine-grained area 22d is completed, the writing pointer wp increases, that is, wp++, and the writing pointer points to the next fine-grained area 23d, and then it can be determined whether there is an ongoing second operation for the target storage area 22d, where if there is no second operation, then the writing operation will be executed on the fine-grained area 23d. When the writing operation executed on the fine-grained area 23d is completed, the writing pointer wp increases, and the writing pointer points to the next fine-grained area 24d, and then it can be determined whether there is an ongoing second operation for the target storage area 23d, where if there is no second operation, then the writing operation will be executed on the fine-grained area 24d.

As shown in Fig. 5b, currently, a reading operation and a writing operation are included, where the reading operation is a first operation, and the writing operation is a second operation. And the writing pointer wp of the writing operation and a reading pointer rp of the reading operation represent the fine-grained areas currently targeted by the writing operation and the reading operation, respectively.

During the execution of the reading operation (the first operation), it needs to be determined whether there is an ongoing second operation for the target storage area 21d. It is determined that there is an ongoing second operation (the writing operation) for the target storage area 21d, and it is further determined whether there is an overlap between the first fine-grained area (the fine-grained area 22d in Fig. 5b) in the target storage area 21d currently targeted by the reading operation (the first operation) and the second fine-grained area (the fine-grained area 24d in Fig. 5b) in the target storage area 21d currently targeted by the writing operation (the second operation). For example, it can be determined that there is no overlap between the first fine-grained area and the second fine-grained area according to the serial numbers of the fine-grained areas (22d and 24d), or according to the relationship between rp and wp (rp=0, wp=2, rp<wp), and then the reading operation (the first operation) will be executed.

When the reading operation executed on the fine-grained area 22d is completed, the reading pointer rp increases, that is, rp++, and the reading pointer points to the next fine-grained area 23d, and then it can be determined whether there is an overlap between the first fine-grained area and the second fine-grained area, where if there is no overlap between the first fine-grained area and the second fine-grained area, then the first operation will be executed on the fine-grained area 23d. When the reading operation executed on the fine-grained area 23d is completed, the reading pointer rp increases, and the reading pointer points to the next fine-grained area 24d, and then it can be determined whether there is an overlap between the first fine-grained area and the second fine-grained area, where if the serial numbers of the fine-grained area are the same or rp=wp, it can be determined that there is an overlap between the first fine-grained area in the target storage area 21d currently targeted by the first operation and the second fine-grained area in the target storage area 21d currently targeted by the second operation, and then the first operation cannot be executed, and the first operation will be blocked. When the second operation executed on the fine-grained area 24d is completed, the writing pointer wp increases, and the writing pointer points to the next fine-grained area 25d. If the serial numbers of the fine-grained areas are different (24d and 25d) or the pointer rp<wp, the first operation can be executed.

In a possible implementation method, at least one of the first operation and the second operation may be a writing operation. In other words, the method provided in the embodiment of the present disclosure may be adopted when the operation on the operands is a write-modify-read operation (the second operation is the writing operation and the first operation is the reading operation), a read-modify-write operation (the second operation is the reading operation and the first operation is the writing operation), or a write-modify-write operation (both the second operation and the first operation are writing operations).

For example, if the first operation is a reading operation for a descriptor and the second operation is a writing operation, the tensor data indicated by the descriptor read by the first operation needs to be data after the second operation (the writing operation) is executed; and the serial number of the second fine-grained area in the target storage area targeted by the second operation is 8, then the first operation can only read the data in the fine-grained area with a serial number smaller than 8. In other words, if the first fine-grained area in the target storage area to which the first operation is currently targeted is any one of the fine-grained areas numbered 1 to 7, the first operation can be executed.

In a possible implementation method, if the first operation and the second operation are both reading operations, the relationship between the fine-grained areas of the first operation and the second operation will not affect the operation result, and the method provided in the embodiment of the present disclosure may be adopted, or the first operation may be executed directly without determining the fine-grained areas.

In the embodiment, if at least one of the first operation and the second operation is a writing operation, according to the method provided in the embodiment of the present disclosure, by dividing the target storage area of the tensor data indicated by the descriptor as one or more fine-grained areas, and executing operations in units of fine-grained areas, operations such as reading-writing, writing-reading, and a write-modify-write operation can be executed correctly to obtain accurate results, besides, the waiting time between operations can be reduced and the efficiency of the processor can be improved.

In a possible implementation method, the size and/or quantity of the fine-grained areas may be determined according to at least one of the area where the data with set length is located and the area where the data with set dimension is located.

It can be understood that the size and/or quantity of the fine-grained areas may be preset before the operation is generated, or may be determined in real time when each operation is generated. The presetting the size and/or quantity of the fine-grained areas before the operation may include: determining the size and/or quantity of the fine-grained areas according to at least one of the area where the data with preset length is located and the area where the data with preset dimension is located. The data with preset length and the data with preset dimension may be independent of the operands of each operation, or may be comprehensively determined according to the operands of each operation in advance, which may be determined according to actual requirements. The determining the size and/or quantity of the fine-grained areas in real time when each operation is generated may include determining data with preset length or data with preset dimension according to the operands of each operation, in other words, at least one of the area where the data with preset length is located and the area where the data with preset dimension is located can be determined in real time according to the operands of each operation, and then the size and/or quantity of the fine-grained areas may be determined.

For example, the size and/or quantity of the fine-grained areas can be determined according to the size of the area where the data with preset length is located. For example, the size of the fine-grained area can be set according to the size of the target storage area where the data with preset length among the tensor data indicated by the descriptor is located, and the area may have a fixed bit width. For example, tensor data B indicated by the descriptor is 20*10*5 three-dimensional data, the tensor data B is stored in 40*25 manner (that is, there are 40 bits of data in each row, and there are total 25 rows) in the target storage area, then the length may be set as 40 bits, each row of the target storage area is set as a fine-grained area, the target storage area of tensor data B indicated by the descriptor may be divided as 25 fine-grained areas; or every 5 rows of the target storage area may be set as a fine-grained area, and the target storage area of tensor data B indicated by the descriptor may be divided as 5 fine-grained areas, which is not limited in the present disclosure.

It should be noted that the size and/or quantity of the fine-grained areas can be determined in the target storage area according to at least one of the area where the data with preset length is located and the area where the data with preset dimension is located, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the applicable division range of the size and/or quantity of the fine-grained areas based on at least one of the area where the data with preset length is located and the area where the data with preset dimension is located.

In a possible implementation method, the size and/or quantity of the fine-grained areas may also be determined according to the size of the area where the data with preset dimension is located. For example, tensor data C indicated by the descriptor is 20*10 two-dimensional data. A target storage area of the tensor data C indicated by the descriptor may be divided as 10 fine-grained areas according to data with preset 1 dimension and preset length of 20.

In addition, the size and/or quantity of the fine-grained areas may also be determined according to the size of the area where the data with preset length is located in the target storage area of the tensor data indicated by the descriptor and the size of the area where the data with preset dimension is located in the target storage area of the tensor data indicated by the descriptor. For example, for the tensor data C indicated by the descriptor, fine-grained areas may be divided according to data with preset 2 dimensions and preset size of 4*2, thereby dividing the target storage area of the tensor data C indicated by the descriptor as 25 fine-grained areas.

It should be understood that those skilled in the art may set the size and/or quantity of the divided fine-grained areas according to actual conditions, which is not limited in the present disclosure.

In the embodiment, the size and/or quantity of the fine-grained areas can be determined according to the size of the area where the data with preset length is located and/or the size of the area where the data with preset dimension is located, where the fine-grained areas may be divided according to data characteristics, which can improve the flexibility of dividing the fine-grained areas, thereby improving the efficiency of the execution of a plurality of operations, and the division results of the fine-grained areas can be more in line with the characteristics of different operands, thereby adapting to the processing requirements of different types of operands, and then the overall execution efficiency of a plurality of operations can be improved.

In a possible implementation method, the size and/or quantity of the fine-grained areas may be determined according to at least one of the computing capability of the hardware and the bandwidth of the hardware.

The computing capability of the hardware may refer to the amount of data processed in parallel by the hardware in one computing cycle, and the bandwidth of the hardware may refer to the data transmission capability, such as the amount of data transmitted per unit time.

For example, for the processor that applies the operation method, the computing capability of the hardware of the processor may be: processing 100-bit of data in parallel in one computing cycle, and the bandwidth of the hardware of the processor may be: transmitting 200-bit of data per unit time. A target storage area with a size of 1000-bit data may be divided as 10 fine-grained areas according to the computing capability of the hardware, where each fine-grained area includes 100-bit data; or the target storage area with a size of 1000-bit data may be divided as 5 fine-grained areas according to the bandwidth of the hardware, where each fine-grained area includes 200-bit data.

It should be understood that different processor may have different computing capability of the hardware and the bandwidth of the hardware, and the present disclosure does not limit the computing capability of the hardware and the bandwidth of the hardware.

It should be understood that the size and/or quantity of the fine-grained areas in the target storage area may be determined according to at least one of the computing capability of the hardware and the bandwidth of the hardware, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the applicable division range of the size and/or quantity of the fine-grained areas based on at least one of the computing capability of the hardware and the bandwidth of the hardware.

By adopting the above-mentioned method provided by the present disclosure, the size and/or quantity of the fine-grained areas may be determined according to the processing capability of the processor (the computing capability of the hardware and/or the bandwidth of the hardware, so that the division results of the fine-grained area are more in line with the requirements of different operating environment of the hardware, and the operation executed based on the fine-grained areas is synchronized with the processing power of the processor, and the execution efficiency of the hardware can be brought into play as much as possible, and then the processing efficiency of the processor may be improved.

In a possible implementation method, the first operation may be an operation in a first processing instruction, the second operation may be an operation in a second processing instruction, and the second processing instruction may be a processing instruction prior to the first processing instruction in the instruction queue.

The first processing instruction and the second processing instruction may include one or more of a data access instruction, an operation instruction, a synchronization instruction, and a communication instruction. For example, an instruction is a Reading And Writing operation instruction. The present disclosure does not limit the specific types of the first processing instruction and the second processing instruction.

In a possible implementation method, the first instruction may have a dependency relationship with the second instruction, for example, the first instruction needs to use a computation result of the second instruction. The first instruction may also have no dependency relationship with the second instruction. When the first instruction have a dependency relationship with the second instruction, the first instruction and the second instruction can be executed in parallel through the method in the embodiment of the present disclosure.

In the embodiment, the first operation and the second operation may be operations in different instructions. By adopting the method in the embodiment of the present disclosure, the instruction execution efficiency can be improved.

In a possible implementation method, the first operation and the second operation may also be two operations in a same processing instruction, where the second operation may be independent of the first operation, or the second operation may be based on the result of the first operation. The processing instruction may include one or more of a data access instruction, an operation instruction, a synchronization instruction, and a communication instruction, for example, if the instruction is a "reading and adding" operation instruction, the first operation is a reading operation, and the second operation is an addition operation. The present disclosure does not limit the specific type of the processing instruction.

In a possible implementation method, the operation method of the processor further includes: recording a first position information of a first fine-grained area currently operated by the first operation and a second position information of a second fine-grained area currently operated by the second operation.

The step S14d may include: when the first position information is inconsistent with the second position information, executing the first operation.

In a possible implementation method, position information may include identification information of the fine-grained areas. The identification information may include any combination of numbers, letters and symbols, which is not limited in the present disclosure.

For example, the position information can be represented by the serial numbers of the fine-grained areas. The target storage area can be divided as 6 fine-grained areas, which are sequentially numbered 0-5. When the first operation and the second operation for the target storage area are executed, the first position information (for example, the serial number is 2) of the first fine-grained area currently operated by the first operation and the second position information (for example, the serial number is 5) of the second fine-grained area currently operated by the second operation may be recorded, respectively; then it can be known that the first position information is not consistent with the second position information according to the relationship between the serial numbers (2<5); at this time, the first operation can be executed.

In a possible implementation method, the position information may include address information of the fine-grained areas. The address information may include one or more of a start address of the fine-grained area, an end address of the fine-grained area, an address of a preset position of the fine-grained area, and an address offset. For example, the position information of a fine-grained area is ADDR1515-ADDR1531.

By adopting the above-mentioned method provided by the present disclosure, the position information can be used to directly and efficiently determine whether there is an overlap between the first fine-grained area and the second fine-grained area, and determine whether to execute the first operation, which can improve the execution efficiency of the processor.

In a possible implementation method, the first position information may include a first count of fine-grained areas that have been processed by the first operation, and the second position information may include a second count of fine-grained areas that have been processed by the second operation.

When the first position information is inconsistent with the second position information, the first operation may be executed, which may include: when the first operation is an operation after the second operation, and the first count is less than the second count, the first operation is executed.

For example, the first operation is an operation after the second operation, and the target storage area of the first operation is divided as 6 fine-grained areas, and the position information of the 6 fine-grained areas can be represented by the count of fine-grained areas that have been completed. When the first operation and the second operation for the target storage area are executed, a first count of fine-grained areas (for example, the first count is 3) that has been processed by the first operation and a second count of fine-grained areas (for example, the second count is 5) that has been processed by the second operation may be recorded, respectively; and then according to the executing order of the first operation and the second operation, it can be known that the first operation is an operation after the second operation, and the first count 3 is less than the second count 5, at this time, the first operation can be executed.

By adopting the above-mentioned method provided by the present disclosure, according to the count of fine-grained areas that have been completed, it can be intuitively determined whether there is an overlap between the first fine-grained area and the second fine-grained area, so that whether to execute the first operation can be determined, which can simplify the determination process and improve the execution efficiency of the processor.

In a possible implementation method, the target storage area may include an operable area and an inoperable area. The step S13d may include: when there is a second operation and the first fine-grained area in the target storage area currently targeted by the first operation is located in the operable area, determining whether there is an overlap between the first fine-grained area in the target storage area currently targeted by the first operation and the second fine-grained area in the target storage area currently targeted by the second operation.

In a possible implementation method, the target storage area may include one or more inoperable areas, and may also include continuous or discontinuous inoperable areas.

In a possible implementation method, the target storage area may include one or more operable areas, and may also include continuous or discontinuous operable areas, which is not limited in the present disclosure.

In a possible implementation method, when the first operation is an operation for the descriptor, the target storage area of the tensor data indicated by the descriptor can be obtained firstly, and then it is determined whether there is an ongoing second operation for the target storage area; when there is a second operation, it is determined whether the first fine-grained area in the target storage area targeted by the first operation is located in the operable area; and when there is a second operation, and the first fine-grained area in the target storage area targeted by the first operation is located in the operable area, then it is determined whether there is an overlap between the first fine-grained area in the target storage area targeted by the first operation and the second fine-grained area in the target storage area targeted by the second operation; and when there is no overlap between the first fine-grained area and the second fine-grained area, the first operation will be executed.

In a possible implementation method, the inoperable area may include areas where operations are prohibited and areas where operations are not prohibited. If the first operation is a writing operation for the descriptor, when part of the tensor data indicated by the descriptor cannot be modified, the storage area of the part of the tensor data can be set as an area where operations are prohibited to avoid accidentally modifying the part of tensor data. If the ongoing second operation is a reading operation (reading-writing operation) to read data before the first operation, one or more fine-grained areas where the second operation is located can be set as an area where operations are not prohibited; after the data in the area where operations are not prohibited has been read by adopting the second operation, the area where operations are not prohibited area can be changed to an operable area. The present disclosure does not limit the classification and division of inoperable area.

In the embodiment, whether the fine-grained area of the first operation is operable can be determined firstly, and then the relationship between the fine-grained areas of different operations may be determined, which improves the efficiency of determination, and protects the specified data to prevent wrong operations. In addition, it is also possible to prohibit reading and writing on a specified space, thereby reserving this space for executing other operations, which further improves the flexibility of the processor when executing fine-grained synchronization.

In a possible implementation method, the inoperable area may be a plurality of fine-grained areas including the second fine-grained area, and the position of the second fine-grained area in the inoperable area is updated with the operating position of the second operation. The operation method of the processor further includes: after the second fine-grained area in the target storage area targeted by the second operation is moved out of the inoperable area, updating the position of the inoperable area.

In other words, the inoperable area (a plurality of fine-grained areas including the second fine-grained area) may not be updated with the update of the second fine-grained area in the target storage area targeted by the second operation; after the second fine-grained area in the target storage area is moved out of the inoperable area, the position of the inoperable area is updated. For example, the inoperable area may be R fine-grained areas (R is an integer greater than 1) including the second fine-grained area, and the current inoperable area includes a second fine-grained area to a 2+R-1-th fine-grained area. When R fine-grained areas in the inoperable area have been executed by adopting the second operation, the R fine-grained areas are moved out of the inoperable area, and then the position of the inoperable area is updated with the position of the fine-grained areas targeted by the second operation. The updated inoperable area includes a 2+R-th fine-grained area to a 2+R+R-1-th fine-grained area, where the value of R can be determined arbitrarily according to the demands.

Fig. 6a and Fig. 6b show schematic diagrams of application scenarios of an operation method of a processor according to an embodiment of the present disclosure. As shown in Fig. 6a, a target storage area 30d includes 8 fine-grained areas, where the operable area includes 5 fine-grained areas (a fine-grained area 31d, a fine-grained area 35d, a fine-grained area 36d, a fine-grained area 37d, and a fine-grained area 38d); an inoperable area M0 includes 3 fine-grained areas (a fine-grained area 32d, a fine-grained area 33d, and a fine-grained area 34d). The second fine-grained area in the target storage area 30d currently targeted by the second operation is the fine-grained area 32d.

After the second operation has been executed on the fine-grained area 32d, the second fine-grained area in the target storage area 30d currently targeted by the second operation is the fine-grained area 33d, at this time, the second fine-grained area (the fine-grained area 33d) in the target storage area 30d currently targeted by the second operation is not moved out of the inoperable area, and the position of the inoperable area is not updated. After the second operation has been executed on the fine-grained area 33d, the second fine-grained area in the target storage area 30d currently targeted by the second operation is the fine-grained area 34d, at this time, the second fine-grained area (the fine-grained area 34d) in the target storage area 30d currently targeted by the second operation is not moved out of the inoperable area, and the position of the inoperable area is not updated. After the second operation has been executed on the fine-grained area 34d, the second fine-grained area in the target storage area 30d currently targeted by the second operation is the fine-grained area 35d, at this time, the second fine-grained area (the fine-grained area 35d) in the target storage area 30d currently targeted by the second operation has been moved out of the inoperable area, and then the position of the inoperable area is updated to the fine-grained areas 35d, 36d, and 37d. It should be noted that the present disclosure does not limit the size of the inoperable area.

As shown in Fig. 6b, after the position of the inoperable area is updated, in the target storage area 30d, the operable area includes 5 fine-grained areas (the fine-grained area 31d, the fine-grained area 32d, the fine-grained area 33d, the fine-grained area 34d, and the fine-grained area 38d), and the inoperable area M0 includes 3 fine-grained areas (the fine-grained area 35d, the fine-grained area 36d, and the fine-grained area 37d).

By adopting the above-mentioned method provided by the present disclosure, there is no need to update the position of the inoperable area in real time, which could reduce the overhead of updating the inoperable area.

In a possible implementation method, the inoperable area may include a plurality of fine-grained areas including the second fine-grained area, and the second fine-grained area is located at a set position in the inoperable area, and the position of the inoperable area is updated with the operating position of the second operation.

In other words, when the inoperable area includes a plurality of fine-grained areas including the second fine-grained area, the position of the second fine-grained area in the inoperable area (such as a middle position and a lowest position) can be set, and the position of the inoperable area is updated with the operating position of the second operation.

For example, the inoperable area may include R fine-grained areas including the second fine-grained area, and the current inoperable area includes a second fine-grained area to a 2+R-1-th fine-grained area, and the set position of the second fine-grained area in the inoperable area is the S-th (S≤ R) fine-grained area. After the second operation has been executed on the on the current fine-grained area, the second operation is executed on the next fine-grained area, at this time, the position of the inoperable area is updated with the operating position of the second operation, and the updated inoperable area includes a 2+1-th fine-grained area to a 2+R-th fine-grained area, where the value of R and S may be determined according to requirements. The present disclosure does not limit the count of fine-grained areas included in the inoperable area and the position of the second fine-grained area in the inoperable area.

Fig. 7a and Fig. 7b show schematic diagrams of application scenarios of an operation method of a processor according to an embodiment of the present disclosure. As shown in Fig. 7a, the target storage area 40 includes 8 fine-grained areas, where the operable area includes 5 fine-grained areas (a fine-grained area 41, a fine-grained area 45, a fine-grained area 46, a fine-grained area 47, and a fine-grained area 48), and the inoperable area M1 includes 3 fine-grained areas (a fine-grained area 42, a fine-grained area 43, and a fine-grained area 44). The second fine-grained area in the target storage area 40 currently targeted by the second operation is set as a second fine-grained area located in the inoperable area M1, in other words, the fine-grained area 43.

After the second operation has been executed on the fine-grained area 43, the second fine-grained area in the target storage area 40 currently targeted by the second operation is the fine-grained area 44, at this time, the position of the inoperable area is updated with the operating position of the second operation, so that the second fine-grained area in the target storage area 40 currently targeted by the second operation is located in the second fine-grained area in the inoperable area M1.

As shown in Fig. 7b, after the position of the inoperable area is updated, in the target storage area 40, the operable area includes 5 fine-grained areas (the fine-grained area 41, the fine-grained area 42, the fine-grained area 46, the fine-grained area 47, and the fine-grained area 48), and the inoperable area M1 includes 3 fine-grained areas (the fine-grained area 43, the fine-grained area 44, and the fine-grained area 45).

By adopting the above-mentioned method provided by the present disclosure, the position of the inoperable area can be updated in real time, and the degree of synchronization of fine-grained processing can be improved, thereby further improving the efficiency of data synchronization.

In a possible implementation method, the target storage area may include a circular buffer and storage area. The circular buffer and storage area can be used to store data cyclically.

Fig. 8 shows a schematic diagram of a circular buffer and storage area of an operation method of a processor according to an embodiment of the present disclosure. As shown in Fig. 8, a target storage area 50 includes a circular buffer and storage area 51, and the address of the circular buffer and storage area 51 is start_addr~end_addr.

For example, the second operation is a writing operation, by adopting the second operation, the operands may be written into the circular buffer and storage area 51, and the address pointer *point* starts from pointing to the start address start_addr, and then the data is stored sequentially until the address pointer *point* points to the end address end_addr, in other words, the storage space of the circular buffer 51 is fully occupied, at this time, the address pointer *point* jumps back to start addr to determine whether the address is used by the first operation that needs to be synchronized. After the address is used, the data is stored into this address to cover the original data, and then the address pointer *point* moves downward in turn until the address pointer *point* points to the end_addr, at this time, the data may be covered again, and the above process is repeated.

In the embodiment, the circular buffer and storage area is used to store data, which can save data storage space and improve the utilization of storage space.

In a possible implementation method, the circular buffer and storage area can be divided as a plurality of fine-grained areas. For each fine-grained area, whether the data in the fine-grained area can be covered can be managed through a list or flag bit or other methods. For example, a coverage flag bit can be set to indicate whether the data in the fine-grained area can be covered.

For example, the first operation is a reading operation, and the second operation is a writing operation, in other words, reading is performed after writing. A writing pointer wp and a reading pointer rp can be used to indicate fine-grained areas currently targeted by the second operation and the first operation, respectively. When the coverage flag bit of the second fine-grained area currently targeted by the second operation shows that the data can be covered, the second operation can be executed to write data; after the data writing operation is completed, the coverage flag bit of the second fine-grained area is set to show that the data cannot be covered, then wp becomes wp++; the second fine-grained area currently targeted by the second operation is a next fine-grained area, where if wp>end_addr, then wp=start_addr. When there is no overlap between the first fine-grained area and the second fine-grained area currently targeted by the first operation, and the coverage flag bit of the first fine-grained area shows that the data cannot be covered, the first operation can be executed to read data; after the data writing operation is completed, the coverage flag bit of the first fine-grained area is set to show that the data can be covered, then rp becomes rp++; the first fine-grained area currently targeted by the first operation is a next fine-grained area, where if rp>end_addr, then rp=start_addr.

When there is an overlap between the first fine-grained area and the second fine-grained area, in other words, when rp=wp, the first operation cannot be executed; after the second operation has been executed on the second fine-grained area currently targeted by the second operation, the first operation will be executed.

In the embodiment, the circular buffer and storage area is divided as a plurality of fine-grained areas, so that a plurality of operations can be simultaneously executed on the circular buffer and storage area, thereby improving the processing efficiency of the processor.

In a possible implementation method, the fine-grained area may include a state indicator, and the state indicator may show whether an operation executed on the fine-grained area is completed or not completed.

The operation method of the processor further includes:

a step S14d, when there is no overlap between the first fine-grained area and the second fine-grained area, determining whether the state indicator of the first fine-grained area shows that the operation executed on the first fine-grained area is completed; if the operation executed on the fine-grained area is completed, executing the first operation.

In a possible implementation method, the fine-grained area may include a state indicator, where the state indicator may show whether an operation executed on the fine-grained area is completed or not. For example, the state indicator can be represented by 0 and 1, where 0 represents that the operation executed on the fine-grained area is not completed, 1 represents that the operation executed on the fine-grained area is completed; or 0 represents that the operation executed on the fine-grained area is completed, 1 represents that the operation executed on the fine-grained area is not completed. The present disclosure does not limit the way of representing the state indicator.

In a possible implementation method, the second operation may be executed to set the state indicator of the fine-grained area that has been processed in the target storage area to a completed state, and set the state indicator of the fine-grained area that is not processed or the fine-grained area that is being processed to an incomplete state. And the second operation may be executed to set the state indicator of some fine-grained areas in the fine-grained areas that have been processed to the completed state, and set the state indicator of other fine-grained areas to the incomplete state. For example, when 5 fine-grained areas have been processed in the second operation, the state indicator of the first 3 fine-grained areas can be set to the completed state, and the state indicator of other fine-grained areas can be set to the incomplete state.

In a possible implementation method, when there is an ongoing second operation for the target storage area, for the first fine-grained area currently targeted by the first operation and the second fine-grained area currently targeted by the second operation, whether the first fine-grained area has been processed can be determined after it is determined that there is no overlap between the first fine-grained area and the second fine-grained area; if the first fine-grained area has been processed, the first operation will be executed.

In the embodiment, the fine-grained area may include a state indicator. When there is no overlap between the first fine-grained area and the second fine-grained area, whether the first operation can be executed may be determined according to the state indicator of the first fine-grained area, which can improve the accuracy of data processing while improving the processing efficiency of the processor.

In a possible implementation method, the fine-grained area may include a state indicator, where the state indicator may show whether an operation executed on the fine-grained area is completed or not.

The step S14d further includes: determining whether the state indicator of the first fine-grained area is a completed state; if the state indicator of the first fine-grained area is a completed state, executing the first operation when there is no overlap between the first fine-grained area and the second fine-grained area.

In other words, when there is an ongoing second operation for the target storage area, for the first fine-grained area currently targeted by the first operation and the second fine-grained area currently targeted by the second operation, after the state indicator of the first fine-grained area is determined as the completed state, whether the first operation can be executed may be determined according to whether there is an overlap between the first fine-grained area and the second fine-grained area; if there is no overlap between the first fine-grained area and the second fine-grained area, the first operation will be executed.

In the embodiment, the fine-grained area may include a state indicator, after the state indicator of the first fine-grained area is determined as the completed state, whether the first operation can be executed may be determined according to whether there is an overlap between the first fine-grained area and the second fine-grained area, which can improve the processing efficiency of the processor while improving the accuracy of data processing.

In a possible implementation method, the second operation is an operation for the descriptor.

In other words, the operand of the second operation is the same as the operand of the first operation, that is, the second operation and the first operation are operations for a same descriptor. The storage area of the operand of the second operation completely overlaps with the target storage area. By adopting the method provided in the embodiment, after the target storage area of the tensor data indicated by the descriptor is divided as a plurality of fine-grained areas, two operations for a same descriptor can be executed in parallel without affecting the result of each operation.

In a possible implementation method, when the operand of the second operation is the same as the operand of the first operation, the first fine-grained area and the second fine-grained area can be determined respectively according to the process of the operation.

In a possible implementation method, before the first operation on the target storage area is executed, it is determined whether there is an ongoing second operation on the target storage area, and the first fine-grained area in the target storage area currently targeted by the first operation is the fine-grained area in the target storage area to be processed in the first operation. For example, before the first operation on the target storage area is executed, the first fine-grained area in the target storage area currently targeted by the first operation is usually a first fine-grained area of the target storage area. At this time, the first operation on the first fine-grained area has not been executed, and the second fine-grained area in the target storage area currently targeted by the ongoing second operation may be related to the process of the second operation. If the second operation has just started, the second fine-grained area may also be the first fine-grained area of the target storage area, at this time, there is an overlap between the first fine-grained area and the second fine-grained area. If the second operation has been executed on the first fine-grained area, the second fine-grained area in the target storage area currently targeted is a P-th fine-grained area (P is an integer greater than 1), and there is no overlap between the first fine-grained area and the second fine-grained area.

In a possible implementation method, when determining whether there is an ongoing second operation for the target storage area during the process of the first operation executed on the target storage area, the first fine-grained area can be determined according to the execution process of the first operation, and the second fine-grained area can be determined according to the execution process of the second operation, and then it can be determined whether there is an overlap between the first fine-grained area and the second fine-grained area. When there is no overlap between the first fine-grained area and the second fine-grained area, the first operation will be executed.

In a possible implementation method, if the cycle of the execution process of each operation is the same, it can be determined whether there is an ongoing second operation for the target storage area only before the first operation for the target storage area is executed, and it can be determined whether there is an overlap between the first fine-grained area and the second fine-grained area, where the same cycle means that when the sizes of the fine-grained areas are the same, two operations have the same operation duration for a fine-grained area.

In a possible implementation method, if the cycle of the execution process of each operation is not consistent or cannot be determined whether to be consistent, during the process of the first operation performed on the target storage area, each time after the operation on the first fine-grained area in the target storage area currently targeted is completed, it is determined whether there is an ongoing second operation for the target operation area, and then it is determined whether there is an overlap between the first fine-grained area and the second fine-grained area to determine whether the first operation may continue to be performed.

In the embodiment, when the operand of the second operation is the same as the operand of the first operation, the method provided in the embodiment of the present disclosure may be adopted to realize the parallel execution of two or more operations for a same descriptor; or the fine-grained area currently targeted by each operation may be determined according to the execution process of each operation. When there is no overlap between the first fine-grained area and the second fine-grained area, the first operation will be performed, so that two or more operations for the same descriptor can be executed in parallel without affecting the execution effect of each operation, thereby improving the execution efficiency of the processor.

In a possible implementation method, there is an overlap between the storage area of the operand of the second operation and the target storage area.

In a possible implementation method, when there is an overlap between the storage area of the operand of the second operation and the target storage area, and the second operation is being executed on the overlap, the storage area of the operand of the second operation and the target storage area may be divided as a plurality of fine-grained areas, respectively, or the whole storage area where the target storage area is located may be divided as a plurality of fine-grained areas, and then according to the method provided in the embodiment of the present disclosure, the fine-grained area in the overlap is determined whether the first operation can be performed, so that two operations on the operands whose storage areas have an overlap may be executed in parallel without affecting the execution result of each operation.

In a possible implementation method, when the second operation is an operation for the descriptor, and the descriptor targeted by the second operation is different from the descriptor targeted by the first operation, whether there is an overlap between the storage area of the operand of the second operation with the target storage area can be determined according to whether it is allowed that there is an overlap between the storage areas of tensor data indicated by the descriptor when the descriptor is created.

In a possible implementation method, when the descriptor is created, if the storage areas of the tensor data indicated by the descriptor are not allowed to overlap, when the descriptor targeted by the second operation is different from the descriptor targeted by the first operation, there is no overlap between the storage area of the tensor data indicated by the descriptor targeted by the second operation and the target storage area, and there is no overlap between the fine-grained area of the first operation and the fine-grained area of the second operation, in this way, there is no need to determine the fine-grained areas targeted by operations with different descriptors.

In a possible implementation method, when the descriptor is created, if the storage areas of the tensor data indicated by the descriptor are allowed to overlap, when the descriptor targeted by the second operation is different from the descriptor targeted by the first operation, there may be an overlap between the fine-grained area of the first operation and the fine-grained area of the second operation, at this time, the method provided in the embodiment of the present disclosure can be adopted, so that two operations for different descriptors with an overlap can be executed in parallel.

In the embodiment, when there is an overlap between the storage area of the operand of the second operation and the target storage area, the method provided by the embodiment of the present disclosure can be used to implement parallel execution of two or more operations, thereby improving the execution efficiency of the processor.

In a possible implementation method, the operation method of the processor further includes: dividing the whole storage area where the target storage area is located as a plurality of fine-grained areas.

In a possible implementation method, the target storage area may be a part of the storage area or the whole storage area of the storage device, and the whole storage area may include a plurality of preset fine-grained areas.

For example, the whole storage area where the target storage area is located is RAM1, where RAM1 may include m preset fine-grained areas (m is a positive integer). The target storage area may occupy n (n is a positive integer, and n<=m) fine-grained areas in the RAM1. It should be noted that the target storage area may also include a part of a fine-grained area. In the RAM1, it is assumed that each fine-grained area is a row in the whole storage area RAM1, and each row is 100 bits. The target storage area may include the first (n-1) complete fine-grained areas and part of the last fine-grained area, such as the first 80 bits in the n-th row (the n-th fine-grained area) in RAM1.

In a possible implementation method, when the whole storage area of the storage device is divided as a plurality of fine-grained areas, for any operation on any target storage area in the whole storage area, the fine-grained areas in the target storage area of the tensor data indicated by the descriptor targeted by the first operation may be determined according to the division result of the fine-grained areas of the whole storage area, and the fine-grained areas in the overlap between the storage area of the operand of the second operation and the target storage area may be also determined according to the division result of the fine-grained areas of the whole storage area. There is a fine-grained area with the same size in the storage area of any operand executed by any operation in the whole storage area.

In a possible implementation method, the size and/or quantity of fine-grained areas of the whole storage area can be determined according to hardware characteristics of a storage device; in other words, the size and/or quantity of fine-grained areas of the whole storage area can be determined according to at least one of the hardware computing capability of the storage device and the hardware bandwidth of the storage device.

In the embodiment, the whole storage area where the target storage area is located is divided as a plurality of fine-grained areas, and any operation on any target storage area in the whole storage area may be executed in a same fine-grained size. Different operations may be executed in parallel by adopting the method provided in the embodiment of the present disclosure, which facilitates synchronization, improves the parallelism of operations, and thereby improves the processing efficiency of the processor.

In a possible implementation method, the operation method of the processor further includes:

according to the division information of the first fine-grained area carried in the first operation, dividing the target storage area as a plurality of fine-grained areas; and
according to the division information of the second fine-grained area carried in the second operation, dividing the storage area of the operand of the second operation as a plurality of fine-grained areas.

In a possible implementation method, the division information of the fine-grained areas may be carried in operations, where the division information of the fine-grained areas may include the size and/or quantity of the fine-grained areas. Different operations may carry different division information of the fine-grained areas, and the same type of operation may carry the same different division information of the fine-grained areas. The division information of the fine-grained areas may be carried in a set position of the operand of the operation, and the identification information of whether to execute division of the fine-grained areas can also be carried in the operation code or the operand. The present disclosure does not limit the content and representation methods in the division information of the fine-grained areas.

In a possible implementation method, the target storage area is divided as a plurality of first fine-grained areas according to the division information of the first fine-grained area carried in the first operation. Other areas in the whole storage area where the tensor data indicated by the descriptor targeted by the first operation is located may not be divided as a plurality of fine-grained areas, or may be divided as a plurality of fine-grained areas according to the division information of the fine-grained areas carried in other operations, which is not limited in the present disclosure.

It can be understood that when the operand of the second operation is the same as the tensor data indicated by the descriptor targeted by the first operation, the storage area of the operand of the second operation completely overlaps the target storage area. The division information of the first fine-grained area and the division information of the second fine-grained area may be the same or different. When the division information of the first fine-grained area is different from the division information of the second fine-grained area, the target storage area may be divided as a plurality of fine-grained areas according to the division information of the second fine-grained area at the same time. In other words, different operations may be adopted to divide the target storage area as a plurality of fine-grained areas with different sizes or quantity. At this time, whether there is an overlap between the first fine-grained area and the second fine-grained area can be determined according to the physical address of the first fine-grained area in the target storage area currently targeted by the first operation and the physical address of the second fine-grained area in the target storage area currently targeted by the second operation; and then, the first operation and the second operation may be executed in parallel according to the determination result.

In a possible implementation method, the division information of fine-grained areas carried in each operation may include the size and/or quantity of the fine-grained areas which are determined according to at least one of the area where the operand with preset length is located and the area where the operand with preset dimension is located, so that the division result of the fine-grained areas may be more in line with the type or attribute of the operands of the operations.

In the embodiment, according to the division information of the first fine-grained area carried in the first operation, the target storage area is divided as a plurality of fine-grained areas; and according to the division information of the second fine-grained area carried in the second operation, the storage area of the operand of the second operation is divided as a plurality of fine-grained areas. Division of fine-grained areas according to the division information of the fine-grained areas carried in operations can make the division result of the fine-grained areas more in line with the requirements of each operation, and therefore, operations may be executed in parallel more flexible.

It should be understood that those skilled in the art can divide and set the target storage area as fine-grained areas according to actual conditions, which is not limited in the present disclosure.

In a possible implementation method, the descriptor may be used to indicate the shape of N-dimensional tensor data, where N is an integer greater than or equal to 0, where the content of the descriptor may include at least one shape parameter representing the shape of the tensor data.

In a possible implementation method, the descriptor can be used to indicate the shape of N-dimensional tensor data, where the value of N can be determined according to a count of dimensions (orders) of the tensor data, and can also be set according to the usage of the tensor data. For example, if the tensor data is 3-dimensional tensor data, the value of N is taken as 3 (the value is determined according to the count of dimensions), and the descriptor can be used to indicate the shape (such as offset, size, *etc.)* of the 3-dimensional tensor data in three dimensions. It should be understood that those skilled in the art can set the value of N according to actual needs, which is not limited in the present disclosure.

In a possible implementation method, the descriptor may include an identifier, content, and the like, and the identifier of the descriptor may be used to distinguish the descriptor, for example, the identifier may be used to number the descriptor; and the content of the descriptor may include at least one shape parameter (such as a size of each dimension of the tensor, *etc.*) representing the shape of the tensor data. The present disclosure does not limit the specific parameters included in the content of the descriptor.

In the embodiment, the descriptor can be used to indicate the shape of tensor data, and the relationship among a plurality of pieces of tensor data can be determined through the shape of the tensor data indicated by the descriptor, thereby improving the access efficiency of the processor.

In a possible implementation method, the identifier and content of the descriptor can be stored in the descriptor storage space, where the descriptor storage space can be a storage space in an internal memory (such as a register, an on-chip SRAM, or other medium caches, *etc.*) of the control unit. The target storage area of the tensor data indicated by the descriptor may be a storage space in the internal memory (such as an on-chip cache) of the control unit or a storage space in an external memory (an off-chip memory) connected to the control unit. The data address in the target storage area may be an actual physical address or a virtual address. The present disclosure does not limit a position of the descriptor storage space and a position of the target storage area, and the type of the data address.

In a possible implementation method, the identifier and content of the descriptor and the tensor data indicated by the descriptor can be located in a same area in the internal memory. For example, a continuous area of an on-chip cache can be used to store related content of the descriptor, where an address of the area is ADDR0-ADDR1023. An address ADDR0-ADDR31 can be used to store the identifier of the descriptor, and an address ADDR32-ADDR63 can be used to store the content of the descriptor, and an address ADDR64-ADDR1023 can be used as a data storage space to store the tensor data indicated by the descriptor. The address ADDR is not limited to 1 bit or 1 byte, and is an address unit used to represent an address. Those skilled in the art can determine the storage space and the addresses thereof according to actual situations, which is not limited in the present disclosure.

In a possible implementation method, the identifier and content of the descriptor, and the tensor data indicated by the descriptor can be stored separately in different areas of an internal memory. For example, a register can be used as the descriptor storage space to store the identifier and content of the descriptor, and an on-chip cache can be used as the whole storage area to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register may be used to indicate the identifier of the descriptor. For example, if the serial number of the register is 0, the identifier of the stored descriptor is 0. When the descriptor in the register is valid, an area can be allocated in a caching space (such as creating a tensor cache unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the storage area corresponding to the descriptor may be a fixed address. For example, a separate storage area can be divided as the tensor data, and a start address of each tensor data in the data storage space corresponds to the identifier of the descriptor. In this case, according to the identifier and the corresponding relationship of the descriptor, the target storage area of the tensor data indicated by the descriptor can be directly determined.

In a possible implementation method, the descriptor may be also used to indicate the address of N-dimensional tensor data, where the content of the descriptor may further include at least one address parameter representing the address of the tensor data.

In a possible implementation method, the descriptor may be also used to indicate the address of N-dimensional tensor data, where the address may include, for example, a start address, an address offset, a register address, or other addresses of tensor data. The present disclosure does not limit the type of the address. For example, the address can be a start address of the tensor data, when the data address of the storage area corresponding to the identifier of the descriptor is a fixed address, the start address of the N-dimensional tensor data indicated by the descriptor is a fixed address; when the data address of the storage area corresponding to the identifier of the descriptor is a variable address, the start address of the N-dimensional tensor data indicated by the descriptor can be determined according to a specific storage area, which is not limited in the present disclosure.

In a possible implementation method, the content of the descriptor may also include at least one address parameter representing the address of tensor data. For example, the tensor data is 3-dimensional data, and the descriptor can be used to indicate the address of the tensor data, the content of the descriptor may include an address parameter indicating the address of the tensor data, such as a start physical address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In the embodiment, the descriptor can be used to indicate the address of the tensor data, and the relationship among a plurality of pieces of tensor data can be determined through the shape of the tensor data indicated by the descriptor, thereby improving the access efficiency of the processor.

In a possible implementation method, the address parameter of the tensor data includes a base address of the datum point of the descriptor in the whole storage area of the tensor data.

The shape parameter of the tensor data includes at least one of the followings:
a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the address parameter of the tensor data includes a base address of the datum point of the descriptor in the whole storage area of the tensor data, where the base address may be different according to the change of the datum point. The present disclosure does not limit the selection of the datum point.

In a possible implementation method, the base address may include a start address of the whole storage area. When the datum point of the descriptor is a first data block of the whole storage area, the base address of the descriptor is the start address of the whole storage area. When the datum point of the descriptor is not the first data block in the whole storage area, the base address of the descriptor is the physical address of the data block in the whole storage area.

In a possible implementation method, the shape parameter of the tensor data includes at least one of the followings: a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a 3-dimensional data, the descriptor can use a coordinate (x, y, z) to represent the shape of the tensor data, and the data description position of the tensor data can be represented by the coordinate (x, y , z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

As shown in Fig. 2, a whole storage area 21 stores a piece of 2-dimensional data in a row-first manner, where the whole storage area 21 can be represented by (x, y) (where the x axis extends horizontally to the right, and the y axis extends vertically down), a size in the x axis direction (a size of each row) is ori_x (which is not shown in the figure), a size in the y axis direction (total count of rows) is ori_y (which is not shown in the figure), and a start address PA_start (a base address) of the whole storage area 21 is a physical address of a first data block 22. A data block 23 is tensor data in the whole storage area 21, where an offset 25 of the data block 23 in the x axis direction is represented as offset x, an offset 24 of the data block 23 in the y axis direction is represented as offset_y, the size in the x axis direction is represented as size x, and the size in the y axis direction is represented as size_y.

In a possible implementation method, when the descriptor is used to define the data block 23, the datum point of the descriptor may be a first data block of the whole storage area 21, the base address of the descriptor is the start address PA_start of the whole storage area 21, and then the content of the descriptor of the data block 23 can be determined according to the size ori_x of the whole storage area 21 in the x axis, the size ori_y in the y axis, the offset offset y of the data block 23 in the y axis direction, the offset offset x of the data block 23 in the x axis direction, the size size x in the x axis direction, and the size size_y in the y axis direction.

In a possible implementation method, the following formula (1) can be used to represent the content of the descriptor:

$$\begin{cases} X \quad \text{direction：} \quad \text{ori\_x, offset\_x, size\_x} \\ Y \quad \text{directio：} \quad \text{ori\_y, offset\_y, size\_y} \\ \qquad \text{PA\_start} \end{cases} \qquad (1)$$

It should be understood that although the content of the descriptor represents a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the whole storage area and the position of at least two vertices at diagonal positions in N dimensions relative to the datum point.

For example, the content of the descriptor of the data block 23 in Fig. 2 can be determined according to the base address PA_base of the datum point of the descriptor in the entire storage area and the position of two vertices at diagonal positions relative to the datum point. First, the datum point of the descriptor and the base address PA_base in the whole storage area are determined, for example, a piece of data (for example, a piece of data at position (2, 2)) in the whole storage area 21 is selected as a datum point, and a physical address of the selected data in the whole storage area is used as the base address PA base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 73 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} X \quad \text{direction：} \quad \text{x\_min, x\_max} \\ Y \quad \text{direction：} \quad \text{y\_min, y\_max} \\ \qquad \text{PA\_base} \end{cases} \qquad (2)$$

It should be understood that although the top left vertex and the bottom right vertex at diagonal positions are used to determine the content of the descriptor in the above-mentioned example, those skilled in the art may set at least two specific vertices at diagonal positions according to actual needs, which is not limited in the present disclosure.

In a possible implementation method, the content of the descriptor of the tensor data can be determined according to the base address of the datum point of the descriptor in the whole storage area and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f(x, \ y, \ z) \\ \text{PA\_base} \end{cases} \qquad (3)$$

It should be understood that those skilled in the art can set the mapping relationship between the data description position and the data address according to actual situations, which is not limited in the present disclosure.

In the embodiment, the base address of the tensor data and at least one shape reference can be used to determine the content of the descriptor, so that different descriptors can be used according to actual needs of each operation.

In a possible implementation method, according to the identifier of the descriptor, the position of the descriptor in the descriptor storage space can be determined, and then the content of the descriptor can be obtained from the descriptor storage space; in this way, according to the content of the descriptor, the data address of the tensor data indicated by the descriptor in the whole storage area can be determined, where the determination of the data address can be completed automatically by hardware or be implemented by software. When the content of the descriptor is different, the determination method of the data address of the tensor data indicated by the descriptor in the whole storage area may be different.

For example, when the formula (1) is used to represent the content of the descriptor, the offsets of the tensor data indicated by the descriptor in the whole storage area are offset_x and offset_y, and the size is size_x*size_y, and then a start data address PA1(x,y) of the tensor data indicated by the descriptor in the whole storage area can be determined using the following formula (4):

$$PA1_{(x,y)} = PA\_start + (offset\_y - 1) * ori\_x + offset\_x \qquad (4)$$

For any datum point in the tensor data indicated by the descriptor, the data description position is set to $(x_q, y_q)$, and then the data address $PA2_{(x,y)}$ of the data in the whole storage area can be determined using the following formula (5):

$$PA2_{(x,y)} = PA\_start + (offset\_y + y_q - 1) * ori\_x + (offset\_x + x_q) \qquad (5)$$

It should be understood that those skilled in the art can determine the computation method of the data address according to the actual situation, which is not limited in the present disclosure.

In the embodiment, the content of the descriptor can be obtained according to the identifier of the descriptor; and according to the content of the descriptor, the data address of the tensor data indicated by the descriptor in the whole storage area can be determined; according to the data address, the target storage area of the tensor data indicated by the descriptor can be determined. In this way, the descriptor can be used during the data access process, thereby reducing the complexity of data access and improving the processing efficiency of the processor.

It should be noted that although the operation method of the processor is described above by taking the above-mentioned embodiment as an example, those skilled in the art can understand that the present disclosure does not limit the specific structure of the data processing apparatus. In fact, users can set various steps flexibly according to personal preferences and/or actual application scenarios, as long as the steps conform to the technical solution of the present disclosure.

Fig. 3d shows a block diagram of an operation apparatus of a processor according to an embodiment of the present disclosure. As shown in Fig. 3d, the operation apparatus of the processor includes:

an area determining module 81 configured to obtain a target storage area of tensor data indicated by the descriptor when a first operation is an operation for the descriptor;

an operation determining module 82 configured to determine whether there is an ongoing second operation for the target storage area;

an overlap determining module 83 configured to determine, when there is a second operation, whether there is an overlap between a first fine-grained area in the target storage area currently targeted by the first operation and a second fine-grained area in the target storage area currently targeted by the second operation; and

an executing module 84 configured to execute the first operation when there is no overlap between the first fine-grained area and the second fine-grained area.

In a possible implementation method, the operation apparatus of the processor further includes an execution control module configured to block the first operation when there is an overlap between the first fine-grained area and the second fine-grained area.

In a possible implementation method, at least one of the first operation and the second operation is a writing operation.

In a possible implementation method, the size and/or quantity of fine-grained areas may be determined according to at least one of the area where the data with a preset length is located and the area where the data with a preset dimension is located.

In a possible implementation method, the size and/or quantity of the fine-grained areas may be determined according to at least one of the hardware computing capability and the hardware bandwidth.

In a possible implementation method, the first operation is an operation in a first processing instruction, and the second operation is an operation in a second processing instruction, where the second processing instruction may be a processing instruction prior to the first processing instruction in an instruction queue.

In a possible implementation method, the operation apparatus of the processor further includes a position recording module configured to record a first position information of a first fine-grained area currently operated in the first operation and a second position information of a second fine-grained area currently operated in the second operation.

The executing module 84 includes a first executing sub-module configured to execute the first operation when the first position information is inconsistent with the second position information.

In a possible implementation method, the first position information may include a first count of fine-grained areas that have been processed in the first operation, and the second position information may include a second count of fine-grained areas that have been processed in the second operation.

The first executing sub-module is further configured to execute the first operation when the first operation is an operation after the second operation and the first count is less than the second count.

In a possible implementation method, the target storage area may include an operable area and an inoperable area. The overlap determining module 83 includes a determining sub-module configured to, when there is a second operation and the first fine-grained area in the target storage area currently targeted by the first operation is located in the operable area, determine whether there is an overlap between the first fine-grained area in the target storage area currently targeted by the first operation and the second fine-grained area in the target storage area currently targeted by the second operation.

In a possible implementation method, the inoperable area may include a plurality of fine-grained areas including the second fine-grained area, and the position of the second fine-grained area in the inoperable area is updated with the operating position of the second operation. The operation apparatus of the processor further includes an updating module configured to update the position of the inoperable area after the second fine-grained area in the target storage area targeted by the second operation is moved out of the inoperable area.

In a possible implementation method, the inoperable area may include a plurality of fine-grained areas including the second fine-grained area, and the second fine-grained area is located at a set position in the inoperable area, and the position of the inoperable area is updated with the operating position of the second operation.

In a possible implementation method, the target storage area may include a circular buffer and storage area.

In a possible implementation method, the fine-grained area may include a state indicator, and the state indicator may show whether an operation executed on the fine-grained area is completed or not completed. The executing module 84 includes:

a first state determining sub-module configured to, when there is no overlap between the first fine-grained area and the second fine-grained area, determine whether the state indicator of the first fine-grained area shows that the operation executed on the first fine-grained area is completed; and

a second executing sub-module configured to execute the first operation when the state indicator of the first fine-grained area shows that the operation executed on the first fine-grained area is completed.

In a possible implementation method, the fine-grained area may include a state indicator, and the state indicator may show whether an operation executed on the fine-grained area is completed or not completed. The executing module 84 further includes:

> a second state determining sub-module configured to determine whether the state indicator of the first fine-grained area shows that the operation executed on the first fine-grained area is completed; and
> a third executing sub-module configured to execute the first operation when the state indicator of the first fine-grained area shows that the operation executed on the first fine-grained area is completed, and there is no overlap between the first fine-grained area and the second fine-grained area.

In a possible implementation method, the second operation may be an operation for the descriptor.

In a possible implementation method, there is an overlap between the storage area of the operand of the second operation and the target storage area.

In a possible implementation method, the operation apparatus of the processor further incudes a first setting module configured to divide the whole storage area where the target storage area is located as a plurality of fine-grained areas.

In a possible implementation method, the operation apparatus of the processor further incudes:

> a second setting module configured to divide the target storage area as a plurality of fine-grained areas according to division information of the first fine-grained carried in the first operation; and
> a third setting module configured to divide the storage area of the operand of the second operation as a plurality of fine-grained areas according to division information of the second fine-grained carried in the second operation.

In a possible implementation method, the descriptor may be used to indicate the shape of the N-dimensional tensor data, where N is an integer greater than or equal to 0, where the content of the descriptor may include at least one shape parameter representing the shape of the tensor data.

In a possible implementation method, the descriptor may be also used to indicate the address of N-dimensional tensor data, where the content of the descriptor may further include at least one address parameter representing the address of the tensor data.

In a possible implementation method, the address parameter of the tensor data includes a base address of the datum point of the descriptor in the whole storage area of the tensor data. The shape parameter of the tensor data includes at least one of the followings: a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the present disclosure further provides an artificial intelligence chip including the operation apparatus of the processor.

In a possible implementation method, the present disclosure further provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transfer between the artificial intelligence chip and the external equipment; and the control device is configured to monitor the state of the artificial intelligence chip.

In a possible implementation method, the storage device includes a plurality of groups of storage units, where each group of the storage units is connected with the neural network chip by a bus, and the storage units are DDR SDRAM; the chip includes a DDR controller configured to control data transfer and data storage of each storage unit; and the interface apparatus is a standard PCIE interface.

> A1. An operation method of a processor, comprising:
>
> > when a first operation is an operation for a descriptor, obtaining a target storage area of tensor data indicated by the descriptor;
> > determining whether there is an ongoing second operation for the target storage area;
> > when there is a second operation, determining whether there is an overlap between a first fine-grained area in the target storage area targeted by a first operation and a second fine-grained area in the target storage area targeted by a second operation; and
> > executing the first operation when there is no overlap between the first fine-grained area and the second fine-grained area.

A2. The operation method of the processor of A1, further comprising:

when there is an overlap between the first fine-grained area and the second fine-grained area, blocking the first operation.

A3. The operation method of the processor of A1, wherein

at least one of the first operation and the second operation is a writing operation.

A4. The operation method of the processor of A1, wherein a size and/or quantity of fine-grained areas can be determined according to at least one of an area where the data with preset length is located and an area where the data with preset dimension is located.

A5. The operation method of the processor of A1, wherein the size and/or quantity of the fine-grained areas can be determined according to at least one of a computing capability of hardware and a bandwidth of the hardware.

A6. The operation method of the processor of A1, wherein the first operation is an operation in a first processing instruction, the second operation is an operation in a second processing instruction, and the second processing instruction is a processing instruction prior to the first processing instruction in an instruction queue.

A7. The operation method of the processor of any one of A1-A6, further comprising:

recording a first position information of the first fine-grained area currently operated by the first operation and a second position information of the second fine-grained area currently operated by the second operation; and executing the first operation when there is no overlap between the first fine-grained area and the second fine-grained area, which comprises:

executing the first operation when the first position information is inconsistent with the second position information.

A8. The operation method of the processor of A7, wherein the first position information includes a first count of fine-grained areas that have been processed in the first operation, and the second position information includes a second count of fine-grained areas that have been processed in the second operation, wherein

the first operation is executed when the first position information is inconsistent with the second position information, which includes:

executing the first operation when the first operation is an operation after the second operation, and the first count is less than the second count.

A9. The operation method of the processor of A1, wherein the target storage area includes an operable area and an inoperable area, and when there is the second operation, the determining whether there is an overlap between a first fine-grained area in the target storage area targeted by a first operation and a second fine-grained area in the target storage area targeted by a second operation includes:

when there is the second operation, and the first fine-grained area in the target storage area currently targeted by the first operation is located in the operable area, determining whether there is an overlap between the first fine-grained area in the target storage area currently targeted by the first operation and the second fine-grained area in the target storage area currently targeted by the second operation.

A10. The operation method of the processor of A9, wherein the inoperable area is a plurality of fine-grained areas including the second fine-grained area, and a position of the second fine-grained area in the inoperable area is updated with an operating position of the second operation, wherein the operation method of the processor further includes:

updating a position of the inoperable area after the second fine-grained area in the target storage area targeted by the second operation is moved out of the inoperable area.

A11. The operation method of the processor of A9, wherein the inoperable area includes a plurality of fine-grained areas including the second fine-grained area, and the second fine-grained area is located at a set position in the inoperable area, and the position of the inoperable area is updated with the operating position of the second operation.

A12. The operation method of the processor of A1, wherein the target storage area includes a circular buffer and storage area.

A13. The operation method of the processor of A1, wherein the fine-grained area includes a state indicator, and the state indicator shows whether an operation executed on the fine-grained area is completed or not completed, wherein the executing the first operation when there is no overlap between the first fine-grained area and the second fine-grained area includes:

when there is no overlap between the first fine-grained area and the second fine-grained area, determining whether a state indicator of the first fine-grained area shows that the operation executed on the first fine-grained area is completed;

if the state indicator of the first fine-grained area shows that the operation executed on the first fine-grained area is completed, executing the first operation.

A14. The operation method of the processor of A1, wherein the fine-grained area includes the state indicator, and the state indicator shows whether an operation executed on the fine-grained area is completed or not completed, wherein the executing the first operation when there is no overlap between the first fine-grained area and the second fine-grained area includes:

determining whether the state indicator of the first fine-grained area shows that the operation executed on the first fine-grained area is completed;
if the state indicator of the first fine-grained area shows that the operation executed on the first fine-grained area is completed, executing the first operation when there is no overlap between the first fine-grained area and the second fine-grained area.

A15. The operation method of the processor of A1, wherein the second operation is an operation for the descriptor.
A16. The operation method of the processor of A1, wherein there is an overlap between the storage area of the operand of the second operation and the target storage area.
A17. The operation method of the processor of any one of A1-A16, further comprising:
dividing a whole storage area where the target storage area is located as a plurality of fine-grained areas.
A18. The operation method of the processor of any one of A1-A17, further comprising:

dividing the target storage area as a plurality of fine-grained areas according to division information of the first fine-grained area carried in the first operation; and
dividing the storage area of the operand of the second operation as a plurality of fine-grained areas according to division information of the second fine-grained area carried in the second operation.

A19. The operation method of the processor of A1, wherein the descriptor is used to indicate a shape of N-dimensional tensor data, where N is an integer greater than or equal to 0, wherein
the content of the descriptor includes at least one shape parameter representing the shape of the tensor data.
A20. The operation method of the processor of A19, wherein the descriptor is used to indicate an address of the N-dimensional tensor data, wherein
the content of the descriptor includes at least one address parameter representing the address of the tensor data.
A21. The operation method of the processor of A20, wherein the address parameter of the tensor data includes a base address of a datum point of the descriptor in the whole storage area of the tensor data, wherein the shape parameter of the tensor data includes at least one of the followings:
a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.
A22. An operation apparatus of a processor, comprising:

an area determining module configured to, when a first operation is an operation for a descriptor, obtain a target storage area of tensor data indicated by the descriptor;
an operation determining module configured to determine whether there is an ongoing second operation for the target storage area;
an overlap determining module configured to determine, when there is a second operation, whether there is an overlap between a first fine-grained area in the target storage area currently targeted by the first operation and a second fine-grained area in the target storage area currently targeted by the second operation; and
an executing module configured to execute the first operation when there is no overlap between the first fine-grained area and the second fine-grained area.

A23. The operation apparatus of the processor of A22, further comprising:
an execution control module configured to block the first operation when there is an overlap between the first fine-grained area and the second fine-grained area.
A24. The operation apparatus of the processor of A22, wherein at least one of the first operation and the second operation is a writing operation.
A25. The operation apparatus of the processor of A22, wherein a size and/or quantity of fine-grained areas is determined according to at least one of an area where data with preset length is located and an area where data with preset dimension is located.
A26. The operation apparatus of the processor of A22, wherein the size and/or quantity of the fine-grained areas is determined according to at least one of a hardware computing capability and a hardware bandwidth.

A27. The operation apparatus of the processor of A22, wherein the first operation is an operation in a first processing instruction, the second operation is an operation in a second processing instruction, and the second processing instruction is a processing instruction prior to the first processing instruction in an instruction queue.

A28. The operation apparatus of the processor of any one of A22-A27, further comprising:

a position recording module configured to record a first position information of the first fine-grained area currently operated in the first operation and a second position information of the second fine-grained area currently operated in the second operation,

wherein the executing module includes:

a first executing sub-module configured to execute the first operation when the first position information is inconsistent with the second position information.

A29. The operation apparatus of the processor of A28, wherein the first position information includes a first count of fine-grained areas that have been processed in the first operation, and the second position information includes a second count of fine-grained areas that have been processed in the second operation, wherein

the first executing sub-module is further configured to execute the first operation when the first operation is an operation after the second operation, and the first count is less than the second count.

A30. The operation apparatus of the processor of A22, wherein the target storage area includes an operable area and an inoperable area, and the overlap determining module includes:

a determining sub-module configured to, when there is the second operation and the first fine-grained area in the target storage area currently targeted by the first operation is located in the operable area, determine whether there is an overlap between the first fine-grained area in the target storage area currently targeted by the first operation and the second fine-grained area in the target storage area currently targeted by the second operation.

A31. The operation apparatus of the processor of A30, wherein the inoperable area is a plurality of fine-grained areas including the second fine-grained area, and a position of the second fine-grained area in the inoperable area is updated with an operating position of the second operation, and the operation apparatus of the processor further includes:

an updating module configured to update the position of the inoperable area after the second fine-grained area in the target storage area targeted by the second operation is moved out of the inoperable area.

A32. The operation apparatus of the processor of A30, wherein the inoperable area includes a plurality of fine-grained areas including the second fine-grained area, and the second fine-grained area is located at a set position in the inoperable area, wherein

the position of the inoperable area is updated with the operating position of the second operation.

A33. The operation apparatus of the processor of A22, wherein the target storage area includes a circular buffer and storage area.

A34. The operation apparatus of the processor of A22, wherein the fine-grained area includes a state indicator, and the state indicator shows whether an operation executed on the fine-grained area is completed or not completed, wherein the executing module includes:

a first state determining sub-module configured to, when there is no overlap between the first fine-grained area and the second fine-grained area, determine whether the state indicator of the first fine-grained area shows that the operation executed on the first fine-grained area is completed; and

a second executing sub-module configured to execute the first operation when the state indicator of the first fine-grained area shows that the operation executed on the first fine-grained area is completed.

A35. The operation apparatus of the processor of A22, wherein the fine-grained area includes the state indicator, and the state indicator shows whether the operation executed on the fine-grained area is completed or not completed, wherein the executing module further includes:

a second state determining sub-module configured to determine whether the state indicator of the first fine-grained area shows that the operation executed on the first fine-grained area is completed; and

a third executing sub-module configured to execute the first operation when the state indicator of the first fine-grained area shows that the operation executed on the first fine-grained area is completed and there is no overlap between the first fine-grained area and the second fine-grained area.

A36. The operation apparatus of the processor of A22, wherein the second operation is an operation for the descriptor.

A37. The operation apparatus of the processor of A22, wherein there is an overlap between a storage area of an operand of the second operation and the target storage area.

A38. The operation apparatus of the processor of any one of A22-A37, further comprising:

a first setting module configured to divide a whole storage area where the target storage area is located as a plurality of fine-grained areas.

A39. The operation apparatus of the processor of any one of A22-A37, further comprising:

a second setting module configured to divide the target storage area as a plurality of fine-grained areas according to division information of the first fine-grained carried in the first operation; and
a third setting module configured to divide the storage area of the operand of the second operation as a plurality of fine-grained areas according to division information of the second fine-grained carried in the second operation.

A40. The operation apparatus of the processor of A22, wherein the descriptor is used to indicate a shape of N-dimensional tensor data, where N is an integer greater than or equal to 0, wherein content of the descriptor includes at least one shape parameter representing the shape of the tensor data.

A41. The operation apparatus of the processor of A40, wherein the descriptor is also used to indicate an address of N-dimensional tensor data, where the content of the descriptor further includes at least one address parameter representing the address of the tensor data.

A42. The operation apparatus of the processor of A41, wherein the address parameter of the tensor data includes a base address of a datum point of the descriptor in the whole storage area of the tensor data, wherein the shape parameter of the tensor data includes at least one of the followings:

a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A43. An artificial intelligence chip, comprising the operation apparatus of the processor of any one of A22-A42.

A44. An electronic device, comprising the artificial intelligence chip of A43.

A45. A board card, comprising a storage device, an interface apparatus, a control device, and the artificial intelligence chip of A43, wherein

the artificial intelligence chip is connected to the storage device, the control device, and the interface apparatus, respectively;

the storage device is configured to store data;

the interface apparatus is configured to implement data transfer between the artificial intelligence chip and an external equipment; and

the control device is configured to monitor a state of the artificial intelligence chip.

A46. The board card of A45, wherein the storage device includes a plurality of groups of storage units, wherein each group of the storage units is connected with a neural network chip by a bus, and the storage units are DDR SDRAM; the chip includes a DDR controller configured to control data transfer and data storage of each storage unit; and the interface apparatus is a standard PCIE interface.

As the complexity of artificial intelligence algorithms continues to increase, the amount of data that need to be processed and data dimensions are increasing, which usually requires multi-core and/or multi-chip for data processing. In the process of data synchronization among cores or chips, the synchronization method adopting related technologies has higher overhead and lower processing efficiency.

According to the embodiment of the present disclosure, a data synchronization method is provided. Fig. 1e shows a flowchart of a data synchronization method according to an embodiment of the present disclosure. The data synchronization method is applied to a processor, where the processor may include a general-purpose processor (such as a CPU (central processing unit), a GPU (graphics processor)) and a dedicated processor (such as an AI processor, a scientific computing processor, or a digital signal processing, *etc.*). This disclosure does not limit the type of the processor.

As shown in Fig. 1e, the data synchronization method includes:

a step S11e, when a decoded processing instruction is a descriptor synchronization instruction, obtaining the synchronization information of the descriptor in the processing instruction, where the descriptor is used to indicate the shape of the tensor data to be synchronized; and
a step S12e, executing the processing instruction according to the synchronization information.

For example, the tensor data to be synchronized may include N-dimensional tensor data (N is an integer greater than or equal to 0, for example, N=1, 2, or 3), where the tensor may have various forms of data composition, and the tensor may have different dimensions. For example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix}$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship among a plurality of pieces of tensor data cannot be determined, as a result, the processor is inefficient in accessing tensor data, and the data synchronization is also complicated.

In this case, a descriptor (tensor descriptor) may be set to indicate the shape of the tensor (N-dimensional tensor data), where the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.*) of the 3-dimensional tensor data in three dimensions. It should be understood that those skilled in the art can set the value of N according to actual needs, which is not limited in the present disclosure.

In a possible implementation method, the descriptor may include an identifier, content, and the like, where the identifier of the descriptor may be used to distinguish the descriptor, for example, the identifier may be used to number the descriptor; and the content of the descriptor may include at least one shape parameter (such as a size of each dimension of the tensor, *etc.*) representing the shape of the tensor data, and may also include at least one address parameter (such as a base address of a datum point) representing an address of the tensor data. The present disclosure does not limit the specific parameters included in the content of the descriptor.

By using the descriptor to indicate tensor data, the shape of tensor data can be represented, and related information such as the relationship among a plurality of pieces of tensor data can be determined, so as to improve the access efficiency of tensor data and reduce the complexity of data synchronization.

During data processing, data synchronization for the tensor data in a current processor A1 (such as a processor core of an artificial intelligence chip) may be executed, for example, an operation result of another processor A0 may be synchronized to the processor A1 as input data of another operation. In this case, the descriptor synchronization instruction may be used to achieve data synchronization. In other words, when there is tensor data to be synchronized, a sender for data synchronization (such as another processor A0) may send the descriptor synchronization instruction to the processor A1 to instruct the current processor A1 to synchronize the data.

In a possible implementation method, before the step S11e, the data synchronization method further includes: decoding the received processing instruction to obtain a decoded processing instruction, where the decoded processing instruction includes an operation code used to instruct to perform synchronization processing.

For example, when the current processor A1 receives the processing instruction, the processor A1 decodes (parses) the processing instruction to obtain the decoded processing instruction. The decoded processing instruction may include at least an operation code to indicate a processing type corresponding to the processing instruction and an operand to indicate data to be processed. The processing instruction may include a data access instruction, an operation instruction, a descriptor management instruction, a synchronization instruction, and/or the like. The present disclosure does not limit the specific type of the processing instruction and the specific manner of decoding.

In a possible implementation method, if the operation code of the decoded processing instruction instructs to execute descriptor synchronization processing, the processing instruction is determined to be a descriptor synchronization instruction. When the decoded processing instruction is a descriptor synchronization instruction, the processor may obtain the synchronization information of the descriptor in the processing instruction in the step S11e to synchronize the tensor data to be synchronized indicated by the descriptor.

In a possible implementation method, the synchronization information of the descriptor may include at least one of the identifier of the descriptor and the content of the descriptor. If a descriptor indicating the tensor data to be synchronized has been registered in the processor and does not need to be modified, the synchronization information in the descriptor synchronization instruction may only include the identifier of the descriptor (for example, when the identifier of the descriptor is TR1, the descriptor synchronization instruction is represented as Send TR1), and the processor may synchronize the tensor data according to the identifier (TR1) of the descriptor in the processing instruction. If the descriptor indicating the tensor data to be synchronized is not registered in the processor, the synchronization information in the descriptor synchronization instruction may include the content of the descriptor, and the processor may synchronize the tensor data according to the content of the descriptor in the processing instruction. If the descriptor indicating the tensor data to be synchronized has been registered in the processor and the content of the descriptor needs to be modified, the synchronization information in the descriptor synchronization instruction may include both the identifier of the descriptor and the content of the descriptor, and the processor may synchronize the tensor data according to the identifier of the descriptor and the content of the descriptor in the processing instruction. The present disclosure does not limit the specific content of the synchronization information of the descriptor.

In a possible implementation method, after the synchronization information of the descriptor synchronization instruction is obtained, the processor may execute the processing instruction (the descriptor synchronization instruction) according to the synchronization information in the step S12e to achieve the synchronization of the tensor data.

According to the data synchronization method provided in the embodiment of the present disclosure, by setting a descriptor indicating the shape of tensor data, when the decoded processing instruction is a descriptor synchronization instruction, the synchronization information of the descriptor in the processing instruction may be obtained, and the processing instruction may be executed according to the synchronization information of the descriptor to achieve the synchronization of the tensor data, thereby reducing synchronization overhead, and improving the efficiency of data synchronization.

In a possible implementation method, the step S12e may include: when the storage area of the tensor data indicated by the descriptor is in a shared storage space, obtaining the tensor data from the shared storage space according to the synchronization information.

For example, a plurality of processors (a plurality of cores) may have a shared storage space, such as an off-chip memory that can be accessed by both the processor A0 and the processor A1. The shared storage space may be a storage space in which a plurality of cores (a plurality of processors) can access data, or a storage space in which some cores (some processors) can access data. The shared storage space for cores may be preset, and the present disclosure does not limit the setting method of the shared storage space.

In a possible implementation method, if the storage address of the tensor data to be synchronized is in the shared storage space, since the current processor A1 may also access data from the shared storage space, the processor A1 can directly read the tensor data according to the content of the descriptor to synchronize the tensor data.

In a possible implementation method, if the synchronization information in the descriptor synchronization instruction only includes the identifier of the descriptor, for example, when the identifier of the descriptor is TR1, and the descriptor synchronization instruction is represented as Send TR1, the processor A1 may internally search for the content of the descriptor corresponding to the identifier of the descriptor, and then obtain the tensor data to be synchronized from the shared storage space according to the content of the descriptor, thereby achieving the entire synchronization process.

In a possible implementation method, if the synchronization information in the descriptor synchronization instruction includes the identifier of the descriptor and the content of the descriptor, the processor A1 may search for a descriptor corresponding to an identifier of a descriptor, and update original content of the descriptor according to the content of the descriptor in the descriptor synchronization instruction; and then the processor A1 may further obtain the tensor data to be synchronized from the shared storage space according to the updated content of the descriptor, thereby achieving synchronization of the tensor data.

In a possible implementation method, if the descriptor synchronization instruction only includes the content of the descriptor, the processor A1 may register a descriptor indicating the tensor data to be synchronized according to the content of the descriptor, and obtain the tensor data to be synchronized from the shared storage space according to the content of the descriptor, thereby achieving synchronization of tensor data.

In this way, according to the synchronization information of the descriptor in the descriptor synchronization instruction, the tensor data to be synchronized can be obtained, and the synchronization of the tensor data can be realized, so as to avoid unnecessary data transfer, reduce the times of accessing the tensor data, and improve the processing efficiency of synchronization.

In a possible implementation method, a plurality of processors (a plurality of cores) may have a shared storage space which is dedicated to store the synchronized data. The storage space of synchronized data may be the above-mentioned shared storage space, or a part of the shared storage space, or a storage space different from the shared storage space, which is not limited in the present disclosure.

In a possible implementation method, the storage space of synchronized data may be a storage space in which a plurality of cores (a plurality of processors) can access synchronized data, or a storage space in which part of cores (part of processors) can access synchronized data, which is not limited in the present disclosure.

In a possible implementation method, if the synchronization information in the descriptor synchronization instruction includes the address of the content of the descriptor of the tensor data to be synchronized in a storage space of the synchronized data, the processor A1 may obtain the content of the descriptor of the tensor data to be synchronized from the storage space of the synchronized data according to the address, and then register the descriptor according to the content of the descriptor and determine the data address of the tensor data to be synchronized, after that, the processor A1 may obtain the tensor data to be synchronized, thereby achieving the entire synchronization process.

In this way, the data transfer between processors during synchronization can be further reduced, and the processing efficiency of synchronization can be improved.

In a possible implementation method, the identifier and content of the descriptor can be stored in the descriptor storage space, which may be a storage space in an internal memory of the processor (such as a register, an on-chip SRAM, or other medium cache, *etc.*). The data storage space of the tensor data indicated by the descriptor may be a storage space in an internal memory of the processor (*e.g.*, an on-chip cache) or a storage space in an external memory (an off-chip memory) connected to the processor. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area. For example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address unit used to represent an address. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register can be used as the descriptor storage space to store the identifier and content of the descriptor, and an on-chip cache can be used as the data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of a register is 0, the identifier of the stored descriptor is 0. When the descriptor in the register is valid, an area can be allocated in a caching space (such as creating a tensor caching unit for each tensor data in the cache) according to the size of the tensor data indicated by the descriptor for storing the tensor data. It should be understood that a preset caching space may be also used to store the tensor data, which is not limited in the present disclosure.

**In** a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be provided for the tensor data, and a start address of each tensor data in the data storage space corresponds to the identifier of the descriptor. In this case, the processor can determine the data address of the tensor data according to the content of the descriptor.

In a possible implementation method, when the data address of the data storage space corresponding to the descriptor is a variable address, the descriptor may be also used to indicate the address of N-dimensional tensor data, where the content of the descriptor may further include at least one address parameter representing the address of the tensor data. For example, if the tensor data is a piece of 3-dimenisonal data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space of the tensor data, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is not the first data block in the data storage space, the base address of the descriptor is the physical address of the data block in the data storage space.

In a possible implementation method, the shape parameter of the tensor data includes at least one of the followings: a size of the data storage space of the tensor data in at least one of N dimensions, a size of the storage area in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a piece of 3-dimensional data, the descriptor can use a coordinate (x, y, z) to represent the shape of the tensor data, and the data description position of the tensor data can be represented by the coordinate (x, y , z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

Fig. 2 shows a schematic diagram of a data storage space according to an embodiment of the present disclosure. As shown in Fig. 2, a data storage space 21 stores a piece of 2-dimensional data in a row-first manner, where the data storage space 21 can be represented by (x, y) (where the x axis extends horizontally to the right, and the y axis extends vertically down), a size in the x axis direction (a size of each row) is ori x (which is not shown in the figure), a size in the y axis direction (total count of rows) is ori_y (which is not shown in the figure), and a start address PA_start (a base address) of the data storage space 21 is a physical address of a first data block 22. A data block 23 is part of the data in the data storage space 21, where an offset 25 of the data block 23 in the x axis direction is represented as offset x, an offset 24 of the data block 23 in the y axis direction is represented as offset_y, the size in the x axis direction is represented as size x, and the size in the y axis direction is represented as size_y.

In a possible implementation method, when a descriptor is used to define the data block 23, the datum point of the descriptor may be a first data block of the data storage space 21, the base address of the descriptor is the start address PA_start of the data storage space 21, and then the content of the descriptor of the data block 23 can be determined according to the size ori x of the data storage space 21 in the x axis, the size ori_y in the y axis, the offset offset y of the data block 23 in the y axis direction, the offset offset x of the data block 23 in the x axis direction, the size size x in the x axis direction, and the size size_y in the y axis direction.

In a possible implementation method, the following formula (1) can be used to represent the content of the descriptor:

$$\begin{cases} \text{X direction：ori\_x, offset\_x, size\_x} \\ \text{Y direction：ori\_y, offset\_y, size\_y} \\ \qquad \text{PA\_start} \end{cases} \qquad (1)$$

It should be understood that although the descriptor describes a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the data storage space and the position of at least two vertices at diagonal positions in N dimensions relative to the datum point.

For example, the content of the descriptor of the data block 23 in Fig. 2 can be determined according to the base address PA_base of the datum point of the descriptor in the data storage space and the position of two vertices at diagonal positions relative to the datum point. First, the datum point of the descriptor and the base address PA_base in the data storage space are determined, for example, a piece of data (such as a piece of data at position (2, 2)) in the data storage space 21 is selected as a datum point, and a physical address of the selected data in the data storage space is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x_max, y_max); and then the content of the descriptor of the data block 23 can be determined according to the base address PA_base, the relative position (x_min, y_min) of the top left vertex, and the relative position (x_max, y_max) of the bottom right vertex.

In a possible implementation method, the following formula (2) can be used to represent the content of the descriptor:

$$\begin{cases} \text{X direction：x\_min, x\_max} \\ \text{Y direction：y\_min, y\_max} \\ \qquad \text{PA\_base} \end{cases} \qquad (2)$$

It should be understood that although the top left vertex and the bottom right vertex are used to determine the content of the descriptor in the above-mentioned example, those skilled in the art may set at least two specific vertices according to actual needs, which is not limited in the present disclosure.

In a possible implementation method, the content of the descriptor of the tensor data can be determined according to the base address of the datum point of the descriptor in the data storage space and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f(x, \ y, \ z) \\ PA\_base \end{cases} \qquad (3)$$

It should be understood that those skilled in the art can set the mapping relationship between the data description position and the data address according to actual situations, which is not limited in the present disclosure.

When the formula (1) is used to represent the content of the descriptor, for any datum point in the tensor data, the data description position is set to $(x_q, y_q)$, and then the data address $PA2_{(x,y)}$ of the data in the data storage space can be determined using the following formula (4):

$$PA2_{(x,y)} = PA\_start + \left( offset\_y + y_q - 1 \right) * ori\_x + \left( offset\_x + x_q \right) \quad (4)$$

By adopting the above-mentioned method provided by the present disclosure, the processor may compute the data address of the tensor data indicated by the descriptor in the data storage space according to the content of the descriptor, and then execute processing (data operation, data synchronization, *etc.*) according to the address, Therefore, the complexity of data access can be reduced, and the processing efficiency of the processor can be improved.

Fig. 3e shows a block diagram of a data synchronization apparatus according to an embodiment of the present disclosure. The data synchronization apparatus may be applied to a processor. As shown in Fig. 3e, the data synchronization apparatus may include:

a synchronization information obtaining module 31e configured to obtain the synchronization information of a descriptor in a processing instruction when a decoded processing instruction is a descriptor synchronization instruction, where the descriptor is used to indicate a shape of tensor data to be synchronized; and
an instruction executing module 32e configured to execute the processing instruction according to the synchronization information.

In a possible implementation method, the synchronization information includes at least one of the followings: an identifier of the descriptor and content of the descriptor.

In a possible implementation method, the instruction executing module includes a data obtaining sub-module configured to, when a storage area of the tensor data indicated by the descriptor is in a shared storage space, obtain the tensor data from the shared storage space according to the synchronization information.

In a possible implementation method, the descriptor is used to indicate the shape of N-dimensional tensor data, where N is an integer greater than or equal to 0. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes a base address of a datum point of the descriptor in a data storage space of the tensor data.

In a possible implementation method, the shape parameter of the tensor data includes at least one of the followings:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the data synchronization apparatus further includes a decoding module configured to decode a received processing instruction to obtain a decoded processing instruction, where the decoded processing instruction includes an operation code which is used to instruct synchronization processing.

In a possible implementation method, the present disclosure further provides an artificial intelligence chip including the data synchronization apparatus.

In a possible implementation method, the present disclosure provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transfer between the artificial intelligence chip and the external equipment; and the control device is configured to monitor the state of the artificial intelligence chip.

A1. A data synchronization method, comprising:

when a decoded processing instruction is a descriptor synchronization instruction, obtaining synchronization information of the descriptor in the processing instruction, where the descriptor is used to indicate a shape of tensor data to be synchronized; and
executing the processing instruction according to the synchronization information.

A2. The data synchronization method of A1, wherein the synchronization information includes at least one of an identifier of the descriptor and content of the descriptor.

A3. The data synchronization method of A1 or A2, wherein the executing the processing instruction according to the synchronization information includes:
when a storage area of the tensor data indicated by the descriptor is in a shared storage space, obtaining the tensor data from the shared storage space according to the synchronization information.

A4. The data synchronization method of any one of A1-A3, wherein the descriptor is used to indicate shape of N-dimensional tensor data, wherein N is an integer greater than or equal to 0, wherein
the content of the descriptor includes at least one shape parameter indicating the shape of the tensor data.

A5. The data synchronization method of A4, wherein the descriptor is also used to indicate an address of the N-dimensional tensor data, wherein the content of the descriptor further includes at least one address parameter indicating the address of the tensor data.

A6. The data synchronization method of A5, wherein the address parameter of the tensor data includes a base address of a datum point of the descriptor in a data storage space of the tensor data.

A7. The data synchronization method of A6, wherein the shape parameter of the tensor data includes at least one of:
a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A8. The data synchronization method of any one of A1-A7, further comprising:
decoding a received processing instruction to obtain a decoded processing instruction, where the decoded processing instruction includes an operation code used to instruct synchronization processing.

A9. A data synchronization apparatus, comprising:

a synchronization information obtaining module configured to obtain synchronization information of a descriptor in a processing instruction when a decoded processing instruction is a descriptor synchronization instruction, where the descriptor is used to indicate a shape of tensor data to be synchronized; and
an instruction executing module configured to execute the processing instruction according to the synchronization information.

A10. The data synchronization apparatus of A9, wherein the synchronization information includes at least one of an identifier of the descriptor and content of the descriptor.

A11. The data synchronization apparatus of A9 or A10, wherein the instruction executing module includes:
a data obtaining sub-module configured to, when a storage area of the tensor data indicated by the descriptor is in a shared storage space, obtain the tensor data from the shared storage space according to the synchronization information.

A12. The data synchronization apparatus of any one of A9-A11, wherein the descriptor is used to indicate shape of N-dimensional tensor data, wherein N is an integer greater than or equal to 0, wherein

the content of the descriptor includes at least one shape parameter indicating the shape of the tensor data.

A13. The data synchronization apparatus of A12, wherein the descriptor is also used to indicate an address of the N-dimensional tensor data, wherein the content of the descriptor further includes at least one address parameter indicating the address of the tensor data.

A14. The data synchronization apparatus of A13, wherein the address parameter of the tensor data includes a base address of a datum point of the descriptor in a data storage space of the tensor data.

A15. The data synchronization apparatus of A14, wherein the shape parameter of the tensor data includes at least one of:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A16. The data synchronization apparatus of any one of A9-A15, further comprising:

a decoding module configured to decode a received processing instruction to obtain a decoded processing instruction, where the decoded processing instruction includes an operation code, which is used to instruct synchronization processing.

A17. An artificial intelligence chip, comprising the data synchronization apparatus of any one of A9-A16.

A18. An electronic device, comprising the artificial intelligence chip of A17.

A19. Aboard card, comprising a storage device, an interface apparatus, a control device, and the artificial intelligence chip of A17, wherein

the artificial intelligence chip is connected to the storage device, the control device, and the interface apparatus, respectively;

the storage device is configured to store data;

the interface apparatus is configured to implement data transfer between the artificial intelligence chip and an external equipment; and

the control device is configured to monitor a state of the artificial intelligence chip.

A20. The board card of A19, wherein the storage device includes a plurality of groups of storage units, wherein each group of the storage units is connected with a neural network chip by a bus, and the storage units are DDR SDRAM; the chip includes a DDR controller configured to control data transfer and data storage of each storage unit; and the interface apparatus is a standard PCIE interface.

With the continuous development of artificial intelligence technology, the amount of data to be processed and data dimensions are increasing. In the related art, a processor usually determines a data address by obtaining a parameter of an instruction, and then determines a dependency relationship between instructions according to the data address. The way of determining the dependency relationship between instructions by first computing the data address of the operand reduces the processing efficiency of the processor.

According to an embodiment of the present disclosure, a data processing method is provided. Fig. If shows a flowchart of a data processing method according to an embodiment of the present disclosure. As shown in Fig. If, the data processing method includes:

in a step S11f, when an operand of a decoded first processing instruction includes an identifier of a descriptor, determining whether the first processing instruction is executable according to the identifier of the descriptor, where the descriptor is used to indicate a shape of a tensor; and

a step S12f, when the first processing instruction is executable, executing data processing corresponding to the first processing instruction according to the identifier of the descriptor.

In a possible implementation method, the data processing method may be applied to a processor, where the processor may include a general-purpose processor (such as a CPU (central processing unit), a GPU (graphics processor)) and a dedicated processor (such as an AI processor, a scientific computing processor, or a digital signal processing, *etc.).* This disclosure does not limit the type of the processor.

In a possible implementation method, the decoded first processing instruction includes an operation code and one or more operands, where the operation code is used to indicate a processing type corresponding to the first processing instruction. The first processing instruction may include a data access instruction, an operation instruction, a descriptor management instruction, a synchronization communication instruction, and/or the like. The present disclosure does not limit the specific type of the first processing instruction.

In a possible implementation method, data to be processed may include N-dimensional tensor data (N is an integer greater than or equal to 0, for example, N=1, 2, or 3), where the tensor may have various forms of data composition, and the tensor may have different dimensions. For example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship between a plurality of pieces of tensor data cannot be determined, as a result, the processor is inefficient in accessing tensor data.

In a possible implementation method, the descriptor can be used to indicate the shape of N-dimensional tensor data, where N is an integer greater than or equal to 0, and the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.*) of the tensor data in three dimensions. It should be understood that those skilled in the art can set the value of N according to actual needs, which is not limited in the present disclosure.

In a possible implementation method, the descriptor may include the identifier and the content, and the identifier of the descriptor may be used to distinguish the descriptor, for example, the identifier may be used to number the descriptor; and the content of the descriptor may include at least one shape parameter (such as a size of each dimension of the tensor, *etc.*) representing the shape of the tensor data, and may also include at least one address parameter (such as a base address of a datum point) representing an address of the tensor data. The present disclosure does not limit the specific parameters included in the content of the descriptor.

In a possible implementation method, the identifier and content of the descriptor can be stored in a descriptor storage space, which may be a storage space in an internal memory of a control unit (such as a register, an on-chip SRAM, or other medium cache, etc.). The data storage space of the tensor data indicated by the descriptor may be a storage space in an internal memory of the control unit (*e.g.,* an on-chip cache) or a storage space in an external memory (an off-chip memory) connected to the control unit. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area. For example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address thereof according to actual situations, which is not limited in the present disclosure. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register may be used as a descriptor storage space to store the identifier and content of the descriptor, and an on-chip cache may be used as a data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of the register is 0, the identifier of the stored descriptor is 0. When the descriptor in the register is valid, an area can be allocated in a caching space (such as creating a tensor caching unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be provided for the tensor data, and a start address of each tensor data in the data storage space corresponds to the identifier of the descriptor. In this case, according to the content of the descriptor, the control unit may determine the data address of the data corresponding to the operand through a tensor control module, and then the control unit executes the first processing instruction.

In a possible implementation method, when the data address of the data storage space corresponding to the identifier of the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is other data than the first data block in the data storage space, the base address of the descriptor is the physical address of the data block in the data storage space.

In a possible implementation method, the shape parameter of the tensor data includes at least one of the followings: a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor. For example, if the tensor data is a 3-dimensional data, the descriptor can use a coordinate (x, y, z) to represent the shape of the tensor data, and the data description position of the tensor data can be represented by the coordinate (x, y , z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

In a possible implementation method, in the step S11f, when the operand of the decoded first processing instruction includes the identifier of the descriptor, it is determined whether the first processing instruction is executable according to the identifier of the descriptor. Whether the identifiers of the descriptors are the same may indicate whether pieces of tensor data indicated by the descriptors are the same. Compared with the storage address of the data, the identifier of the descriptor is simpler, therefore, the process of determining whether there is a pre-order instruction that also operates this descriptor through the identifier of the descriptor is simpler and more efficient than the process of determining whether there is a pre-order instruction through the storage address of the data, where the pre-order instruction may be a processing instruction that has a dependency relationship with the first processing instruction.

In a possible implementation method, whether the first processing instruction is executable may be determined according to the identifier of the descriptor and the preset execution conditions. For example, when a register is used to store the identifier of the descriptor, each register stores a descriptor identifier, and a plurality of instructions accessing a same register can be executed in the order in which the instructions are submitted, therefore, it can be determined whether all the instructions that access the same register prior to the first processing instruction in the instruction queue have been completed; and after all the instructions accessing the same register are executed, it is determined that the first processing instruction is executable. The preset execution conditions may include that a required descriptor is registered first, and the descriptor cannot be released after being used. The present disclosure does not limit the preset execution conditions.

In a possible implementation method, the step S11f may include: according to the identifier of the descriptor, determining whether there is a second processing instruction that has not been executed completely, where the second processing instruction includes a processing instruction that is prior to the first processing instruction in the instruction queue and has the identifier of the descriptor in the operand thereof; and when there is no second processing instruction, determining that the first processing instruction is executable.

In other words, when the operand of the first processing instruction includes the identifier of the descriptor, it can be determined whether there is a second processing instruction that is prior to the first processing instruction in the instruction queue and has the identifier of the descriptor in the operand thereof according to the identifier of the descriptor, and the found second processing instruction is used as a processing instruction having a dependency relationship with the first processing instruction. In the case where the operand of the first processing instruction has identifiers of a plurality of descriptors, the dependency relationship corresponding to each descriptor can be determined respectively, in other words, a pre-instruction corresponding to the identifier of at least one of the plurality of descriptors in the operand is taken as the second processing instruction having a dependency relationship with the first processing instruction.

When there is a second processing instruction that has not been executed completely, the first processing instruction is not executable; when there is no second processing instruction, the first processing instruction is executable.

For example, when the operand of the first processing instruction includes the identifier of at least one descriptor, and when whether there is a second processing instruction that has not been executed completely is determined, the identifiers of all the descriptors included in the operand can be determined, where when there is an identifier of at least one descriptor in the operand of the first processing instruction is the same as an identifier of a descriptor in the operand of the second processing instruction, the first processing instruction has a dependency relationship with the second processing instruction. When the second processing instruction has not been executed completely, the first processing instruction cannot be executed.

For example, when the first processing instruction is ADD, TRIO, TR11, and TR12, and the second processing instruction is ADD, TRIO, TR11, and TR12, the identifiers of the descriptors in the operand of the first processing instruction are the same as the identifiers of the descriptors in the operand of the second operation instruction, then the first processing instruction has a dependency relationship with the second processing instruction. When the second processing instruction has not been executed completely, the first processing instruction cannot be executed.

When the first processing instruction is ADD, TRIO, TR11, and TR13, and the second processing instruction is ADD, TRIO, TR11, and TR12, two identifiers (TRIO and TR11) of the descriptors in the operand of the first processing instruction are the same as two identifiers (TRIO and TR11) of the descriptors in the operand of the second operation instruction, then the first processing instruction has a dependency relationship with the second processing instruction. When the second processing instruction has not been executed completely, the first processing instruction cannot be executed.

When the first processing instruction is ADD, TRIO, TR12, and TR13, and the second processing instruction is ADD, TRIO, TR14, and TR15, one identifier (TRIO) of the descriptor in the operand of the first processing instruction is the same as the identifier (TRIO) of the descriptor in the operand of the second operation instruction, then the first processing instruction has a dependency relationship with the second processing instruction. When the second processing instruction has not been executed completely, the first processing instruction cannot be executed.

When the first processing instruction is ADD, TRIO, TR11, and TR12, and the second processing instruction is ADD, TR13, TR14, and TR15, the identifiers of the descriptors in the operands of the first processing instruction and the second operation instruction are completely different, then there is no dependency between the first processing instruction and the second processing instruction. When the second processing instruction has not been executed completely, the first processing instruction can be executed.

When the first processing instruction is SUM and TRIO, and the second processing instruction is SUM and TRIO, the identifiers of the descriptors in the operand of the first processing instruction are the same as the identifiers of the descriptors in the operand of the second operation instruction, then the first processing instruction has a dependency relationship with the second processing instruction. When the second processing instruction has not been executed completely, the first processing instruction cannot be executed.

In this way, whether an instruction is executable may be determined directly according to the identifier of the descriptor, it is no need to obtain the base address and operation range of the operand involved in the instruction more than once, and the data address and operation range of the operand in the instruction may be obtained by computing, which may reduce the complexity of the processor in determining whether the instruction is executable, simplify the analysis process of the data address of the operand in the instruction, and improve the execution efficiency of the processor.

In a possible implementation method, at least one of the first processing instruction and the second processing instruction includes a writing operation for the descriptor.

For example, the first processing instruction is a reading instruction for the descriptor TR2, and the second processing instruction is also a reading instruction for the descriptor TR2, in other words, neither the first processing instruction nor the second processing instruction includes a writing operation for the descriptor TR2, then the first processing instruction is executable. If the second processing instruction is a writing instruction for the descriptor TR2, when the second processing instruction has not been executed completely, the first processing instruction cannot be executed.

In this way, a descriptor may be operated by a plurality of instructions at the same time, which may improve the execution efficiency of instructions in parallel, thereby improving the processing efficiency of the processor.

In a possible implementation method, the operand of the first processing instruction may include an identifier of at least one descriptor. The step S11f may include: according to the identifier of the at least one descriptor, respectively determining a first state of each descriptor, where the first state includes a registered state or an unregistered state; when the first state of each descriptor is the registered state, determining that the first processing instruction is executable, in other words, when all the descriptors included in the operand are registered, the first processing instruction is executable.

For example, the operand of the first processing instruction includes identifiers (TR3 and TR4) of two descriptors. According to the identifiers TR3 and TR4 of the descriptors, the state of TR3 and TR4 (registered or unregistered) can be determined. When the state of at least one of TR3 and TR4 is the unregistered state, the first processing instruction cannot be executed, at this time, the descriptor registration instruction can be called to register TR3 and/or TR4, and the state of TR3 and/or TR4 may be changed to the registered state after the TR3 and/or TR4 is successfully registered. When both the states of the descriptors TR3 and TR4 are the registered state, the first processing instruction is executable.

In a possible implementation method, the first state of the descriptor can be represented in a plurality of ways. For example, a first flag bit may be set in the descriptor to indicate the first state, for example, the identifier of the descriptor is stored in the register, the highest bit of the register is taken as the first flag bit, and the relevant information of the descriptor is stored starting from the second highest bit. A state correspondence table may be set, and the first state of the descriptor may be written into the state correspondence table. Those skilled in the art can set the way of representing the first state according to actual needs, which is not limited in the present disclosure.

In this way, whether the instruction is executable may be determined according to the first state of the descriptor, so that the complexity of the processor determining whether the instruction is executable may be reduced. Take a release operation as an example, when the descriptor is about to be released, only the state needs to be changed to complete the operation, and there is no need to clear the related storage area of the descriptor; when other descriptors need to use the storage area, it is only needed to cover the area. Take the operation as an example, firstly, the state of the operator can be directly determined; when the operator is invalid, the first state can be used to determine that the instruction cannot be executed, so that the instruction will be blocked without further determination.

In a possible implementation method, the operand of the first processing instruction may include an identifier of at least one descriptor. The step S11f may include: according to the identifier of the at least one descriptor, respectively determining a second state of each descriptor, where the second state includes an operable state or an inoperable state; when the second state of each descriptor is the operable state, determining that the first processing instruction is executable.

For example, in the case where the pre-order instruction of the first processing instruction is performing operation (such as writing or reading) on the descriptor, the current state of the descriptor is an inoperable state, at this time, the first processing instruction cannot be executed, and the first processing instruction maybe be blocked or cached. Conversely, when there is no pre-order instruction performing the operation on the descriptor, the current state of the descriptor may be set to an operable state, at this time, the first processing instruction can be executed.

In a possible implementation method, when there are more than two pre-order instructions performing the operation on the descriptor, the operable state is represented by "0", and the inoperable state is represented by "1". After all the pre-order instructions have performed operations, the flag bit of the second state is "0"; if not all the pre-order instructions have performed operations, the flag bit of the second state is "1". The operable state may be also represented by "0", and the inoperable state may be represented by "N", where N is the count of pre-order instructions performing operations on the descriptor, when each pre-order instruction has performed the operation, the count is updated to N-, until the value of the flag bit is 0, and the second state of the descriptor is the operable state. The present disclosure does not limit the specific representation of the state.

In a possible implementation method, the second state of the descriptor includes an operable state or an inoperable state, where the second state may be represented in many ways. For example, a second flag bit may be set in the descriptor to indicate the second state, or the second state of the descriptor may be written into the state correspondence table. The state correspondence table may be stored in a register, and the determination of the first state and the second state in the state correspondence table may be realized by hardware. Those skilled in the art can set the way of representing the second state according to actual needs, which is not limited in the present disclosure.

In this way, whether the instruction is executable may be determined according to the second state of the descriptor, which reduces the complexity of determining whether the instruction is executable by the processor. Take the operation as an example, whether the second state of the descriptor involved in the instruction is an operable state may be determined directly, while there is no need to obtain the base address and operation range of the operand, thereby obtaining the actual operation area, and then whether there is an overlap between the areas may be determined, finally, whether the instruction is in an operable state will be determined.

In a possible implementation method, when the first processing instruction is determined to be executable in the step S11f, in the step S12f, data processing corresponding to the first processing instruction may be executed according to the identifier of the descriptor. In other words, when the first processing instruction is executable, the data address of the tensor data indicated by the descriptor may be obtained by computing according to the identifier of the descriptor, and then the tensor data is read from the data address, and the data processing corresponding to the first processing instruction will be executed.

In a possible implementation method, according to the identifier of the descriptor, the data address of the tensor data indicated by the descriptor may be directly obtained. For example, when the content of the descriptor is the data address of the tensor data, there is no need to make computation, the data address may be read directly from the descriptor storage space, the tensor data may be read from the data address, and the data processing corresponding to the first processing instruction may be executed.

In a possible implementation method, the step S12f may include: according to the identifier of the descriptor, obtaining content of the descriptor from the descriptor storage space; according to the content of the descriptor, determining the data address of the data corresponding to the operand in the data storage space; and according to the data address, executing data processing corresponding to the first processing instruction.

In the embodiment, when the first processing instruction is executable, the content of the descriptor may be obtained from the descriptor storage space according to the identifier of the descriptor in the operand. In other words, according to the identifier of the descriptor, the position of the descriptor in the descriptor storage space may be determined, and then the content of the descriptor may be obtained from the descriptor storage space. In this way, the complexity of software programming may be reduced, and there is no need to know how the data on the hardware side is stored on the software side, and the actual storage address of the hardware may be computed; at the same time, the complexity of the instruction may be reduced, and there is no need to write the parameters (such as the content of the descriptor) used a plurality of times into the instruction each time it is used.

After the content of the descriptor is obtained, the data address of the data corresponding to the operand in the data storage space may be determined according to the content of the descriptor, where the computation of the data address may be realized automatically by hardware or realized by software. When the content of the descriptor is different, the computation method of the data address of the data corresponding to the operand in the data storage space may also be different. The present disclosure does not limit the computation method of the data address.

For example, when the formula (1) is used to represent the content of the descriptor, for any datum point in the tensor data, the data description position is set to $(x_q, y_q)$, and then the data address $PA2_{(x,y)}$ of the data in the data storage space can be determined using the following formula (4):

$$PA2_{(x,y)} = PA\_start + \left(offset\_y + y_q - 1\right) * ori\_x + \left(offset\_x + x_q\right) \quad (4)$$

After the data address of the data corresponding to the operand in the data storage space is obtained, the data processing corresponding to the first processing instruction may be executed according to the data address.

For example, when the first processing instruction is an operation instruction ADD, A, B, if operands A and B include identifiers TR5 and TR6 of the descriptor, respectively, the contents (such as the shape parameter and address parameter) of the descriptor TR5 and the descriptor TR6 may be obtained from the descriptor storage space according to TR5 and TR6; then, according to the contents of the descriptor TR5 and the descriptor TR6, the data addresses of data A and B are computed, respectively, where the address 1 of data A in the data storage space is ADDR64-ADDR127, and the address 2 of data B in the data storage space is ADDR1023-ADDR1087; and then, data is read from address 1 and address 2 to perform addition (ADD) operation, and finally, the operation result (A+B) is obtained.

In a possible implementation method, the data processing method further includes: when the first processing instruction is a descriptor registration instruction, obtaining the registration parameters of the descriptor in the first processing instruction, where the registration parameters include at least one of followings: the identifier of the descriptor, the shape of the tensor, and the content of the tensor data indicated by the descriptor; determining whether the first processing instruction is executable according to the registration parameters of the descriptor; and executing the first processing instruction when he first processing instruction is executable.

In the embodiment, when the first processing instruction is the descriptor registration instruction, the registration parameters of the descriptor may be obtained from the first processing instruction, where the registration parameters include at least one of followings: the identifier of the descriptor, the shape of the tensor, and the content of the tensor data indicated by the descriptor; whether the first processing instruction is executable may be determined according to the registration parameters of the descriptor, in other words, whether the descriptor can be registered may be determined according to the registration parameters of the descriptor, where when the identifier of the descriptor is occupied or the descriptor storage space is insufficient, the descriptor cannot be successfully registered. It should be understood that those skilled in the art can set the determination of the registration parameters according to the actual situation, which is not limited in the present disclosure.

In a possible implementation method, the determining whether the first processing instruction is executable according to the registration parameters of the descriptor may include: determining that the first processing instruction is executable when at least one of three conditions is satisfied: the identifier of the descriptor is not occupied, the first storage area for storing the content of the descriptor is not occupied, and the second storage area for storing the tensor data indicated by the descriptor is not occupied. In other words, the first processing instruction is executable when the registration parameters satisfy at least one of three conditions: the identifier of the descriptor is not occupied, the first storage area is not occupied, and the second storage area is not occupied.

When the first processing instruction is executable, the first processing instruction (the descriptor registration instruction) is executed. For example, the first storage area in the descriptor storage space for storing the content of the descriptor and the second storage area in the descriptor storage space for storing the content of the tensor data indicated by the descriptor may be determined firstly; then, the content of the descriptor may be determined according to the registration parameters and the second storage area, in other words, the correspondence between the descriptor and the second storage area may be established; and then, the content of the descriptor is stored in the first storage area to complete the registration of the descriptor.

In a possible implementation method, the data processing method further includes: when the first processing instruction is a descriptor release instruction, determining whether there is a fourth processing instruction that has not been executed according to the identifier of the descriptor in the first processing instruction, where the fourth processing instruction is a processing instruction in the instruction queue and the operand thereof includes the identifier of the descriptor; executing the first processing instruction when there is no fourth processing instruction that has not been executed.

In the embodiment, when the first processing instruction is the descriptor release instruction, it can be determined according to the identifier of the descriptor whether there is a fourth processing instruction whose operand includes the identifier of the descriptor in the instruction queue may be determined according to the identifier of the descriptor. When there is a fourth processing instruction that has not been executed, the first processing instruction cannot be executed; when there is no fourth processing instruction that has not been executed, the first processing instruction (the descriptor release instruction) will be executed, at this time, the storage area of the descriptor in the descriptor storage space and the storage area of the data indicated by the descriptor in the data storage space may be released respectively.

For example, when the first processing instruction is a descriptor release instruction, and the identifier of the released descriptor is TR7, a fourth processing instruction whose operand includes TR7 in the instruction queue may be looked up firstly. For example, when there are two fourth processing instructions in the instruction queue: an operation instruction and a reading instruction for TR7, whether the two fourth processing instructions (the operation instruction and the reading instruction for TR7) have been executed may be determined, where when both the two fourth processing instructions have not been executed, the first processing instruction (the descriptor release instruction) cannot be executed; when both the two fourth processing instructions have been executed, the first processing instruction is executable. After that, the first processing instruction (the descriptor release instruction) is executed to release the storage area of TR7 in the descriptor storage space and the storage area of the data indicated by TR6 in the data storage space, respectively.

In a possible implementation method, when the first processing instruction is the descriptor release instruction, whether the first state of the descriptor is registered state may be determined according to the identifier of the descriptor. When the first state of the descriptor is registered state, the first processing instruction (the descriptor release instruction) is executable; when the first state of the descriptor is not registered state, the first processing instruction (the descriptor release instruction) cannot be executed. In other words, when the descriptor in the operand is in the registered state, the descriptor release instruction can be executed.

In a possible implementation method, the data processing method further includes: when the first processing instruction is non-executable, blocking or caching the first processing instruction. In other words, when the first processing instruction is non-executable, the first processing instruction may be blocked, and the execution of the first processing instruction and other subsequent instructions may be suspended until the second processing instruction is executed completely, and then the first processing instruction and other subsequent instructions may be executed; or the first processing instruction may be cached, the first processing instruction may be stored in a preset caching space without affecting the execution of other instructions, after the execution of the second processing instruction is completed, the first processing instruction in the caching space will be executed. The present disclosure does not limit the processing method when the first processing instruction is non-executable.

According to the data processing method provided in the embodiment of the present disclosure, when the operand of the decoded processing instruction includes the identifier of the descriptor, whether the instruction is executable may be determined according to the identifier of the descriptor, and when the instruction is executable, the data processing corresponding to the instruction may be executed according to the identifier of the descriptor, therefore, the complexity of the processor to determine whether the instruction is executable may be reduced, and the processing efficiency of the processor may be improved.

It should be noted that although the above-mentioned embodiment is used as an example to introduce the data processing method as described above, those skilled in the art can understand that the present disclosure should not be limited thereto. In fact, users can flexibly set each step according to personal preference and/or actual application scenarios, as long as it conforms to the technical solution of the present disclosure.

Fig. 3f shows a block diagram of a data processing apparatus according to an embodiment of the present disclosure. As shown in Fig. 3f, the data processing apparatus may include:

a determining module 3 If configured to determine, when an operand of a decoded first processing instruction includes an identifier of a descriptor, whether the first processing instruction is executable according to the identifier of the descriptor, where the descriptor is used to indicate a shape of a tensor; and

an executing module 32f configured to execute, when the first processing instruction is executable, data processing corresponding to the first processing instruction according to the identifier of the descriptor.

In a possible implementation method, the executing module 32f includes: a content obtaining sub-module configured to obtain the content of the descriptor from the descriptor storage space according to the identifier of the descriptor; an address determining sub-module configured to determine the data address of the data corresponding to the operand in the data storage space according to the content of the descriptor; and a first executing sub-module configured to execute data processing corresponding to the first processing instruction according to the data address.

In a possible implementation method, the determining module 3 If includes: an instruction determining sub-module configured to determine whether there is a second processing instruction that has not been executed completely according to the identifier of the descriptor, where the second processing instruction includes a processing instruction that is prior to the first processing instruction in the instruction queue and has the identifier of the descriptor in the operand thereof; and a first execution determining sub-module configured to determine that the first processing instruction is executable when there is no the second processing instruction.

In a possible implementation method, at least one of the first processing instruction and the second processing instruction includes a writing operation for the descriptor.

In a possible implementation method, the operand of the first processing instruction includes an identifier of at least one descriptor, where the determining module 3 If includes: a first state determining sub-module configured to determine, according to the identifier of the at least one descriptor, a first state of each descriptor, where the first state includes a registered state or an unregistered state; and a second execution determining sub-module configured to determine, when the first state of each descriptor is the registered state, that the first processing instruction is executable.

In a possible implementation method, the operand of the first processing instruction includes an identifier of at least one descriptor, where the determining module 3 If includes: a second state determining sub-module configured to determine, according to the identifier of the at least one descriptor, a second state of each descriptor, where the second state includes an operable state or an inoperable state; and a third execution determining sub-module configured to determine, when the second state of each descriptor is the operable state, that the first processing instruction is executable.

In a possible implementation method, the data processing apparatus further includes: a release determining module configured to determine, when the first processing instruction is a descriptor release instruction, whether there is a fourth processing instruction that has not been executed according to the identifier of the descriptor in the first processing instruction, where the fourth processing instruction is a processing instruction in the instruction queue and the operand thereof includes the identifier of the descriptor; and a release executing module configured to execute the first processing instruction when there is no fourth processing instruction that has not been executed.

In a possible implementation method, the data processing apparatus further includes: a parameter obtaining module configured to obtain, when the first processing instruction is a descriptor registration instruction, the registration parameters of the descriptor in the first processing instruction, where the registration parameters include at least one of followings: the identifier of the descriptor, the shape of the tensor, and the content of the tensor data indicated by the descriptor; a registration determining module configured to determine whether the first processing instruction is executable according to the registration parameters of the descriptor; and a registration executing module configured to execute the first processing instruction when the first processing instruction is executable.

In a possible implementation method, the registration determining module includes a condition determining sub-module configured to determine that the first processing instruction is executable when at least one of three conditions is satisfied: the identifier of the descriptor is not occupied, the first storage area for storing the content of the descriptor is not occupied, and the second storage area for storing the tensor data indicated by the descriptor is not occupied.

In a possible implementation method, the data processing apparatus further includes an execution control module configured to block or cache, when the first processing instruction is non-executable, the first processing instruction.

In a possible implementation method, the descriptor is used to indicate the shape of N-dimensional tensor data, where N is an integer greater than or equal to 0. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes the base address of the datum point of the descriptor in the data storage space of the tensor data. The shape parameter of the tensor data includes at least one of the followings: a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the present disclosure further provides an artificial intelligence chip including the above-mentioned data processing apparatus.

A1. A data processing method, comprising:

when an operand of a decoded first processing instruction includes an identifier of a descriptor, determining whether the first processing instruction is executable according to the identifier of the descriptor, where the descriptor is used to indicate a shape of a tensor; and
when the first processing instruction is executable, executing data processing corresponding to the first processing instruction according to the identifier of the descriptor.

A2. The data processing method of A1, wherein the executing data processing corresponding to the first processing instruction according to the identifier of the descriptor includes:

according to the identifier of the descriptor, obtaining the content of the descriptor from the descriptor storage space;
according to the content of the descriptor, determining the data address of the data corresponding to the operand in the data storage space; and
according to the data address, executing data processing corresponding to the first processing instruction.

A3. The data processing method of A1, wherein the determining whether the first processing instruction is executable according to the identifier of the descriptor includes:

according to the identifier of the descriptor, determining whether there is a second processing instruction that has not been executed completely, where the second processing instruction includes a processing instruction that is prior to the first processing instruction in the instruction queue and has the identifier of the descriptor in the operand thereof; and
when there is no the second processing instruction, determining that the first processing instruction is executable.

A4. The data processing method of A3, wherein at least one of the first processing instruction and the second processing instruction includes a writing operation for the descriptor.

A5. The data processing method of A1, wherein the operand of the first processing instruction includes an identifier of at least one descriptor, wherein the determining whether the first processing instruction is executable according to the identifier of the descriptor includes:

according to the identifier of the at least one descriptor, respectively determining a first state of each descriptor, where the first state includes a registered state or an unregistered state; and
when the first state of each descriptor is the registered state, determining that the first processing instruction is executable,

A6. The data processing method of A1, wherein the operand of the first processing instruction includes an identifier of at least one descriptor, wherein the determining whether the first processing instruction is executable according to the identifier of the descriptor includes:

according to the identifier of the at least one descriptor, respectively determining a second state of each descriptor, where the second state includes an operable state or an inoperable state; and
when the second state of each descriptor is the operable state, determining that the first processing instruction is executable.

A7. The data processing method of any one of A1-A6, further comprising:

> when the first processing instruction is a descriptor release instruction, determining whether there is a fourth processing instruction that has not been executed according to the identifier of the descriptor in the first processing instruction, where the fourth processing instruction is a processing instruction in the instruction queue and the operand thereof includes the identifier of the descriptor; and
> executing the first processing instruction when there is no fourth processing instruction that has not been executed.

A8. The data processing method of any one of A1-A7, further includes:

> when the first processing instruction is a descriptor registration instruction, obtaining the registration parameters of the descriptor in the first processing instruction, where the registration parameters include at least one of followings: the identifier of the descriptor, the shape of the tensor, and the content of the tensor data indicated by the descriptor;
> determining whether the first processing instruction is executable according to the registration parameters of the descriptor; and
> executing the first processing instruction when he first processing instruction is executable.

A9. The data processing method of A8, wherein the determining whether the first processing instruction is executable according to the registration parameters of the descriptor includes:
determining that the first processing instruction is executable when at least one of three conditions is satisfied: the identifier of the descriptor is not occupied, the first storage area for storing the content of the descriptor is not occupied, and the second storage area for storing the tensor data indicated by the descriptor is not occupied.

A10. The data processing method of any one of A1-A9, further comprising:
when the first processing instruction is non-executable, blocking or caching the first processing instruction.

A11. The data processing method of A1, wherein the descriptor is used to indicate the shape of N-dimensional tensor data, where N is an integer greater than or equal to 0, wherein
the content of the descriptor includes at least one shape parameter indicating the shape of the tensor data.

A12. The data processing method of A11, wherein the descriptor is also used to indicate the address of N-dimensional tensor data, where the content of the descriptor further includes at least one address parameter indicating the address of the tensor data.

A13. The data processing method of A12, wherein the address parameter of the tensor data includes the base address of the datum point of the descriptor in the data storage space of the tensor data, wherein the shape parameter of the tensor data includes at least one of the followings:
a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A14. A data processing apparatus, comprising:

> a determining module configured to determine, when an operand of a decoded first processing instruction includes an identifier of a descriptor, whether the first processing instruction is executable according to the identifier of the descriptor, where the descriptor is used to indicate a shape of a tensor; and
> an executing module configured to execute, when the first processing instruction is executable, data processing corresponding to the first processing instruction according to the identifier of the descriptor.

A15. The data processing apparatus of A14, wherein the executing module includes:

> a content obtaining sub-module configured to obtain the content of the descriptor from the descriptor storage space according to the identifier of the descriptor;
> an address determining sub-module configured to determine the data address of the data corresponding to the operand in the data storage space according to the content of the descriptor; and
> a first executing sub-module configured to execute data processing corresponding to the first processing instruction according to the data address.

A16. The data processing apparatus of A14, wherein the determining module includes:

an instruction determining sub-module configured to determine whether there is a second processing instruction that has not been executed completely according to the identifier of the descriptor, where the second processing instruction includes a processing instruction that is prior to the first processing instruction in the instruction queue and has the identifier of the descriptor in the operand thereof; and

a first execution determining sub-module configured to determine that the first processing instruction is executable when there is no second processing instruction.

A17. The data processing apparatus of A16, wherein at least one of the first processing instruction and the second processing instruction includes a writing operation for the descriptor.

A18. The data processing apparatus of A14, wherein the operand of the first processing instruction includes an identifier of at least one descriptor, where the determining module includes:

a first state determining sub-module configured to determine, according to the identifier of the at least one descriptor, a first state of each descriptor, where the first state includes a registered state or an unregistered state; and

a second execution determining sub-module configured to determine, when the first state of each descriptor is the registered state, that the first processing instruction is executable.

A19. The data processing apparatus of A14, wherein the operand of the first processing instruction includes an identifier of at least one descriptor, where the determining module includes:

a second state determining sub-module configured to determine, according to the identifier of the at least one descriptor, a second state of each descriptor, where the second state includes an operable state or an inoperable state; and

a third execution determining sub-module configured to determine, when the second state of each descriptor is the operable state, that the first processing instruction is executable.

A20. The data processing apparatus of any one of A14-A19, further comprising:

a release determining module configured to determine, when the first processing instruction is a descriptor release instruction, whether there is a fourth processing instruction that has not been executed according to the identifier of the descriptor in the first processing instruction, where the fourth processing instruction is a processing instruction in the instruction queue and the operand thereof includes the identifier of the descriptor; and

a release executing module configured to execute the first processing instruction when there is no fourth processing instruction that has not been executed.

A21. The data processing apparatus of any one of A14-A20, further comprising:

a parameter obtaining module configured to obtain, when the first processing instruction is a descriptor registration instruction, the registration parameters of the descriptor in the first processing instruction, where the registration parameters include at least one of followings: the identifier of the descriptor, the shape of the tensor, and the content of the tensor data indicated by the descriptor;

a registration determining module configured to determine whether the first processing instruction is executable according to the registration parameters of the descriptor; and

a registration executing module configured to execute the first processing instruction when he first processing instruction is executable.

A22. The data processing apparatus of A21, wherein the registration determining module includes:

a condition determining sub-module configured to determine that the first processing instruction is executable when at least one of three conditions is satisfied: the identifier of the descriptor is not occupied, the first storage area for storing the content of the descriptor is not occupied, and the second storage area for storing the tensor data indicated by the descriptor is not occupied.

A23. The data processing apparatus of any one of A14-A22, further comprising:

an execution control module configured to block or cache, when the first processing instruction is non-executable, the first processing instruction.

A24. The data processing apparatus of A14, wherein the descriptor is used to indicate the shape of N-dimensional tensor data, where N is an integer greater than or equal to 0, wherein

the content of the descriptor includes at least one shape parameter indicating the shape of the tensor data.

A25. The data processing apparatus of A24, wherein the descriptor is also used to indicate the address of N-dimensional tensor data, where the content of the descriptor further includes at least one address parameter indicating the address of the tensor data.

A26. The data processing apparatus of A25, wherein the address parameter of the tensor data includes the base address of the datum point of the descriptor in the data storage space of the tensor data, where the shape parameter of the tensor data includes at least one of the followings:

a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A27. An artificial intelligence chip, comprising the data processing apparatus of any one of A14-A26.

A28. An electronic device, comprising the artificial intelligence chip of A27.

A29. A board card, comprising a storage device, an interface apparatus, a control device, and the artificial intelligence chip of A27, wherein

the artificial intelligence chip is connected to the storage device, the control device, and the interface apparatus, respectively;

the storage device is configured to store data;

the interface apparatus is configured to implement data transfer between the artificial intelligence chip and an external equipment; and

the control device is configured to monitor a state of the artificial intelligence chip.

A30. The board card of A29, wherein the storage device includes a plurality of groups of storage units, wherein each group of the storage units is connected with a neural network chip by a bus, and the storage units are DDR SDRAM; the artificial intelligence chip includes a DDR controller configured to control data transfer and data storage of each storage unit; and the interface apparatus is a standard PCIE interface.

With the continuous development of artificial intelligence technology, the amount of data to be processed and data dimensions are increasing. In the related art, when a plurality of operations are executed on the same storage area, a latter operation will be executed after a previous operation is completed, which reduces the processing efficiency of the processor.

An embodiment of the present disclosure provides an operation method of a processor.

Fig. 1g shows a flowchart of an operation method of a processor according to an embodiment of the present disclosure. The operation method of the processor may be applied to a processor.

As shown in Fig. 1g, the operation method of the processor includes:

a step S11g, when the first operation is an operation for the target storage area, determining whether there is an ongoing second operation for the target storage area, where the target storage area includes at least one fine-grained area.

The first operation may be a reading operation or a writing operation, similarly, the second operation may be a reading operation or a writing operation. The present disclosure does not limit the specific types of the first operation and the second operation. An operation may include one or more operands. The target storage area may be a storage area corresponding to one or more operands of the first operation and the second operation. The whole storage area where the target storage area is located may be an internal memory of the processor (such as an on-chip cache or a register, *etc.*), or may be an external memory connected to the processor (such as an off-chip memory, *etc.*).

In a possible implementation method, the first operation and/or the second operation may include one or more operands, and the target storage area may be a storage area corresponding to any operand of the first operation and the second operation. The target storage area is a storage area corresponding to at least one operand of the first operation and at least one operand of the second operation. For example, for a first operand of the first operation and a second operand of the second operation, the first operand may be any operand of the first operation, and the second operand may be any operand of the second operation. When the first operand and the second operand are a same operand, the target storage area may be the storage area of the first operand or the storage area of the second operation. When there is an overlap between the storage area of the first operand and the storage area of the second operand, the target storage area is the overlap.

In a possible implementation method, the target storage area includes at least one fine-grained area. A method for determining the size and/or quantity of the fine-grained areas may include one or more of a determining method according to hardware design, a determining method according to related operations of the target operands, and a determining method according to related parameters in the operations. The determining method according to hardware design may refer to determining a size of a fine-grained area during hardware design, for example, one or more rows of the storage area are determined as a fine-grained area. The determining method according to related operations of the target operands includes: determining methods according to processing requirements, storage methods, or transmission methods of the target operands, for example, a target operand is a two-dimensional matrix data with a size of M*N (M and N are all positive integers), indicating the count of bytes occupied by the storage, in other words, there are M bytes in a row, and there are N rows in total, then it can be determined that M bytes is a fine-grained area, and the target storage area corresponding to the target operand includes N fine-grained areas. The determining method according to related parameters in the operations includes dividing the target storage area as a plurality of fine-grained areas according to the size and/or quantity of fine granularity carried in the operations. When the first operand of the first operation and the second operand of the second operation jointly correspond to the target storage area, according to a plurality of fine-grained areas divided in the target storage area, the first operation and the second operation may adopt the method provided in the embodiment of the present disclosure.

It should be noted that the sizes of the plurality of fine-grained areas may be the same or different. For example, the first operation may carry the size of the first fine granularity (the count of data bits of each fine-grained area), and the size of the first fine granularity may be set to 64 bits, and the second operation may carry the size of the second fine granularity (such as the count of data bits of each fine-grained area), and the size of the second fine granularity may be set to 256 bits. In other words, during the first operation, every 64 bits are taken as a fine-grained area, and during the second operation, every 256 bits are taken as a fine-grained area. For another example, the size of the fine granularity carried by the first operation and the second operation (such as the count of data bits of each fine-grained area) is 512 bits. Similarly, the first operation may also carry the count of the first fine granularity (for example, the count of the first fine granularity may be set to 4), and the second operation may also carry the count of the second fine granularity (for example, the count of the second fine granularity may be set to 8). In other words, during the first operation, the target storage area is divided as 4 fine-grained areas, and during the second operation, the target storage area is divided as 8 fine-grained areas. It can be understood that the two parameters of the size of the fine granularity and the count of the fine granularity can also be carried at the same time in the operation. The size and/or quantity of each fine-grained area can be determined according to requirements, which is not limited in the present disclosure.

In a possible implementation method, it can be determined whether there is an ongoing second operation for the target storage area according to the occupation state of the target storage area. For example, the processor may determine whether the target storage area is occupied by querying an occupancy state list, where if the target storage area is occupied, it is determined that there is an ongoing second operation for the target storage area. The occupancy state list may be preset and stored in a memory, or may be generated before the processor starts to execute a certain task, and be released after the task is completed. When the occupancy state of each storage area changes, the processor updates the content of the occupancy state list to record the occupancy state of each storage area.

In a possible implementation method, it can be determined whether there is an ongoing second operation for the target storage area by querying the execution state of each operation. For example, the storage area corresponding to the operand of each operation may be recorded, and the execution state of each operation may be further recorded. If the operation for the target storage area has not been completed, it is determined that there is an ongoing second operation for a target operation area. It can be determined whether the target storage area corresponding to the operand is occupied by determining the occupancy state of the operand, thereby determining whether there is an ongoing second operation for the target storage area. The present disclosure does not limit the basis for determining whether there is an ongoing second operation for the target storage area.

In a possible implementation method, before the first operation for the target storage area is executed, it may be determined whether there is an ongoing second operation for the target storage area.

In a possible implementation method, during the execution of the first operation for the target storage area, it may be also determined whether there is an ongoing second operation for the target storage area.

The operation method of the processor may further include:

a step S12g, when there is a second operation, determining whether there is an overlap between a first fine-grained area targeted by the first operation and a second fine-grained area targeted by the second operation.

The first fine-grained area and the second fine-grained area may be any fine-grained area in the plurality of fine-grained areas in the target storage area. It can be understood that the operation for the target storage area is an operation for each fine-grained area in the target storage area. For example, a target storage area A is from the first row to the tenth row, each row is a fine-grained area, and the target storage area A includes 10 fine-grained areas. The writing operation for the target storage area A can be regarded as a writing operation for the 10 fine-grained areas, where the execution process is: writing the first fine-grained area (in the first row), writing the second fine-grained area (in the second row) after the first fine-grained area is written, and writing the third fine-grained area (in the third row) after the second fine-grained area is written, and so on, until the tenth fine-grained area (in the tenth row) is written, and then the writing operation for the target storage area A is completed.

When there is an operation for the target storage area, as the operation is executed, the fine-grained areas in the target storage area may include fine-grained areas that have been processed, fine-grained areas that are being processed, and fine-grained areas that have not been processed. The state of a fine-grained area currently targeted by the operation is a state of being processed. Therefore, when there is an operation for the target storage area, it may be considered that there is an operation for a fine-grained area in the target storage area, and the fine-grained area being processed is the fine-grained area currently targeted by the operation.

In a possible implementation method, a first fine-grained area targeted by the first operation may include a fine-grained area targeted by the first operation to be executed, which is usually a first fine-grained area. Optionally, the first fine-grained area targeted by the first operation may further include any fine-grained area currently targeted by the first operation which is being executed. A second fine-grained area currently targeted by the second operation may be any fine-grained area currently targeted by the second operation which is being executed.

In a possible implementation method, before the first operation on the target storage area is executed, it is determined whether there is an ongoing second operation on the target storage area, and the first fine-grained area currently targeted by the first operation is the fine-grained area to be processed in the first operation. For example, before the first operation on the target storage area is executed, the first fine-grained area currently targeted by the first operation is usually a first fine-grained area of the target storage area. At this time, the first operation on the first fine-grained area has not been executed, and the second fine-grained area currently targeted by the ongoing second operation may be related to the process of the second operation. If the second operation has just started, the second fine-grained area may also be the first fine-grained area of the target storage area, at this time, there is an overlap between the first fine-grained area and the second fine-grained area. If the second operation has been executed on the first fine-grained area, the second fine-grained area currently targeted is a P-th fine-grained area (P is an integer greater than 1), and there is no overlap between the first fine-grained area and the second fine-grained area.

In a possible implementation method, when determining whether there is an ongoing second operation for the target storage area during the process of the first operation executed on the target storage area, the first fine-grained area can be determined according to the execution process of the first operation, and the second fine-grained area can be determined according to the execution process of the second operation, and then whether there is an overlap between the first fine-grained area and the second fine-grained area can be determined.

In a possible implementation method, if the cycle of the execution process of each operation is the same, it can be determined whether there is an ongoing second operation for the target storage area only before the first operation for the target storage area is executed, and it can be determined whether there is an overlap between the first fine-grained area and the second fine-grained area, where the same cycle means that when the sizes of the fine-grained areas are the same, two operations have the same operation duration for a fine-grained area.

In a possible implementation method, if the cycle of the execution process of each operation is not the same or it cannot be determined whether it is the same, during the process of the first operation performed on the target storage area, after the operation on the first fine-grained area currently targeted is completed, it is determined whether there is an ongoing second operation for the target operation area, and then it is determined whether there is an overlap between the first fine-grained area and the second fine-grained area to determine whether to perform the first operation.

In a possible implementation method, it can be determined whether there is an overlap between the first fine-grained area targeted by the first operation and the second fine-grained area targeted by the second operation according to a physical address, a position of a pointer, and an identifier of the fine-grained area. For example, the current physical address of each operation can be recorded. In this way, according to the current physical address of the first operation and the current physical address of the second operation, and the correspondence between the physical address and the fine-grained area, the first fine-grained area currently targeted by the first operation, and the second fine-grained area currently targeted by the second operation can be determined respectively, and then whether there is an overlap between the first fine-grained area and the second fine-grained area can be determined. The physical address may include one or more of a start address of the fine-grained area, an end address of the fine-grained area, an address of a preset position of the fine-grained area, and an address of a real-time operation of the fine-grained area. For another example, a pointer can be preset for each operation, and the pointer points to the fine-grained area to which the operation is currently targeted. According to the position of the pointer of the first operation, and the position of the pointer of the second operation, the first fine-grained area currently targeted by the first operation and the second fine-grained area currently targeted by the second operation can be determined respectively, and then whether there is an overlap between the first fine-grained area and the second fine-grained area can be determined. For another example, an identifier for each fine-grained area may be preset, and then whether there is an overlap between the first fine-grained area and the second fine-grained area can be determined by recording the identifier of the fine-grained area currently targeted by the operation. The identifier may include any combination of letters, numbers, or symbols. Other ways may be adopted to determine whether there is an overlap between the first fine-grained area and the second fine-grained area. The present disclosure does not limit the basis for determining whether there is an overlap between the first fine-grained area and the second fine-grained area.

The operation method of the processor may further include:
a step S13g, executing the first operation when there is no overlap between the first fine-grained area and the second fine-grained area.

In a possible implementation method, if there is no overlap between the first fine-grained area targeted by the first operation and the second fine-grained area targeted by the second operation, the first fine-grained area may be a fine-grained area that has been processed in the second operation, or a fine-grained area that does not need to be processed in the second operation. At this time, executing the first operation will not affect the process and result of the second operation, and the first operation can be executed.

According to the embodiment, when the target storage area targeted by the first operation includes at least one fine-grained area, and there is an ongoing second operation for the target storage area, whether there is an overlap between the first fine-grained area currently targeted by the first operation and the second fine-grained area currently targeted by the second operation may be determined. If there is no overlap between the first fine-grained area currently targeted by the first operation and the second fine-grained area currently targeted by the second operation, the first operation will be executed. In this way, the first operation will be executed if there is no overlap between the fine-grained area currently targeted by the first operation and the fine-grained area currently targeted by the second operation, so that the first operation and the second operation can be executed to process the target storage area at the same time, which improves the processing efficiency of the processor.

In a possible implementation method, the operation method of the processor further includes: when there is an overlap between the first fine-grained area and the second fine-grained area, blocking the first operation.

In a possible implementation method, the first fine-grained area overlaps with the second fine-grained area, including that the first fine-grained area completely overlaps or partially overlaps with the second fine-grained area. When there is an overlap between the first fine-grained area and the second fine-grained area, if the first operation is executed, the operation of the first operation on the overlap may affect the execution of the second operation, resulting in an inaccurate operation result of the second operation, and the operation of the first operation on the overlap may further affect the execution of the first operation, resulting in an inaccurate operation result of the first operation. At this time, the first operation may be blocked, in other words, the first operation may be suspended, and the first operation may be executed after the second fine-grained area currently targeted by the second operation has been processed. In other words, when there is no overlap between the first fine-grained area and the second fine-grained area, the first operation will be executed.

In the embodiment, the blocking the first operation when there is an overlap between the first fine-grained area and the second fine-grained area may avoid operation errors and inaccurate operation results caused by the overlap between the fine-grained areas of each operation, and ensure the correctness of each operation.

Fig. 5a and Fig. 5b show schematic diagrams of application scenarios of an operation method of a processor according to an embodiment of the present disclosure. As shown in Fig. 5a and Fig. 5b, an entire storage area 20d includes a target storage area 21d, where the target storage area 21d is divided as four fine-grained areas, followed by a fine-grained area 22d, a fine-grained area 23d, a fine-grained area 24d, and a fine-grained area 25d.

As shown in Fig. 5a, currently, only a writing operation is included. A writing pointer wp represents the fine-grained area currently targeted by the writing operation. At the beginning of the writing operation, the writing pointer wp points to the fine-grained area 22d, it can be firstly determined whether there is an ongoing second operation for the target storage area 2Id, where if there is no second operation, the writing operation will be executed on the fine-grained area 22d. When the writing operation executed on the fine-grained area 22d is completed, the writing pointer wp increases, in other words, wp++, and the writing pointer points to the next fine-grained area 23d, and then it can be determined whether there is an ongoing second operation for the target storage area 22d, where if there is no second operation, the writing operation will be executed on the fine-grained area 23d. When the writing operation executed on the fine-grained area 23d is completed, the writing pointer wp increases, and the writing pointer points to the next fine-grained area 24d, and then it can be determined whether there is an ongoing second operation for the target storage area 23d, where if there is no second operation, the writing operation will be executed on the fine-grained area 24d.

As shown in Fig. 5b, currently, a reading operation and a writing operation are included, where the reading operation is a first operation, and the writing operation is a second operation. And the writing pointer wp of the writing operation and a reading pointer rp of the reading operation represent the fine-grained areas currently targeted by the writing operation and the reading operation, respectively.

During the execution of the reading operation (the first operation), it is determined whether there is an ongoing second operation for the target storage area 21d. It is determined that there is an ongoing second operation (the writing operation), and it is further determined whether there is an overlap between the first fine-grained area (the fine-grained area 22d in Fig. 5b) currently targeted by the reading operation (the first operation) and the second fine-grained area (the fine-grained area 24d in Fig. 5b) currently targeted by the writing operation (the second operation). For example, it can be determined that there is no overlap between the first fine-grained area and the second fine-grained area according to the serial numbers of the fine-grained areas (22d and 24d), or according to the relationship between rp and wp (rp=0, wp=2, rp<wp), and then the reading operation (the first operation) will be executed.

When the reading operation executed on the fine-grained area 22d is completed, the reading pointer rp increases, in other words, rp++, and the reading pointer points to the next fine-grained area 23d, and then it can be determined whether there is an overlap between the first fine-grained area and the second fine-grained area, where if there is no overlap between the first fine-grained area and the second fine-grained area, then the first operation will be executed on the fine-grained area 23d. When the reading operation executed on the fine-grained area 23d is completed, the reading pointer rp increases, and the reading pointer points to the next fine-grained area 24d, and then it can be determined whether there is an overlap between the first fine-grained area and the second fine-grained area, where if the serial numbers of the fine-grained area are the same or rp=wp, it can be determined that there is an overlap between the first fine-grained area currently targeted by the first operation and the second fine-grained area currently targeted by the second operation, and then the first operation cannot be executed, and the first operation will be blocked. When the second operation executed on the fine-grained area 24d is completed, the writing pointer wp increases, and the writing pointer points to the next fine-grained area 25d, and rp<wp, the first operation can be executed.

In a possible implementation method, at least one of the first operation and the second operation may be a writing operation. In other words, the method provided in the embodiment of the present disclosure may be adopted when the operation on the target operands is writing-reading (the second operation is the writing operation and the first operation is the reading operation), a read-modify-write operation (the second operation is the reading operation and the first operation is the writing operation), or a write-modify-write operation (both the second operation and the first operation are writing operations).

For example, if the first operation is a reading operation and the second operation is a writing operation, the target operands read by the first operation need to be data after the second operation (the writing operation) is executed; and the serial number of the second fine-grained area targeted by the second operation is 8, then the first operation can only read the data in the fine-grained area with a serial number smaller than 8. In other words, if the first fine-grained area targeted by the first operation is any one of the fine-grained areas numbered 1 to 7, the first operation can be executed.

In a possible implementation method, if the first operation and the second operation are both reading operations, the relationship between the fine-grained areas of the first operation and the second operation will not affect the operation result, and the method provided in the embodiment of the present disclosure may be adopted, or the first operation may be executed directly without determining the fine-grained areas.

In the embodiment, if at least one of the first operation and the second operation is a writing operation, according to the method provided in the embodiment of the present disclosure, by dividing the target storage area as one or more fine-grained areas, and executing operations in units of fine-grained areas, operations such as a read-modify-write operation, a write-modify-read operation, and a write-modify-write operation can be executed correctly to obtain accurate results, besides, the waiting time between operations can be reduced and the efficiency of the processor can be improved.

In a possible implementation method, the size and/or quantity of the fine-grained areas may be determined according to at least one of the area where the data with a set length is located and the area where the data with a set dimension is located.

It can be understood that the size and/or quantity of the fine-grained areas may be preset before the operation is generated, or may be determined in real time when each operation is generated. The presetting the size and/or quantity of the fine-grained areas before the operation may include: determining the size and/or quantity of the fine-grained areas according to at least one of the area where the data with preset length is located and the area where the data with preset dimension is located. The data with a preset length and the data with a preset dimension may be independent of the operands of each operation, or may be comprehensively determined according to the operands of each operation in advance, which may be determined according to actual requirements. The determining the size and/or quantity of the fine-grained areas in real time when each operation is generated may include determining data with a preset length or data with a preset dimension according to the operands of each operation, in other words, at least one of the area where the data with a preset length is located and the area where the data with a preset dimension is located can be determined in real time according to the operands of each operation, and then the size and/or quantity of the fine-grained areas may be determined.

For example, the size and/or quantity of the fine-grained areas can be determined according to the size of the area where the data with a preset length is located. For example, the size of the fine-grained area can be set according to the size of the storage area where the data with a preset length among the target operands is located, and the area may have a fixed bit width. For example, a target operand B is 20*10*5 three-dimensional data, the tensor data B is stored in a 40*25 manner (that is, there are 40 bits of data in each row, and there are total 25 rows) in the target storage area, then the length may be set as 40 bits, each row of the target storage area is set as a fine-grained area, the storage area of the target operand B may be divided as 25 fine-grained areas; or every 5 rows of the storage area may be set as a fine-grained area, and the target storage area of the target operand B may be divided as 5 fine-grained areas, which is not limited in the present disclosure.

It should be noted that the size and/or quantity of the fine-grained areas can be determined in the target storage area according to at least one of the area where the data with a preset length is located and the area where the data with a preset dimension is located, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the size and/or quantity of the fine-grained areas based on at least one of the area where the data with preset length is located and the area where the data with preset dimension is located.

In a possible implementation method, the size and/or quantity of the fine-grained areas may also be determined according to the size of the area where the data with preset dimension is located. For example, a target operand C is 20*10 two-dimensional data. A target storage area of the target operand C may be divided as 10 fine-grained areas according to data with preset 1 dimension and preset length of 20.

In addition, the size and/or quantity of the fine-grained areas may also be determined according to the size of the area where the data with preset length is located in the storage area of the target operand and the size of the area where the data with preset dimension is located in the storage area of the target operand. For example, for the target operand C, fine-grained areas may be divided according to data with preset 2 dimensions and a preset size of 4*2, thereby dividing the storage area of the target operand C as 25 fine-grained areas.

It should be understood that those skilled in the art can set the size and/or quantity of the divided fine-grained areas according to actual conditions, which is not limited in the present disclosure.

In the embodiment, the size and/or quantity of the fine-grained areas can be determined according to the size of the area where the data with a preset length is located and/or the size of the area where the data with a preset dimension is located, where the fine-grained areas can be divided according to data characteristics, which can improve the flexibility of dividing the fine-grained areas, thereby improving the efficiency of the execution of a plurality of operations, and the division results of the fine-grained areas can be more in line with the characteristics of different operands, thereby adapting to the processing requirements of different types of operands, and then the overall execution efficiency of a plurality of operations can be improved.

In a possible implementation method, the size and/or quantity of the fine-grained areas may be determined according to at least one of the computing capability of the hardware and the bandwidth of the hardware.

The computing capability of the hardware may refer to the amount of data processed in parallel by the hardware in one computing cycle, and the bandwidth of the hardware may refer to the data transfer capability, such as the amount of data transmitted per unit time.

For example, for the processor that applies the operation method, the computing capability of the hardware of the processor may include: processing 100-bit of data in parallel in one computing cycle, and the bandwidth of the hardware of the processor may include: transferring 200-bit of data per unit time. A target storage area with a size of 1000-bit data may be divided as 10 fine-grained areas according to the computing capability of the hardware, where each fine-grained area includes 100-bit data; or the target storage area with a size of 1000-bit data may be divided as 5 fine-grained areas according to the bandwidth of the hardware, where each fine-grained area includes 200-bit data.

It should be understood that the computing capability of the hardware and the bandwidth of the hardware may be different because the processors are different, and the present disclosure does not limit the computing capability of the hardware and the bandwidth of the hardware.

It should be understood that the size and/or quantity of the fine-grained areas in the target storage area may be determined according to at least one of the hardware computing capability and the hardware bandwidth, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the size and/or quantity of the fine-grained areas based on at least one of the computing capability of the hardware and the bandwidth of the hardware.

By adopting the above-mentioned method provided by the present disclosure, the size and/or quantity of the fine-grained areas may be determined according to the processing capability of the processor (the computing capability of the hardware and/or the bandwidth of the hardware, so that the division results of the fine-grained area are more in line with the requirements of different operating environment of the hardware, and the operation executed based on the fine-grained areas is synchronized with the processing power of the processor, and the execution efficiency of the hardware can be brought into play as much as possible, and then the processing efficiency of the processor may be improved.

In a possible implementation method, the first operation may be an operation in a first processing instruction, the second operation may be an operation in a second processing instruction, and the second processing instruction may be a processing instruction prior to the first processing instruction in the instruction queue.

The first processing instruction and the second processing instruction may include one or more of a data access instruction, an operation instruction, a synchronization instruction, and a communication instruction. For example, an instruction is a Reading And Writing operation instruction. The present disclosure does not limit the specific types of the first processing instruction and the second processing instruction.

In a possible implementation method, the first instruction may have a dependency relationship with the second instruction, for example, the first instruction needs to use a computation result of the second instruction. The first instruction may also have no dependency relationship with the second instruction. When the first instruction have a dependency relationship with the second instruction, the first instruction and the second instruction can be executed in parallel through the method in the embodiment of the present disclosure.

In the embodiment, the first operation and the second operation may be operations in different instructions. By adopting the method in the embodiment of the present disclosure, the instruction execution efficiency can be improved.

In a possible implementation method, the first operation and the second operation may be also two operations in a same processing instruction, where the second operation may be independent of the first operation, or the second operation may be based on the result of the first operation. The processing instruction may include one or more of a data access instruction, an operation instruction, a synchronization instruction, and a communication instruction. For example, if the instruction is a "Reading And Adding" operation instruction, the first operation is a reading operation, and the second operation is an addition operation. The present disclosure does not limit the specific type of the processing instruction.

In a possible implementation method, the operation method of the processor further includes: recording a first position information of a first fine-grained area currently operated by the first operation and a second position information of a second fine-grained area currently operated by the second operation.

The step S13g includes: when the first position information is inconsistent with the second position information, executing the first operation.

In a possible implementation method, position information may include identification information of the fine-grained areas. The identification information may include any combination of numbers, letters, and symbols, which is not limited in the present disclosure.

For example, the position information can be represented by the serial numbers of the fine-grained areas. The target storage area can be divided as 6 fine-grained areas, which are sequentially numbered 0-5. When the first operation and the second operation for the target storage area are executed, the first position information (for example, the serial number is 2) of the first fine-grained area currently operated by the first operation and the second position information (for example, the serial number is 5) of the second fine-grained area currently operated by the second operation may be recorded, respectively; then it can be known that the first position information is not consistent with the second position information according to the relationship between the serial numbers (2<5); at this time, the first operation can be executed.

In a possible implementation method, the position information may include address information of the fine-grained areas. The address information may include one or more of a start address of the fine-grained area, an end address of the fine-grained area, an address of a preset position of the fine-grained area, and an address offset. For example, the position information of a fine-grained area is ADDR15-ADDR31.

By adopting the above-mentioned method provided by the present disclosure, the position information can be used to directly and efficiently determine whether there is an overlap between the first fine-grained area and the second fine-grained area, and determine whether to execute the first operation, which can improve the execution efficiency of the processor.

In a possible implementation method, the first position information may include a first count of fine-grained areas that have been processed in the first operation, and the second position information may include a second count of fine-grained areas that have been processed in the second operation.

When the first position information is inconsistent with the second position information, the first operation will be executed. When the first operation is an operation after the second operation, and the first count is less than the second count, the first operation will be executed.

For example, the first operation is an operation executed after the second operation, and the target storage area of the first operation is divided as 6 fine-grained areas, and the position information of the 6 fine-grained areas can be represented by the count of fine-grained areas that have been completed. When the first operation and the second operation for the target storage area are executed, a first count of fine-grained areas (for example, the first count is 3) that has been processed in the first operation and a second count of fine-grained areas (for example, the second count is 5) that has been processed in the second operation may be recorded, respectively; and then according to the executing order of the first operation and the second operation, it can be known that the first operation is an operation executed after the second operation, and the first count 3 is less than the second count 5, at this time, the first operation can be executed.

By adopting the above-mentioned method provided by the present disclosure, according to the count of fine-grained areas that have been completed, it can be intuitively determined whether there is an overlap between the first fine-grained area and the second fine-grained area, so that whether to execute the first operation can be determined, which can simplify the determination process and improve the execution efficiency of the processor.

In a possible implementation method, the target storage area may include an operable area and an inoperable area. The operation method of the processor further includes a step S12g: when there is a second operation and the first fine-grained area currently targeted by the first operation is located in the operable area, determining whether there is an overlap between the first fine-grained area currently targeted by the first operation and the second fine-grained area currently targeted by the second operation.

In a possible implementation method, the target storage area may include one or more inoperable areas, and may also include continuous or discontinuous inoperable areas.

In a possible implementation method, the target storage area may include one or more operable areas, and may also include continuous or discontinuous operable areas, which is not limited in the present disclosure.

In a possible implementation method, when the first operation is an operation for the target storage area, whether there is an ongoing second operation for the target storage area is determined firstly; when there is a second operation, it is determined whether the first fine-grained area targeted by the first operation is located in the operable area; when there is a second operation, and the first fine-grained area targeted by the first operation is located in the operable area, then it is determined whether there is an overlap between the first fine-grained area targeted by the first operation and the second fine-grained area targeted by the second operation; and when there is no overlap between the first fine-grained area and the second fine-grained area, the first operation will be executed.

In a possible implementation method, the inoperable area may include prohibited operation areas and non-prohibited operation areas. If the first operation is a writing operation, when part of the data of the target operand cannot be modified, the storage area of the part of the tensor data can be set as a prohibited operation area to avoid accidentally modifying the part of tensor data. If the ongoing second operation is a reading operation (a read-modify-write operation) to read data before the first operation, one or more fine-grained areas where the second operation is located can be set as non-prohibited operation areas; after the data in the non-prohibited operation area has been read by adopting the second operation, the non-prohibited operation area can be changed to an operable area. The present disclosure does not limit the classification and division of inoperable area.

In the embodiment, whether the fine-grained area of the first operation is operable can be determined firstly, and then the relationship between the fine-grained areas of different operations may be determined, which improves the efficiency of determination, and protects the specified data to prevent wrong operations. In addition, it is also possible to prohibit reading and writing on a specified space, thereby reserving this space for executing other operations, which further improves the flexibility of the processor when executing fine-grained synchronization.

In a possible implementation method, the inoperable area may be a plurality of fine-grained areas including the second fine-grained area, and the position of the second fine-grained area in the inoperable area is updated with the operating position of the second operation. The operation method of the processor further includes: after the second fine-grained area targeted by the second operation is moved out of the inoperable area, updating the position of the inoperable area.

In other words, the inoperable area including the second fine-grained area may not be updated with the update of the second fine-grained area targeted by the second operation; after the second fine-grained area is moved out of the inoperable area, the position of the inoperable area is updated. For example, the inoperable area may be Q fine-grained areas (Q is an integer greater than 1) including the second fine-grained area, and the current inoperable area includes a second fine-grained area to a 2+Q-1-th fine-grained area. When Q fine-grained areas in the inoperable area have been executed by adopting the second operation, the Q fine-grained areas are moved out of the inoperable area, and then the position of the inoperable area is updated with the position of the fine-grained areas targeted by the second operation. The updated inoperable area includes a 2+Q-th fine-grained area to a 2+Q+Q-1-th fine-grained area, where the value of Q can be determined arbitrarily according to the demands.

Fig. 6a and Fig. 6b show schematic diagrams of application scenarios of an operation method of a processor according to an embodiment of the present disclosure. As shown in Fig. 6a, a target storage area 30d includes 8 fine-grained areas, where the operable area includes 5 fine-grained areas (a fine-grained area 31d, a fine-grained area 35d, a fine-grained area 36d, a fine-grained area 37d, and a fine-grained area 38d); an inoperable area M0 includes 3 fine-grained areas (a fine-grained area 32d, a fine-grained area 33d, and a fine-grained area 34d). The second fine-grained area currently targeted by the second operation is the fine-grained area 32.

After the second operation has been executed on the fine-grained area 32d, the second fine-grained area currently targeted by the second operation is the fine-grained area 33d, at this time, the second fine-grained area (the fine-grained area 33d) currently targeted by the second operation is not moved out of the inoperable area, and the position of the inoperable area is not updated. After the second operation has been executed on the fine-grained area 33d, the second fine-grained area currently targeted by the second operation is the fine-grained area 34d, at this time, the second fine-grained area (the fine-grained area 34d) currently targeted by the second operation is not moved out of the inoperable area, and the position of the inoperable area is not updated. After the second operation has been executed on the fine-grained area 34d, the second fine-grained area currently targeted by the second operation is the fine-grained area 35d, at this time, the second fine-grained area (the fine-grained area 35d) currently targeted by the second operation has been moved out of the inoperable area, and then the position of the inoperable area is updated to the fine-grained areas 35d, 36d, and 37d. It should be noted that the present disclosure does not limit the size of the inoperable area.

As shown in Fig. 6b, after the position of the inoperable area is updated, in the target storage area 30d, the operable area includes 5 fine-grained areas (the fine-grained area 31d, the fine-grained area 32d, the fine-grained area 33d, the fine-grained area 34d, and the fine-grained area 38d), and the inoperable area M0 includes 3 fine-grained areas (the fine-grained area 35d, the fine-grained area 36d, and the fine-grained area 37d).

By adopting the above-mentioned method provided by the present disclosure, there is no need to update the position of the inoperable area in real time, which could reduce the overhead of updating the inoperable area.

In a possible implementation method, the inoperable area may include a plurality of fine-grained areas including the second fine-grained area, and the second fine-grained area is located at a set position in the inoperable area, and the position of the inoperable area is updated with the operating position of the second operation.

In other words, when the inoperable area includes a plurality of fine-grained areas including the second fine-grained area, the position of the second fine-grained area in the inoperable area (such as a middle position and a lowest position) can be set, and the position of the inoperable area is updated with the operating position of the second operation. For example, the inoperable area may include Q fine-grained areas including the second fine-grained area, and the current inoperable area includes a second fine-grained area to a 2+Q-1-th fine-grained area, and the set position of the second fine-grained area in the inoperable area is the R-th (R ≤ Q) fine-grained area. After the second operation has been executed on the current fine-grained area, the second operation is executed on the next fine-grained area, at this time, the position of the inoperable area is updated with the operating position of the second operation, and the updated inoperable area includes a 2+1-th fine-grained area to a 2+Q-th fine-grained area, where the value of Q and R may be determined according to requirements. The present disclosure does not limit the count of fine-grained areas included in the inoperable area and the position of the second fine-grained area in the inoperable area.

Fig. 7a and Fig. 7b show schematic diagrams of application scenarios of an operation method of a processor according to an embodiment of the present disclosure. As shown in Fig. 7a, the target storage area 40 includes 8 fine-grained areas, where the operable area includes 5 fine-grained areas (a fine-grained area 41, a fine-grained area 45, a fine-grained area 46, a fine-grained area 47, and a fine-grained area 48), and the inoperable area M1 includes 3 fine-grained areas (a fine-grained area 42, a fine-grained area 43, and a fine-grained area 44). The second fine-grained area currently targeted by the second operation is set as a second fine-grained area located in the inoperable area M1, in other words, the fine-grained area 43.

After the second operation has been executed on the fine-grained area 43, the second fine-grained area currently targeted by the second operation is the fine-grained area 44, at this time, the position of the inoperable area is updated with the operating position of the second operation, so that the second fine-grained area currently targeted by the second operation is located in the second fine-grained area in the inoperable area M1.

As shown in Fig. 7b, after the position of the inoperable area is updated, in the target storage area 40, the operable area includes 5 fine-grained areas (the fine-grained area 41, the fine-grained area 42, the fine-grained area 46, the fine-grained area 47, and the fine-grained area 48), and the inoperable area M1 includes 3 fine-grained areas (the fine-grained area 43, the fine-grained area 44, and the fine-grained area 45).

By adopting the above-mentioned method provided by the present disclosure, the position of the inoperable area can be updated in real time, and the degree of synchronization of fine-grained processing can be improved, thereby further improving the efficiency of data synchronization.

In a possible implementation method, the target storage area may include a circular buffer and storage area. The circular buffer and storage area can be used to store data cyclically.

Fig. 8 shows a schematic diagram of a circular buffer and storage area of an operation method of a processor according to an embodiment of the present disclosure. As shown in Fig. 8, a target storage area 50 includes a circular buffer and storage area 51, and the address of the circular buffer and storage area 51 is start_addr~end_addr.

For example, the second operation is a writing operation, by adopting the second operation, the target operands may be written into the circular buffer and storage area 51, and the address pointer *point* starts from pointing to the start address start_addr, and then the data is stored sequentially until the address pointer *point* points to the end address end_addr, in other words, the storage space of the circular buffer 51 is fully occupied, at this time, the address pointer *point* jumps back to start addr to determine whether the address is used by the first operation that needs to be synchronized. If the address is used, the data is stored into this address to cover the original data, and then the address pointer *point* moves downward in turn until the address pointer *point* points to the end_addr, at this time, the data may be covered again, and the above process is repeated.

In the embodiment, the circular buffer and storage area is used to store data, which can save data storage space and improve the utilization of storage space.

In a possible implementation method, the circular buffer and storage area can be divided as a plurality of fine-grained areas. For each fine-grained area, whether the data in the fine-grained area can be covered can be managed through a list or flag bit or other methods. For example, the coverage flag bit can be set to indicate whether the data in the fine-grained area can be covered.

For example, the first operation is a reading operation, and the second operation is a writing operation, in other words, reading is performed after writing, a writing pointer wp and a reading pointer rp can be used to indicate fine-grained areas currently targeted by the second operation and the first operation, respectively. When the coverage flag bit of the second fine-grained area currently targeted by the second operation shows that the data can be covered, the second operation can be executed to write data; after the data writing operation is completed, the coverage flag bit of the second fine-grained area is set to show that the data cannot be covered, then wp becomes wp++; the second fine-grained area currently targeted by the second operation is a next fine-grained area, where if wp>end_addr, then wp=start_addr. When there is no overlap between the first fine-grained area and the second fine-grained area currently targeted by the first operation, and the coverage flag bit of the first fine-grained area shows that the data cannot be covered, the first operation can be executed to read data; after the data writing operation is completed, the coverage flag bit of the first fine-grained area is set to show that the data can be covered, then rp becomes rp++; the first fine-grained area currently targeted by the first operation is a next fine-grained area, where if rp>end_addr, then rp=start_addr. When there is an overlap between the first fine-grained area and the second fine-grained area, in other words, when rp=wp, the first operation cannot be executed; after the second operation has been executed on the second fine-grained area currently targeted by the second operation, the first operation will be executed.

In the embodiment, the circular buffer and storage area is divided as a plurality of fine-grained areas, so that a plurality of operations can be simultaneously executed on the circular buffer and storage area, thereby improving the processing efficiency of the processor.

In a possible implementation method, the fine-grained area may include a state indicator, and the state indicator may show whether an operation executed on the fine-grained area is completed or not completed.

The operation method of the processor further includes:
a step S13g, when there is no overlap between the first fine-grained area and the second fine-grained area, determining whether the state indicator of the first fine-grained area shows that the operation executed on the first fine-grained area is completed, where if the operation executed on the fine-grained area is completed, executing the first operation.

In a possible implementation method, the fine-grained area may include a state indicator, and the state indicator may show whether an operation executed on the fine-grained area is completed or not completed. For example, the state indicator can be represented by 0 and 1, where 0 may represent that the operation executed on the fine-grained area is not completed, 1 may represent that the operation executed on the fine-grained area is completed; or 0 may represent that the operation executed on the fine-grained area is completed, 1 may represent that the operation executed on the fine-grained area is not completed. The present disclosure does not limit the way of representing the state indicator.

In a possible implementation method, the second operation may be executed to set the state indicator of the fine-grained area that has been processed in the target storage area to a completed state, and set the state indicator of the fine-grained area that is not processed or the fine-grained area that is being processed to an incomplete state. And the second operation may be executed to set the state indicator of some fine-grained areas in the fine-grained areas that have been processed to the completed state, and set the state indicator of other fine-grained areas to the incomplete state. For example, when 5 fine-grained areas have been processed in the second operation, the state indicator of the first 3 fine-grained areas can be set to the completed state, and the state indicator of other fine-grained areas can be set to the incomplete state.

In a possible implementation method, when there is an ongoing second operation for the target storage area, for the first fine-grained area currently targeted by the first operation and the second fine-grained area currently targeted by the second operation, whether the first fine-grained area has been processed can be determined after that there is no overlap between the first fine-grained area and the second fine-grained area is determined; if the first fine-grained area has been processed, the first operation will be executed.

In the embodiment, the fine-grained area may include a state indicator. When there is no overlap between the first fine-grained area and the second fine-grained area, whether the first operation can be executed may be determined according to the state indicator of the first fine-grained area, which can the accuracy of data processing while improving the processing efficiency of the processor.

In a possible implementation method, the fine-grained area may include a state indicator, and the state indicator may show whether an operation executed on the fine-grained area is completed or not completed. The step S13g further includes: determining whether the state indicator of the first fine-grained area is a completed state; if the state indicator of the first fine-grained area is a completed state, executing the first operation when there is no overlap between the first fine-grained area and the second fine-grained area.

In other words, when there is an ongoing second operation for the target storage area, for the first fine-grained area currently targeted by the first operation and the second fine-grained area currently targeted by the second operation, whether the first operation can be executed may be determined according to whether there is an overlap between the first fine-grained area and the second fine-grained area after the state indicator of the first fine-grained area is determined as the completed state; if there is no overlap between the first fine-grained area and the second fine-grained area, the first operation will be executed.

In the embodiment, the fine-grained area may include a state indicator, after the state indicator of the first fine-grained area is determined as the completed state, whether the first operation can be executed may be determined according to whether there is an overlap between the first fine-grained area and the second fine-grained area, which can improve the processing efficiency of the processor while improving the accuracy of data processing.

In a possible implementation method, the target operands of the first operation and the second operation are the same, and the target storage area is a storage area of the target operands.

In a possible implementation method, when the target operands of the first operation and the second operation are the same, the target storage area may be a storage area of a target operand, where the storage area of the target operand is the target storage area. After the target storage area is divided as a plurality of fine-grained areas, according to the method provided in the embodiment of the present disclosure, two operations on the same target operands may be executed in parallel without affecting the execution result of each operation

In the embodiment, by adopting the method provided in the embodiment of the present disclosure, two operations on the same target operands may be executed in parallel, which can improve the execution efficiency of the processor.

In a possible implementation method, the target storage area is an overlap between the first storage area of the first operand of the first operation and the second storage area of the second operand of the second operation

In a possible implementation method, when there is an overlap between the storage areas of two operands, the target storage area is the overlap. The overlap of the storage areas of the two operands may be divided as a plurality of fine-grained areas. According to the method provided in the embodiment of the present disclosure, two operations on the operands whose storage areas have an overlap may be executed in parallel without affecting the execution result of each operation.

In the embodiment, when there is an overlap between the storage areas of the operands in the two operations, by adopting the method provided in the embodiment of the present disclosure, the two operations may be executed in parallel, which may improve the execution efficiency of the processor.

In a possible implementation method, the operation method of the processor further includes: dividing the whole storage area where the target storage area is located as a plurality of fine-grained areas.

In a possible implementation method, the target storage area may be a part of the storage area or the whole storage area of the storage device, and the whole storage area may include a plurality of preset fine-grained areas.

For example, the whole storage area where the target storage area is located is RAM1, which may include m preset fine-grained areas (m is a positive integer). The target storage area may occupy n (n is a positive integer, and n<=m) fine-grained areas in the RAM1. It should be noted that the target storage area may also include a part of a fine-grained area. In the RAM1, it is assumed that each fine-grained area is a row in the whole storage area RAM1, and each row is 100 bits. The target storage area may include the first (n-1) complete fine-grained areas and part of the last fine-grained area, such as the first 80 bits in the n-th row (the n-th fine-grained area) in RAM1.

In a possible implementation method, when the whole storage area of the storage device is divided as a plurality of fine-grained areas, for any operation on any target storage area in the whole storage area, no matter whether the target storage area is the storage area of the same target operands of the first operation and the second operation, or the target storage area is the overlap between the storage area of the first operand of the first operation and the storage area of the second operand of the second operation, the fine-grained areas in the target storage area may be determined according to the division result of the fine-grained areas of the whole storage area. There is a fine-grained area with the same size in the storage area of any operand executed by any operation in the whole storage area.

In a possible implementation method, the size and/or quantity of fine-grained areas of the whole storage area can be determined according to the hardware characteristics of the storage device, in other words, the size and/or quantity of fine-grained areas of the whole storage area can be determined according to at least one of the computing capability of the hardware of the storage device and the bandwidth of the hardware of the storage device.

In the embodiment, the whole storage area where the target storage area is located is divided as a plurality of fine-grained areas, and any operation on any target storage area in the whole storage area may be executed in a same fine-grained size. Different operations may be executed in parallel by adopting the method provided in the embodiment of the present disclosure, which facilitates synchronization, improves the parallelism of operations, and thereby improves the processing efficiency of the processor.

In a possible implementation method, the operation method of the processor further includes:

according to the division information of the first fine-grained area carried in the first operation, dividing a first storage area of the first operand of the first operation as a plurality of fine-grained areas; and
according to the division information of the second fine-grained area carried in the second operation, dividing a second storage area of the second operand of the second operation as a plurality of fine-grained areas.

In a possible implementation method, the division information of the fine-grained areas may be carried in operations, where the division information of the fine-grained areas may include the size and/or quantity of the fine-grained areas. Different operations may carry different division information of the fine-grained areas, and the same type of operation may carry the same different division information of the fine-grained areas. The division information of the fine-grained areas may be carried in a set position of the operand of the operation, and the identification information of whether to execute division of the fine-grained areas can also be carried in the operation code or the operand. The present disclosure does not limit the content and representation methods in the division information of the fine-grained areas.

In a possible implementation method, the first storage area of the first operand is divided as a plurality of first fine-grained areas according to the division information of the first fine-grained area carried in the first operation. Other areas in the whole storage area where the first operand is located may not be divided as a plurality of fine-grained areas, or may be divided as a plurality of fine-grained areas according to the division information of the fine-grained areas carried in other operations, which is not limited in the present disclosure.

It can be understood that when the second operand of the second operation is the same as the first operand of the first operation, the first storage area completely overlaps the second storage area. The division information of the first fine-grained area and the division information of the second fine-grained area may be the same or different. When the division information of the first fine-grained area is different from the division information of the second fine-grained area, the first storage area may be divided as a plurality of fine-grained areas according to the division information of the second fine-grained area at the same time. In other words, different operations may be adopted to divide a same storage area as a plurality of fine-grained areas with different size or quantity. At this time, whether there is an overlap between the first fine-grained area and the second fine-grained area may be determined according to the physical address of the first fine-grained area currently targeted by the first operation and the physical address of the second fine-grained area currently targeted by the second operation; and then, the first operation and the second operation may be executed in parallel according to the determination result.

In a possible implementation method, the division information of fine-grained areas may be carried in each operation. The size and/or quantity of the fine-grained areas may be determined according to at least one of the area where the operand with a preset length is located and the area where the operand with a preset dimension is located, so that the division result of the fine-grained areas may be more in line with the type or attribute of the operands of the operations.

In the embodiment, according to the division information of the first fine-grained area carried in the first operation, the first storage area of the first operand of the first operation is divided as a plurality of fine-grained areas; and according to the division information of the second fine-grained area carried in the second operation, the second storage area of the second operand of the second operation is divided as a plurality of fine-grained areas. Dividing fine-grained areas according to the division information of the fine-grained areas carried in operations can make the division result of the fine-grained areas more in line with the requirements of each operation, and therefore, operations may be executed in parallel more flexible.

It should be understood that those skilled in the art may divide and set the target storage area as fine-grained areas according to actual conditions, which is not limited in the present disclosure.

It should be noted that although the operation method of the processor is described above by taking the above-mentioned embodiment as an example, those skilled in the art can understand that the present disclosure does not limit the specific structure of the data processing apparatus. In fact, users can set various modules flexibly according to personal preferences and/or actual application scenarios, as long as the steps conform to the technical solution of the present disclosure.

Fig. 3g shows a block diagram of an operation apparatus of a processor according to an embodiment of the present disclosure. As shown in Fig. 3g, the operation apparatus of the processor includes:

an operation determining module 71g configured to determine whether there is an ongoing second operation for the target storage area when the first operation is an operation for the target storage area, where the target storage area includes at least one fine-grained area;

an overlap determining module 72g configured to determine, when there is a second operation, whether there is an overlap between a first fine-grained area currently targeted by the first operation and a second fine-grained area currently targeted by the second operation; and

an executing module 73g configured to execute the first operation when there is no overlap between the first fine-grained area and the second fine-grained area.

In a possible implementation method, the operation apparatus of the processor further includes an execution control module configured to block the first operation when there is an overlap between the first fine-grained area and the second fine-grained area.

In a possible implementation method, at least one of the first operation and the second operation is a writing operation.

In a possible implementation method, the size and/or quantity of fine-grained areas may be determined according to at least one of the area where the data with preset length is located and the area where the data with preset dimension is located.

In a possible implementation method, the size and/or quantity of the fine-grained areas may be determined according to at least one of the computing capability of hardware and the bandwidth of the hardware.

In a possible implementation method, the first operation is an operation in a first processing instruction, the second operation is an operation in a second processing instruction, and the second processing instruction may be a processing instruction prior to the first processing instruction in the instruction queue.

In a possible implementation method, the operation apparatus of the processor further includes a position recording module configured to record a first position information of a first fine-grained area currently operated by the first operation and a second position information of a second fine-grained area currently operated by the second operation. The executing module 73 includes a first executing sub-module configured to execute the first operation when the first position information is inconsistent with the second position information.

In a possible implementation method, the first position information may include a first count of fine-grained areas that have been processed in the first operation, and the second position information may include a second count of fine-grained areas that have been processed in the second operation.

The first executing sub-module is further configured to execute the first operation when the first operation is an operation after the second operation, and the first count is less than the second count.

In a possible implementation method, the target storage area may include an operable area and an inoperable area. The overlap determining module 72 includes a determining sub-module configured to, when there is a second operation, and the first fine-grained area in the target storage area currently targeted by the first operation is located in the operable area, determine whether there is an overlap between the first fine-grained area currently targeted by the first operation and the second fine-grained area currently targeted by the second operation.

In a possible implementation method, the inoperable area may include a plurality of fine-grained areas including the second fine-grained area, and the position of the second fine-grained area in the inoperable area is updated with the operating position of the second operation. The operation apparatus of the processor further includes an updating module configured to update the position of the inoperable area after the second fine-grained area targeted by the second operation is moved out of the inoperable area.

In a possible implementation method, the inoperable area may include a plurality of fine-grained areas including the second fine-grained area, and the second fine-grained area is located at a set position in the inoperable area, and the position of the inoperable area is updated with the operating position of the second operation.

In a possible implementation method, the target storage area may include a circular buffer and storage area.

In a possible implementation method, the fine-grained area may include a state indicator, and the state indicator may show whether an operation executed on the fine-grained area is completed or not completed.

The executing module 73g includes:

a first state determining sub-module configured to, when there is no overlap between the first fine-grained area and the second fine-grained area, determine whether the state indicator of the first fine-grained area shows that the operation executed on the first fine-grained area is completed; and
a second executing sub-module configured to execute the first operation when the state indicator of the first fine-grained area shows that the operation executed on the first fine-grained area is completed.

In a possible implementation method, the fine-grained area may include a state indicator, and the state indicator may show whether an operation executed on the fine-grained area is completed or not completed.

The executing module 73g further includes:

a second state determining sub-module configured to determine whether the state indicator of the first fine-grained area shows that the operation executed on the first fine-grained area is completed; and
a third executing sub-module configured to execute the first operation when the state indicator of the first fine-grained area shows that the operation executed on the first fine-grained area is completed, and there is no overlap between the first fine-grained area and the second fine-grained area.

In a possible implementation method, the target operands of the first operation and the second operation are the same, and the target storage area is a storage area of the target operands.

In a possible implementation method, the target storage area is an overlap between the first storage area of the first operand of the first operation and the second storage area of the second operand of the second operation.

In a possible implementation method, the operation apparatus of the processor further includes a first setting module configured to divide the whole storage area where the target storage area is located as a plurality of fine-grained areas.

In a possible implementation method, the operation apparatus of the processor further incudes:

a second setting module configured to divide the first storage area of the first operand of the first operation as a plurality of fine-grained areas according to the division information of the first fine-grained carried in the first operation; and

a third setting module configured to divide the second storage area of the operand of the second operation as a plurality of fine-grained areas according to the division information of the second fine-grained carried in the second operation.

In a possible implementation method, the present disclosure further provides an artificial intelligence chip including the operation apparatus of the processor.

In a possible implementation method, the present disclosure further provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transfer between the artificial intelligence chip and the external equipment; and the control device is configured to monitor the state of the artificial intelligence chip.

In a possible implementation method, the storage device includes a plurality of groups of storage units, where each group of the storage units is connected with the neural network chip by a bus, and the storage units are DDR SDRAM; the artificial intelligence chip includes a DDR controller configured to control data transfer and data storage of each storage unit; and the interface apparatus is a standard PCIE interface.

A1. An operation method of a processor, comprising:

when a first operation is an operation for a target storage area, determining whether there is an ongoing second operation for the target storage area, where the target storage area includes at least one fine-grained area; when there is a second operation, determining whether there is an overlap between a first fine-grained area currently targeted by the first operation and a second fine-grained area currently targeted by the second operation; and

executing the first operation when there is no overlap between the first fine-grained area and the second fine-grained area.

A2. The operation method of the processor of A1, further comprising:
blocking the first operation when there is an overlap between the first fine-grained area and the second fine-grained area.

A3. The operation method of the processor of A1, wherein at least one of the first operation and the second operation is a writing operation.

A4. The operation method of the processor of A1, wherein a size and/or quantity of fine-grained areas is determined according to at least one of an area where data with a preset length is located and an area where data with a preset dimension is located.

A5. The operation method of the processor of A1, wherein the size and/or quantity of the fine-grained areas is determined according to at least one of the computing capability of hardware and the bandwidth of the hardware.

A6. The operation method of the processor of A1, wherein the first operation is an operation in a first processing instruction, the second operation is an operation in a second processing instruction, and the second processing instruction is a processing instruction prior to the first processing instruction in an instruction queue.

A7. The operation method of the processor of any one of A1-A6, further comprising:

recording a first position information of a first fine-grained area currently operated by the first operation and a second position information of a second fine-grained area currently operated by the second operation; and executing the first operation when there is no overlap between the first fine-grained area and the second fine-grained area, which includes:

executing the first operation when the first position information is inconsistent with the second position information.

A8. The operation method of the processor of A7, wherein the first position information includes a first count of fine-grained areas that have been processed in the first operation, and the second position information includes a second count of fine-grained areas that have been processed in the second operation, wherein the executing the first operation when the first position information is inconsistent with the second position information includes:
executing the first operation when the first operation is an operation after the second operation, and the first count is less than the second count.

A9. The operation method of the processor of A1, wherein the target storage area includes an operable area and an inoperable area, wherein the determining whether there is an overlap between the first fine-grained area currently targeted by the first operation and the second fine-grained area currently targeted by the second operation when there is a second operation includes:

when there is a second operation, and the first fine-grained area in the target storage area currently targeted by the first operation is located in the operable area, determining whether there is an overlap between the first fine-grained area currently targeted by the first operation and the second fine-grained area currently targeted by the second operation.

A10. The operation method of the processor of A9, wherein the inoperable area includes a plurality of fine-grained areas including the second fine-grained area, and a position of the second fine-grained area in the inoperable area is updated with an operating position of the second operation, wherein the operation method of the processor further includes:

updating the position of the inoperable area after the second fine-grained area targeted by the second operation is moved out of the inoperable area.

A11. The operation method of the processor of A9, wherein the inoperable area includes a plurality of fine-grained areas including the second fine-grained area, and the second fine-grained area is located at a set position in the inoperable area, and the position of the inoperable area is updated with the operating position of the second operation.

A12. The operation method of the processor of A1, wherein the target storage area includes a circular buffer and storage area.

A13. The operation method of the processor of A1, wherein the fine-grained area includes a state indicator, and the state indicator shows whether an operation executed on the fine-grained area is completed or not completed, wherein the executing the first operation when there is no overlap between the first fine-grained area and the second fine-grained area includes:

when there is no overlap between the first fine-grained area and the second fine-grained area, determining whether the state indicator of the first fine-grained area shows that the operation executed on the first fine-grained area is completed; and

executing the first operation when the state indicator of the first fine-grained area shows that the operation executed on the first fine-grained area is completed.

A14. The operation method of the processor of A1, wherein the fine-grained area includes a state indicator, and the state indicator shows whether an operation executed on the fine-grained area is completed or not completed, wherein the executing the first operation when there is no overlap between the first fine-grained area and the second fine-grained area includes:

determining whether the state indicator of the first fine-grained area shows that the operation executed on the first fine-grained area is completed; and

executing the first operation when the state indicator of the first fine-grained area shows that the operation executed on the first fine-grained area is completed, and there is no overlap between the first fine-grained area and the second fine-grained area.

A15. The operation method of the processor of A1, wherein target operands of the first operation and the second operation are the same, and the target storage area is a storage area of the target operands.

A16. The operation method of the processor of A1, wherein the target storage area is an overlap between the first storage area of the first operand of the first operation and the second storage area of the second operand of the second operation.

A17. The operation method of the processor of any one of A1-A16, further comprising:

dividing the whole storage area where the target storage area is located as a plurality of fine-grained areas.

A18. The operation method of the processor of any one of A1-A17, further comprising:

dividing the first storage area of the first operand of the first operation as a plurality of fine-grained areas according to the division information of the first fine-grained carried in the first operation; and

dividing the second storage area of the operand of the second operation as a plurality of fine-grained areas according to the division information of the second fine-grained carried in the second operation.

A19. An operation apparatus of a processor, comprising:

an operation determining module configured to determine whether there is an ongoing second operation for a target storage area when a first operation is an operation for the target storage area, where the target storage area includes at least one fine-grained area;

an overlap determining module configured to determine, when there is a second operation, whether there is an overlap between a first fine-grained area currently targeted by the first operation and a second fine-grained area currently targeted by the second operation; and

an executing module configured to execute the first operation when there is no overlap between the first fine-grained area and the second fine-grained area.

A20. The operation apparatus of the processor of A19, further comprising:

an execution control module configured to block the first operation when there is an overlap between the first fine-grained area and the second fine-grained area.

A21. The operation apparatus of the processor of A19, wherein at least one of the first operation and the second operation is a writing operation.

A22. The operation apparatus of the processor of A19, wherein a size and/or quantity of fine-grained areas is determined according to at least one of an area where data with preset length is located and an area where data with preset dimension is located.

A23. The operation apparatus of the processor of A19, wherein the size and/or quantity of the fine-grained areas may be determined according to at least one of the hardware computing capability and the hardware bandwidth.

A24. The operation apparatus of the processor of A19, wherein the first operation is an operation in a first processing instruction, the second operation is an operation in a second processing instruction, and the second processing instruction is a processing instruction prior to the first processing instruction in an instruction queue.

A25. The operation apparatus of the processor of any one of A19-A24, further comprising:

a position recording module configured to record a first position information of a first fine-grained area currently operated by the first operation and a second position information of a second fine-grained area currently operated by the second operation;

where the executing module includes a first executing sub-module configured to execute the first operation when the first position information is inconsistent with the second position information.

A26. The operation apparatus of the processor of A25, wherein the first position information includes a first count of fine-grained areas that have been processed in the first operation, and the second position information includes a second count of fine-grained areas that have been processed in the second operation, wherein the first executing sub-module is further configured to:

execute the first operation when the first operation is an operation after the second operation, and the first count is less than the second count.

A27. The operation apparatus of the processor of A19, wherein the target storage area includes an operable area and an inoperable area, wherein the overlap determining module includes:

a determining sub-module configured to, when there is a second operation, and the first fine-grained area in the target storage area currently targeted by the first operation is located in the operable area, determine whether there is an overlap between the first fine-grained area currently targeted by the first operation and the second fine-grained area currently targeted by the second operation.

A28. The operation apparatus of the processor of A27, wherein the inoperable area includes a plurality of fine-grained areas including the second fine-grained area, and a position of the second fine-grained area in the inoperable area is updated with an operating position of the second operation, wherein the operation apparatus of the processor further includes:

an updating module configured to update the position of the inoperable area after the second fine-grained area targeted by the second operation is moved out of the inoperable area.

A29. The operation apparatus of the processor of A27, wherein the inoperable area includes a plurality of fine-grained areas including the second fine-grained area, and the second fine-grained area is located at a set position in the inoperable area, and the position of the inoperable area is updated with the operating position of the second operation.

A30. The operation apparatus of the processor of A19, wherein the target storage area includes a circular buffer and storage area.

A31. The operation apparatus of the processor of A19, wherein the fine-grained area includes a state indicator, and the state indicator shows whether an operation executed on the fine-grained area is completed or not completed, wherein the executing module includes:

a first state determining sub-module configured to, when there is no overlap between the first fine-grained area and the second fine-grained area, determine whether the state indicator of the first fine-grained area shows that the operation executed on the first fine-grained area is completed; and

a second executing sub-module configured to execute the first operation when the state indicator of the first fine-grained area shows that the operation executed on the first fine-grained area is completed.

A32. The operation apparatus of the processor of A19, wherein the fine-grained area includes a state indicator, and the state indicator shows whether an operation executed on the fine-grained area is completed or not completed, wherein the executing module further includes:

a second state determining sub-module configured to determine whether the state indicator of the first fine-grained area shows that the operation executed on the first fine-grained area is completed; and

a third executing sub-module configured to execute the first operation when the state indicator of the first fine-grained area shows that the operation executed on the first fine-grained area is completed, and there is no overlap between the first fine-grained area and the second fine-grained area.

A33. The operation apparatus of the processor of A19, wherein target operands of the first operation and the second operation are the same, and the target storage area is a storage area of the target operands.

A34. The operation apparatus of the processor of A19, wherein the target storage area is an overlap between the first storage area of the first operand of the first operation and the second storage area of the second operand of the second operation.

A35. The operation apparatus of the processor of any one of A19-A34, further comprising:

a first setting module configured to divide a whole storage area where the target storage area is located as a plurality of fine-grained areas.

A36. The operation apparatus of the processor of any one of A19-A35, further comprising:

a second setting module configured to divide the first storage area of the first operand of the first operation as a plurality of fine-grained areas according to the division information of the first fine-grained carried in the first operation; and

a third setting module configured to divide the second storage area of the operand of the second operation as a plurality of fine-grained areas according to the division information of the second fine-grained carried in the second operation.

A37. An artificial intelligence chip, comprising the operation apparatus of the processor of any one of A19-A36.

A38. An electronic device, comprising the artificial intelligence chip of A37.

A39. A board card, comprising a storage device, an interface apparatus, a control device, and the artificial intelligence chip of A37, wherein

the artificial intelligence chip is connected to the storage device, the control device, and the interface apparatus, respectively;

the storage device is configured to store data;

the interface apparatus is configured to implement data transfer between the artificial intelligence chip and an external equipment; and

the control device is configured to monitor a state of the artificial intelligence chip.

A40. The board card of A39, wherein the storage device includes a plurality of groups of storage units, wherein each group of the storage units is connected with a neural network chip by a bus, and the storage units are DDR SDRAM; the artificial intelligence chip includes a DDR controller configured to control data transfer and data storage of each storage unit; and the interface apparatus is a standard PCIE interface.

The embodiments of the present disclosure have been described above, and the above description is exemplary, not exhaustive, and is not limited to the disclosed embodiments. Without departing from the scope and spirit of the described embodiments, many modifications and changes are obvious to those ordinary skilled in the art. The choice of terms used herein is intended to best explain the principles, practical applications, or improvements to technologies in the market of the embodiments, or to enable other ordinary skilled in the art to understand the embodiments disclosed herein.

**Claims**

1. A data processing method, comprising:

when an operand of a decoded first processing instruction includes an identifier of a descriptor, obtaining content of the descriptor according to the identifier of the descriptor, wherein the descriptor is configured to indicate a shape of a tensor; and

executing the first processing instruction according to the content of the descriptor.

2. The data processing method of claim 1, wherein the executing the first processing instruction according to the content of the descriptor includes:

determining a data address of data corresponding to the operand of the first processing instruction in a data storage space according to the content of the descriptor, and

executing data processing corresponding to the first processing instruction according to the data address.

3. The data processing method of claim 1, further comprising:

when the first processing instruction is a descriptor registration instruction, obtaining a registration parameter of the descriptor in the first processing instruction, where the registration parameter includes at least one of followings: the identifier of the descriptor, the shape of the tensor, and content of tensor data indicated by the descriptor,

according to the registration parameter of the descriptor, determining a first storage area of the content of the descriptor in a descriptor storage space, and a second storage area of the content of the tensor data indicated by the descriptor in the data storage space,

determining the content of the descriptor according to the registration parameter of the descriptor and the second storage area to establish a correspondence between the descriptor and the second storage area, and

storing the content of the descriptor into the first storage area.

4. The data processing method of claim 1, further comprising:

when the first processing instruction is a descriptor release instruction, obtaining the identifier of the descriptor in the first processing instruction, and

according to the identifier of the descriptor, releasing a storage area of the descriptor in the descriptor storage space and a storage area of the content of the tensor data indicated by the descriptor in the data storage space.

5. The data processing method of claim 1, further comprising:

when the first processing instruction is a descriptor modification instruction, obtaining a modification parameter of the descriptor in the first processing instruction, where the modification parameter includes at least one of followings: the identifier of the descriptor, the shape of the tensor to be modified, and the content of the tensor data indicated by the descriptor,

determining content to be updated of the descriptor according to the modification parameter of the descriptor, and

according to the content to be updated, updating the content of the descriptor in the descriptor storage space and/or the content of tensor data in the data storage space.

6. The data processing method of claim 1, further comprising:

according to the identifier of the descriptor, determining whether there is a second processing instruction that has not been executed completely, where the second processing instruction includes a processing instruction in the instruction queue prior to the first processing instruction and having the identifier of the descriptor in the operand, and

blocking or caching the first processing instruction when there is the second processing instruction that has not been executed completely.

7. A data processing apparatus, comprising:

a content obtaining module configured to obtain content of a descriptor according to an identifier of the descriptor when an operand of a decoded first processing instruction includes the identifier of the descriptor, where the descriptor is configured to indicate a shape of a tensor; and

an instruction executing module configured to execute the first processing instruction according to the content of the descriptor.

8. A neural network chip comprising the data processing apparatus of claim 7.

9. An electronic device comprising the neural network chip of claim 8.

10. Aboard card comprising a storage device, an interface apparatus, a control device, and the neural network chip of claim 8, wherein
the neural network chip is connected to the storage device, the control device, and the interface apparatus, respectively;
the storage device is configured to store data;
the interface apparatus is configured to implement data transmission between the neural network chip and an external equipment; and
the control device is configured to monitor a state of the neural network chip.

S11a

when an operand of a decoded first processing instruction includes an identifier of a descriptor, obtaining content of the descriptor according to the identifier of the descriptor

S12a

executing the first processing instruction according to the content of the descriptor

Fig. 1a

11b

control unit

12b

executing unit

Fig. 1b

S11c

generating a descriptor synchronization instruction according to a descriptor of tensor data to be synchronized

S12c

sending the descriptor synchronization instruction to a second processor

Fig. 1c

100

processor

200

storage device — 210

| 211 |
| 211 |
| ...... |
| 211 |

Fig. 1d1

S11d

when a first operation is an operation for a descriptor, obtaining a target storage area of tensor data indicated by the descriptor

S12d

determining whether there is an ongoing second operation for the target storage area

S13d

when there is an second operation, determining whether there is an overlap between a first fine-grained area in the target storage area targeted by the first operation and a second fine-grained area in the target storage area targeted by the second operation

S14d

executing the first operation when there is no overlap between the first fine-grained area and the second fine-grained area

Fig. 1d2

S11e

when a decoded processing instruction is a descriptor synchronization instruction, obtaining the synchronization information of the descriptor in the processing instruction

S12e

executing the processing instruction according to the synchronization information

Fig. 1e

S11f

when an operand of a decoded first processing instruction includes an identifier of a descriptor, determining whether the first processing instruction is executable according to the identifier of the descriptor

S12f

when the first processing instruction is executable, executing data processing corresponding to the first processing instruction according to the identifier of the descriptor

Fig. 1f

S11g

when the first operation is an operation for the target storage area, determining whether there is an ongoing second operation for the target storage area, where the target storage area includes at least one fine-grained area

S12g

when there is a second operation, determining whether there is an overlap between a first fine-grained area targeted by the first operation and a second fine-grained area targeted by the second operation

S13g

executing the first operation when there is no overlap between the first fine-grained area and the second fine-grained area

Fig. 1g

Fig. 2

—31a

content obtaining module

—32a

instruction executing module

Fig. 3a

S41b

obtaining content of a descriptor according to an identifier of the descriptor when an operand of a decoded first processing instruction includes the identifier of the descriptor, where the descriptor is configured to indicate a shape of a tensor

S42b

determining the data address of the data corresponding to the operand of the first processing instruction in the data storage space according to the content of the descriptor

S43b

according to the data address, executing data processing corresponding to the first processing instruction

Fig. 3b

S21c

parsing a descriptor synchronization instruction received from a first processor to obtain a descriptor of tensor data to be synchronized

S22c

obtaining the tensor data to be synchronized according to the descriptor of the tensor data to be synchronized

Fig. 3c1

S31c

when there is tensor data to be synchronized, generating a descriptor synchronization request instruction

S32c

sending the descriptor synchronization request instruction to the first processor

Fig. 3c2

51c

synchronization instruction generating module

52c

synchronization instruction sending module

Fig. 3c3

61c

first parsing module

62c

first data obtaining module

Fig. 3c4

71c

request instruction generating module

72c

request instruction sending module

Fig. 3c5

81d

area determining module

82d

operation determining module

83d

overlap determining module

84d

executing module

Fig. 3d

31e

synchronization information
obtaining module

32e

instruction executing module

Fig. 3e

31f

determining module

32f

executing module

Fig. 3f

71g

operation determining module

72g

overlap determining module

73g

executing module

Fig. 3g

storage device 390

board
card

storage
unit 393

• • •

storage
unit 393

bus

control device 392

MCU

chip 389

chip 389

interface
apparatus
391

external
apparatus

Fig. 4

20d

| | |
|---|---|
| rp → | 22d |
| | 23d |
| wp → | 24d |
| | 25d |

21d

Fig. 5a

20d

| | |
|---|---|
| wp → | 22d |
| | 23d |
| | 24d |
| | 25d |

21d

Fig. 5b

30d

| |
|---|
| 31d |
| 32d |
| 33d |
| 34d |
| 35d |
| 36d |
| 37d |
| 38d |

M0

Fig. 6a

30d

| |
|---|
| 31d |
| 32d |
| 33d |
| 34d |
| 35d |
| 36d |
| 37d |
| 38d |

M0

Fig. 6b

40

| |
|---|
| 41 |
| 42 |
| 43 |
| 44 |
| 45 |
| 46 |
| 47 |
| 48 |

M1

Fig. 7a

40

| |
|---|
| 41 |
| 42 |
| 43 |
| 44 |
| 45 |
| 46 |
| 47 |
| 48 |

M1

Fig. 7b

Fig. 8

## INTERNATIONAL SEARCH REPORT

| International application No. |
| --- |
| **PCT/CN2020/082775** |

**A. CLASSIFICATION OF SUBJECT MATTER**

G06F 9/30(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, WPI, EPODOC, CNPAT, IEEE: 张量, 描述符, 标识, 形状, 地址, 维度, 尺寸, 偏移量, 注册, 注销, 修改, 神经网络, 芯片, 板卡, tensor, descriptor, identifier, shape, address, dimension, size, offset, registration, cancellation, modification, neural network, chip, board

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107347253 A (MIREPLICA TECHNOLOGY, LLC) 14 November 2017 (2017-11-14) description paragraphs [0018]-[0025], [0093] | 1-10 |
| Y | night 李 (night LI). "CUDNN学习笔记 (2) (CUDNN Study Notes (2))" *https://yq.aliyun.com/articles/497075*, 26 February 2018 (2018-02-26), pp. 1-2 | 1-10 |
| Y | CN 109543832 A (CAMBRICON TECHNOLOGIES CO., LTD.) 29 March 2019 (2019-03-29) description, paragraphs [0004]-[0021] | 8-10 |
| Y | CN 109522052 A (CAMBRICON TECHNOLOGIES CO., LTD.) 26 March 2019 (2019-03-26) description, paragraphs [0005]-[0028] | 8-10 |
| A | WO 2018217360 A1 (MICROSOFT TECHNOLOGY LICENSING LLC.) 29 November 2018 (2018-11-29) entire document | 1-10 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 June 2020** | **30 June 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/082775**

| Patent document cited in search report | | | Publication date (day/month/year) | Patent family member(s) | | | Publication date (day/month/year) |
|---|---|---|---|---|---|---|---|
| CN | 107347253 | A | 14 November 2017 | JP | 2018529132 | A | 04 October 2018 |
| | | | | WO | 2016135712 | A1 | 01 September 2016 |
| | | | | KR | 20180079224 | A | 10 July 2018 |
| | | | | EP | 3262503 | A1 | 03 January 2018 |
| | | | | US | 2016246599 | A1 | 25 August 2016 |
| | | | | HK | 1246444 | A0 | 07 September 2018 |
| | | | | GB | 2553442 | A | 07 March 2018 |
| CN | 109543832 | A | 29 March 2019 | None | | | |
| CN | 109522052 | A | 26 March 2019 | None | | | |
| WO | 2018217360 | A1 | 29 November 2018 | EP | 3631622 | A1 | 08 April 2020 |
| | | | | CN | 110678840 | A | 10 January 2020 |
| | | | | US | 2018341483 | A1 | 29 November 2018 |
| | | | | IN | 201947042116 | A | 25 October 2019 |

Form PCT/ISA/210 (patent family annex) (January 2015)